Europäisches Patentamt

(19) European Patent Office

Office européen des brevets

(11) Publication number: **0 025 465**
**B1**

(12) **EUROPEAN PATENT SPECIFICATION**

(45) Date of publication of patent specification: **03.12.86**

(21) Application number: **79301917.5**

(22) Date of filing: **17.09.79**

(51) Int. Cl.⁴: **H 04 J 3/17, H 04 Q 11/04**

(54) **Apparatus for use in telephone communication.**

(43) Date of publication of application:
**25.03.81 Bulletin 81/12**

(45) Publication of the grant of the patent:
**03.12.86 Bulletin 86/49**

(84) Designated Contracting States:
**CH DE FR GB IT NL SE**

(56) References cited:
**GB-A-1 510 162**
**US-A-3 005 874**
**US-A-3 424 868**
**US-A-3 466 398**
**US-A-3 510 596**
**US-A-3 801 747**
**US-A-3 836 719**
**US-A-3 971 891**
**US-A-4 147 896**
**US-A-4 153 816**
**US-A-4 165 449**
**US-A-4 167 653**

**ICC-1981, Denver Colorado, USA, June 1981**
**"Evaluation of the COM2 TAS1 based concentrator"**

(73) Proprietor: **E C I TELECOM LTD.**
**88 Giborei Israel Street**
**Tel Aviv (IL)**

(72) Inventor: **Piasezki, Joshua**
**Smadar 1**
**Ramat Gan (IL)**
Inventor: **Zelinkovsky, Reuven**
**Moshav Beit**
**Yehoshua (IL)**
Inventor: **Segev, Aharon**
**Hashikma 6**
**Kiryat Ono (IL)**
Inventor: **Henquin, Teodor**
**Zunz 36**
**Tel Aviv (IL)**

(74) Representative: **Eder, Ephry**
**E.EDER & CO. 2 Chichester Rents Chancery Lane**
**London WC2A 1EG (GB)**

(56) References cited:
**NATIONAL TELECOMMUNICATIONS**
**CONFERENCE, vol. 1, 3rd-6th December 1978,**
**pages 14.5.1 and 14.5.5, Birmingham, U.S.A.,**
**LOMBARD et al.: "Celtic field trial results"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 025 465**

(56) References cited:
INTERNATIONAL CONFERENCE ON DIGITAL
SATELLITE COMMUNICATIONS, 23th-25th
October 1978, pages 261-268, Montreal, CA.,
VERMA et al.: "A microprocessor controlled
96/48 digital speech interpolation terminal"

NATIONAL TELECOMMUNICATIONS
CONFERENCE, vol. 1, 3th-6th December 1978,
pages 14.6.1-14.6.5, Birmingham, U.S.A.,
ELDER et al.: "A speech interpolation system
for private networks"

INTERNATIONAL CONFERENCE ON DIGITAL
SATELLITE COMMUNICATIONS, 23th-25th
October 1978, pages 248-255, Montreal, CA.,
SAUNDERS et al.: "The realization of a
TDMA/DSI terrestrial interface module using
distributed processing techniques"

## Description

The present invention relates to telephone switching apparatus and more particularly to a TASI (Time Assignment Speech Interpolation) communications system.

Time Assignment Speech Interpolation (TASI) communication systems have been known for approximately twenty years. Their function, stated in general terms, is to exploit the fact that during a normal telephone conversation, information is being transmitted only about 35% of the time. TASI communication systems serve to connect a speaker to a transmission line only during those portions of a conversation when speech is actually present. During the other portions of the conversation, the transmission line is connected to another speaker, currently speaking in another conversation.

By using time assignment speech interpolation a given number of transmission lines, say 24 can usually carry about 48 simultaneous conversations.

Most of the prior art patents known to applicants relate to systems in which assignment, synchronization and acknowledgement messages between TASI apparatus on opposite ends of a transmission trunk link are passed along control lines, separate from the voice carrying lines. This arrangement involves a number of disadvantages, principal among which is the vulnerability of the entire transmission trunk link to failure of the control lines. Another disadvantage is the inability of the conventional TASI systems to readily sense and bypass inoperative voice lines.

For example, USA patent No. 4 147 896 describes a TASI system in which assignment information is provided as a digital bit format message signal, five bits of information being transmitted as a combination of three frequencies. However no really effective arrangement is disclosed to ensure that a speech signal is not misinterpreted as an assignment signal, or vice versa.

Furthermore, although the use of digital telephone trunk links is increasing rapidly (particularly in the USA), the majority of telephone calls will remain analog during the coming few decades. There is accordingly a need for TASI-type equipment capable of use with both analog and digital telephone trunks. There is also a need for apparatus capable of operation with analog trunks which overcomes disadvantages of the analog apparatus described in many of the prior art patents. It is believed that no such apparatus existed prior to the data hereof. It is also to be noted that prior to the data hereof no TASI-type equipment was available for use with out of band signalling.

The present invention seeks to provide a TASI communication system which is capable of use with both analog and digital telephone trunks and which overcomes one or more of the above-described and/or of other disadvantages.

According to this invention there is provided a time assignment speech interpolation communication system comprising:

a transmission trunk link having a plurality of analog communication channels with a defined signal transmission frequency band;

a plurality of first telephone communication lines selectively connectable to the channels at one end of the link;

a plurality of second telephone communication lines selectively connectable to the channels at the other end of the link,

the number of first and second telephone communication lines being equal to one another and each exceeding the number of said channels;

transmission apparatus at said one end of the transmission trunk link including means for detecting signals on said plurality of first telephone communication lines and means for assigning each first telephone communication line on which signals are present to an available one of the said communication channels;

receiving apparatus at the said other end of the of the transmission trunk link including means for assigning each of the communication channels carrying signals to a corresponding one of said second telephone communication lines in accordance with assignment information received from said transmission apparatus; and

apparatus for communicating messages including assignment information between said transmission apparatus and said receiving apparatus along said assigned analog communication channels, along which also appear analog waveforms of speech and of other signals;

characterised in that said messages are transmitted in serial data form as a sequence of time segments of analog waveforms wherein each of said segments includes at least one bit of said communication messages and being distinguished from said speech and other signals by means of an analog waveform comprising segments each of which represents at least one bit of an identification code forming part of each of said messages and inserted by said transmission apparatus and decoded by said receiving apparatus.

By way of example, one embodiment of this invention will now be described with reference to the accompanying drawings listed below. Certain aspects of this embodiment are also the subject of European Patent Application No. 81107614.0 (Publication No. 49428 A2) divided out from the present application. In the said accompanying drawings:

Fig. 1 is a block diagram illustrating the orientation of the apparatus of the invention in a telephone system;

Fig. 2 is a block diagram illustration of the apparatus of the system except for out of band signalling apparatus;

Fig. 3 is a timing diagram indicating various timing frames employed in the apparatus of the invention;

Fig. 4 is a block diagram of transmit timing circuitry;

Fig. 5 is a main timing diagram of the system;

Fig. 6 is a timing diagram of the transmit synchronization timing;

Fig. 7 is a block diagram of receive timing circuitry;

Fig. 8 is a timing diagram of the receive synchronization timing;

Fig. 9 is a block diagram of interface circuitry;

Fig. 10 is a block diagram of the transmit speech flow in the circuitry of Fig. 2;

Fig. 11 is a timing diagram of the transmit speech flow timing;

Fig. 12 is a block diagram of the receive speech flow in the circuitry of Fig. 2;

Fig. 13 is a timing diagram of the receive speech flow timing;

Fig. 14 is a block diagram of speech detection circuitry;

Fig. 15 is a simplified illustration of a portion of the circuitry of Fig. 14;

Fig. 16 is a simplified illustration of echo suppression circuitry forming part of the circuitry of Fig. 14;

Fig. 17 is a functional block diagram of the CPU;

Fig. 18 is a flow chart indicating operation of message interrupt operations of the CPU;

Figs. 19—22 are flow charts illustrating monitor operations of the CPU;

Fig. 23 is a flowchart illustrating operation of the interrupt function of the CPU;

Fig. 24 is a flowchart illustrating the acknowledge subroutine of the CPU;

Fig. 25 is a flowchart illustrating the system synchronization protocol;

Fig. 26 is a flowchart illustrating the synchronization routine of the system;

Fig. 27 is a flowchart illustrating the main routine of the system;

Fig. 28 is a block diagram of the transmitter control memory;

Fig. 29 is a block diagram of the receive control memory;

Fig. 30 is a block diagram of the modem transmitter;

Fig. 31 is a block diagram of the modem receiver;

Fig. 32 is a block diagram of transmit signalling circuitry;

Fig. 33 is a block diagram of receive signalling circuitry;

Fig. 34 is a block diagram illustrating the placement of a concentrator in a remote switching configuration;

Fig. 35 is a block diagram illustrating the component portions of the concentrator at one end of a remote switching configuration;

Fig. 36 is a schematic illustration of interface circuitry coupling a 2-wire telephone line with a 6-wire telephone channel at a subscriber end of a remote switching configuration; and

Fig. 37 is a schematic illustration of interface circuitry coupling a 2-wire telephone line with a 6-wire telephone channel at a C.O. end of a remote switching configuration.

Certain of the above-listed drawings are, for convenience, divided into parts as follows:

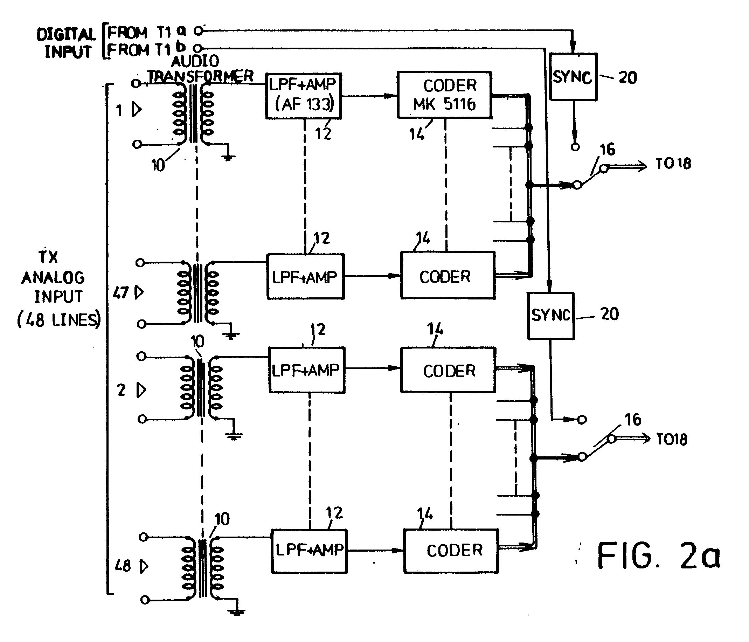

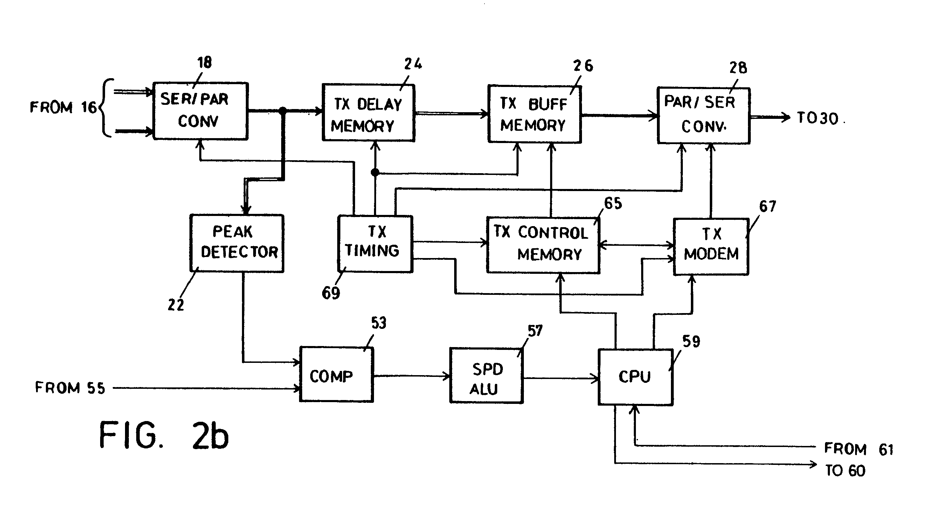

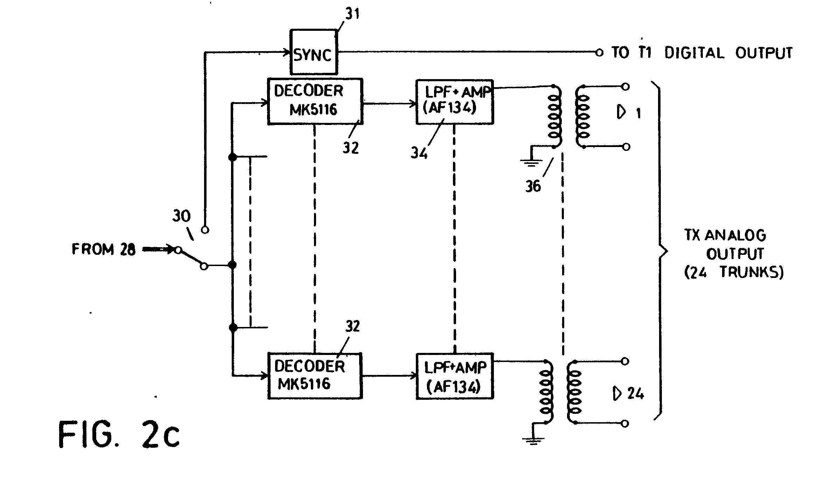

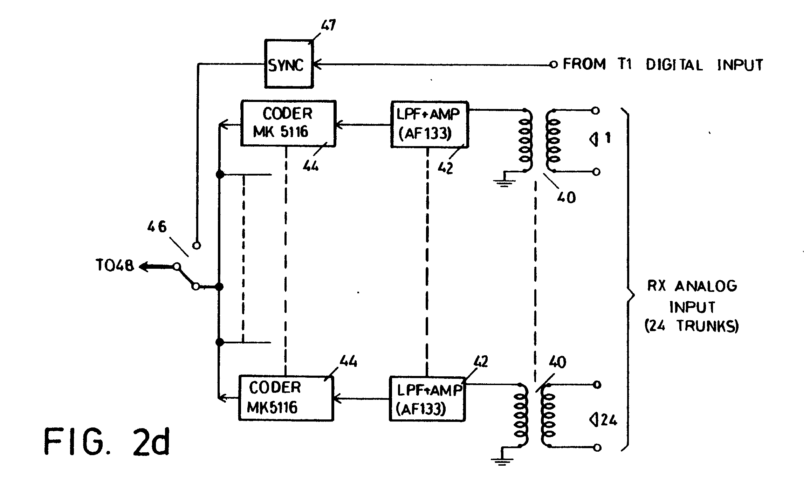

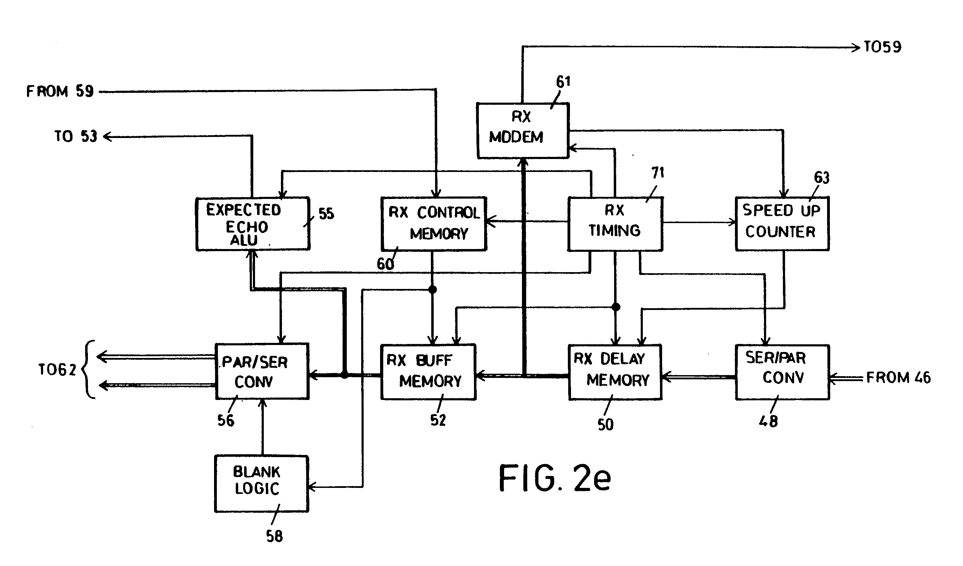

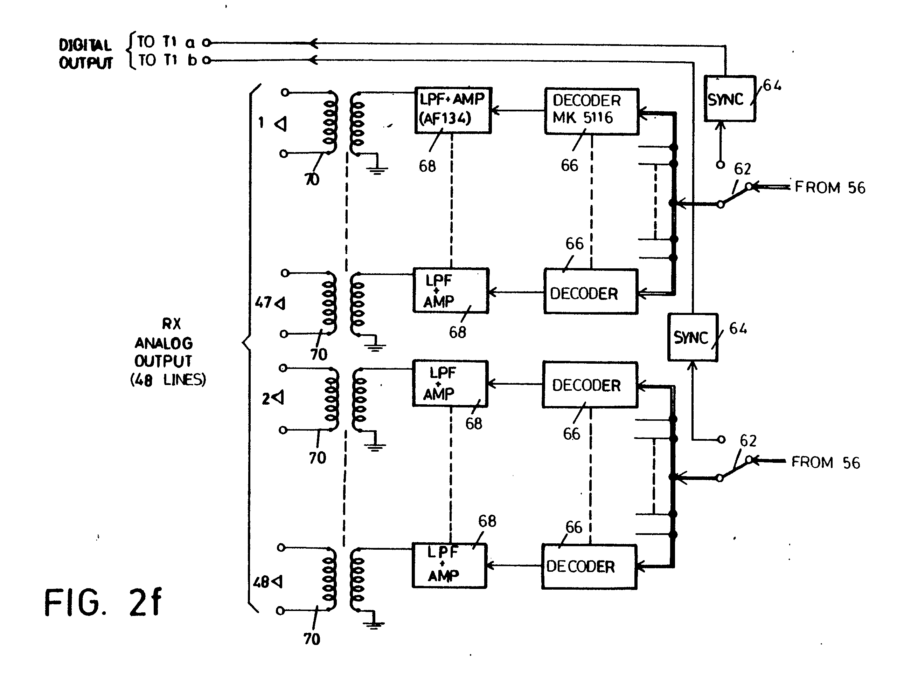

Figure 2 comprises parts 2a—2f

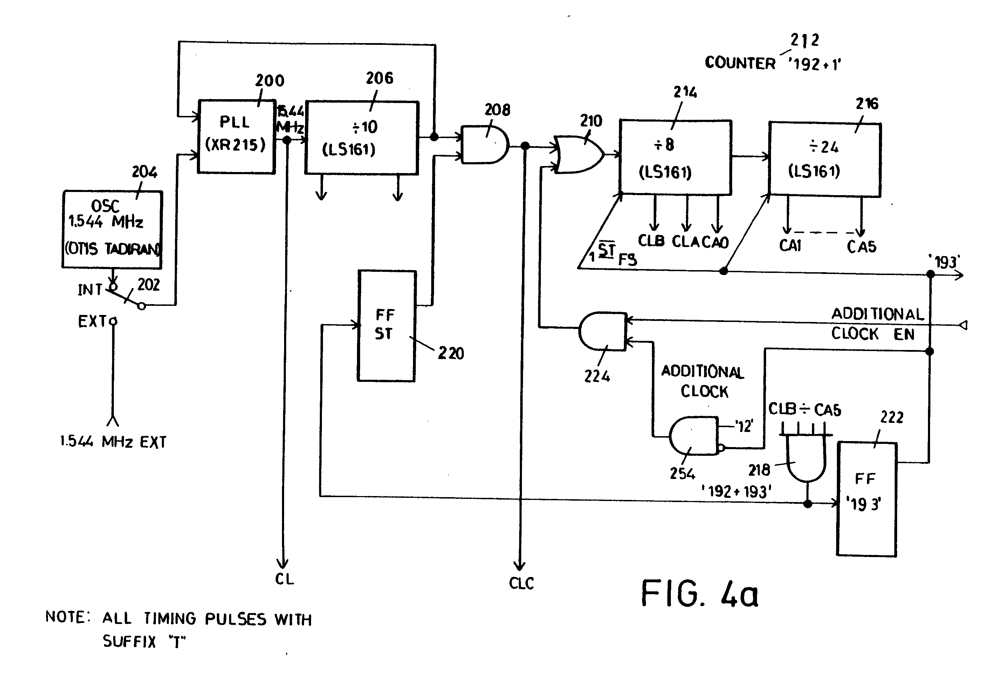

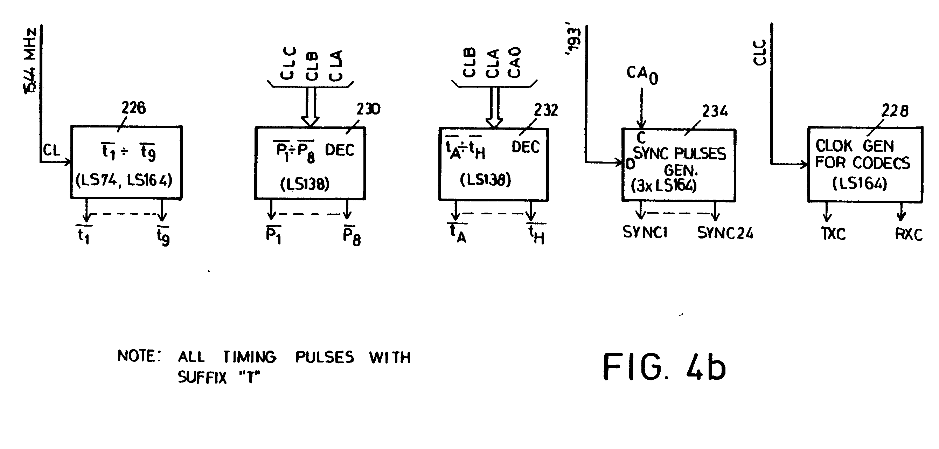

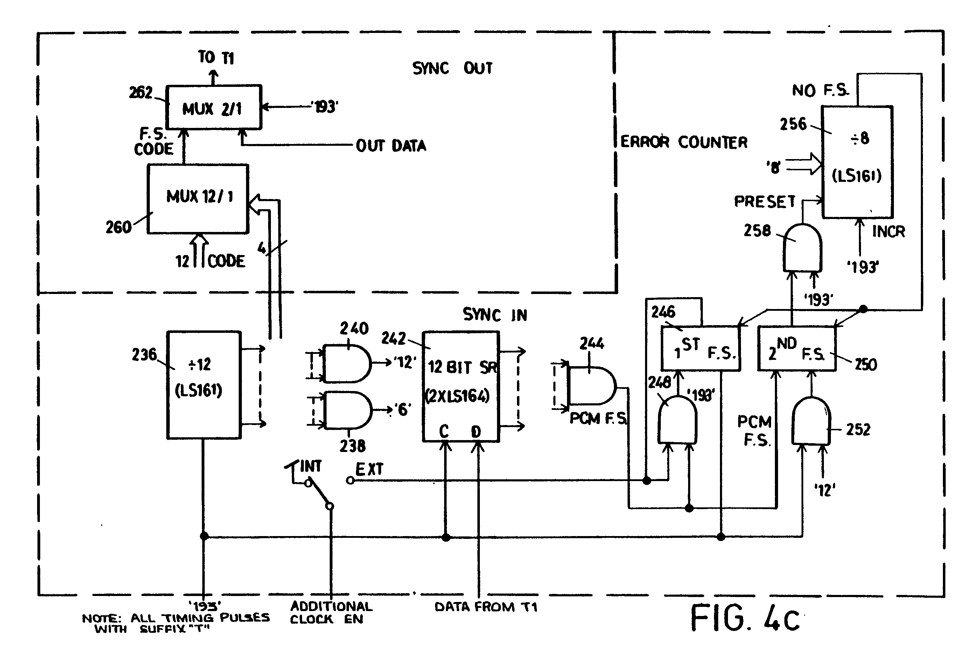

Figure 4 comprises parts 4a—4c

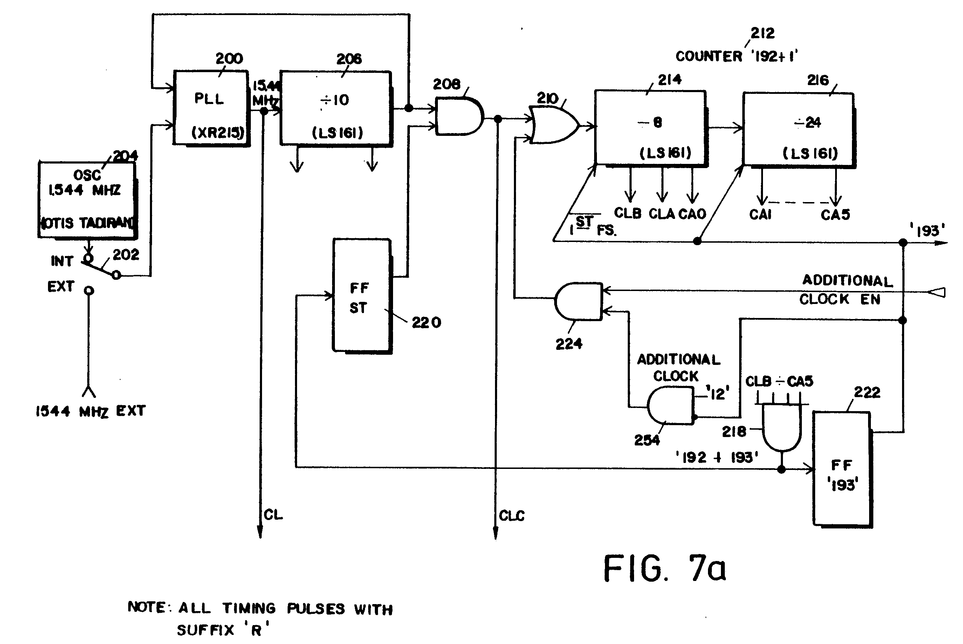

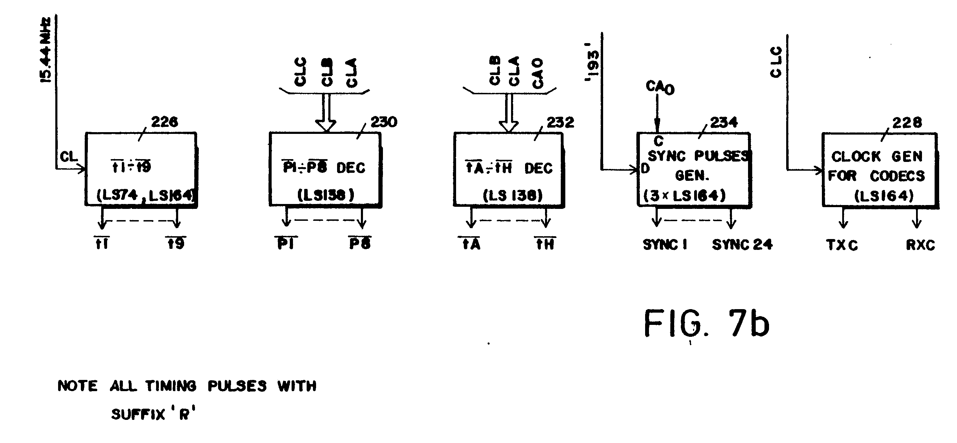

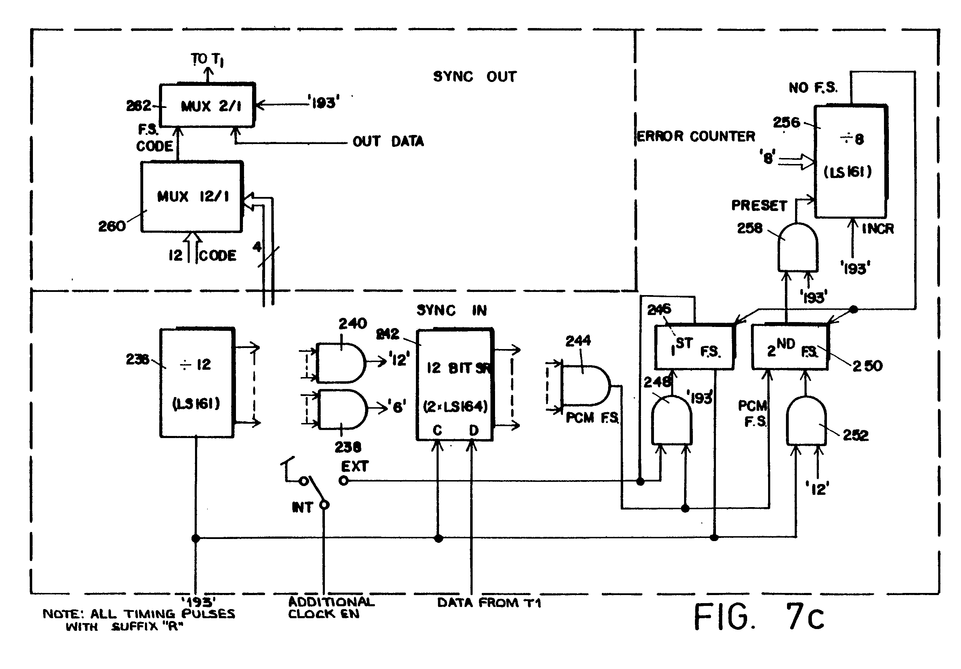

Figure 7 comprises parts 7a—7c

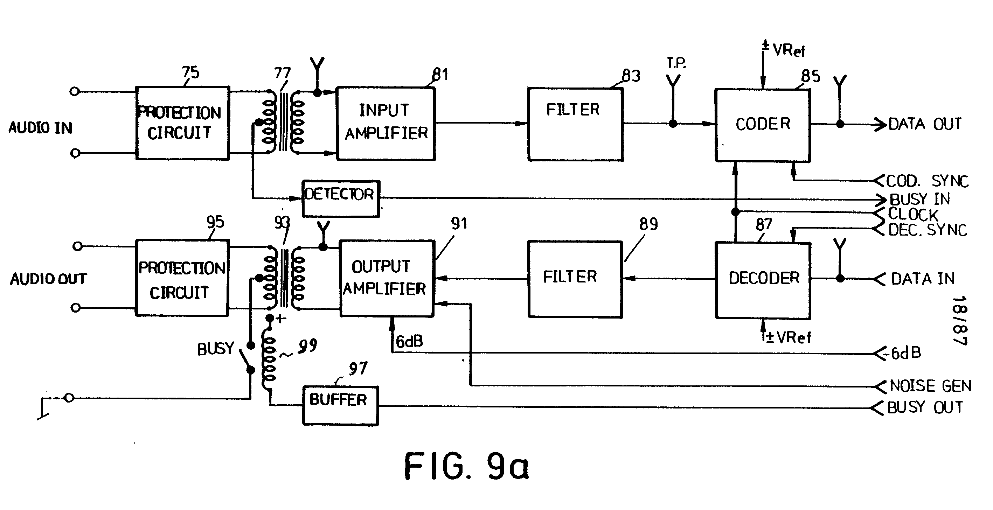

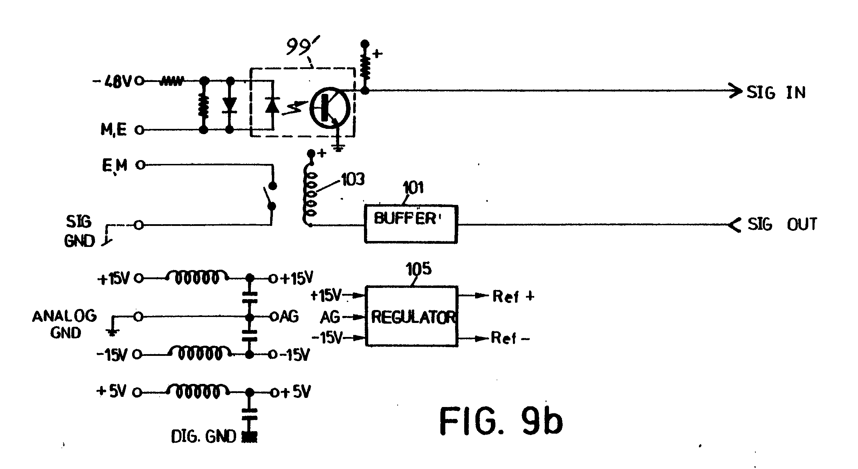

Figure 9 comprises parts 9a, 9b

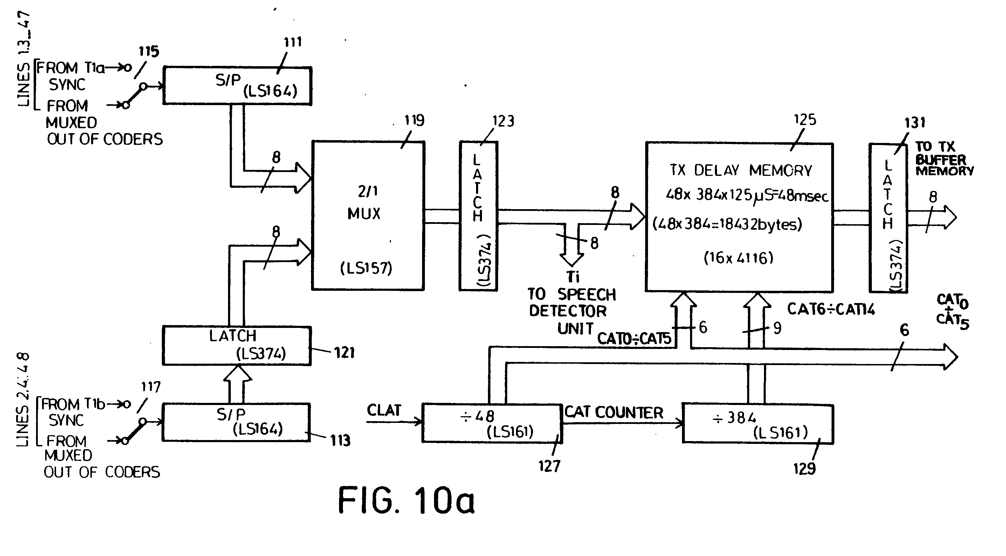

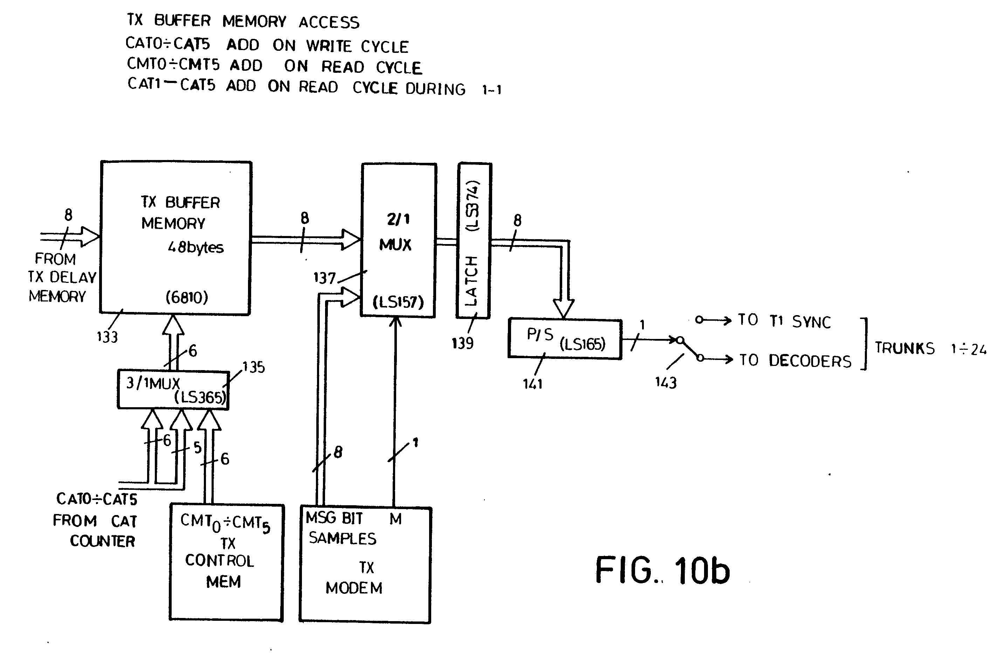

Figure 10 comprises parts 10a, 10b

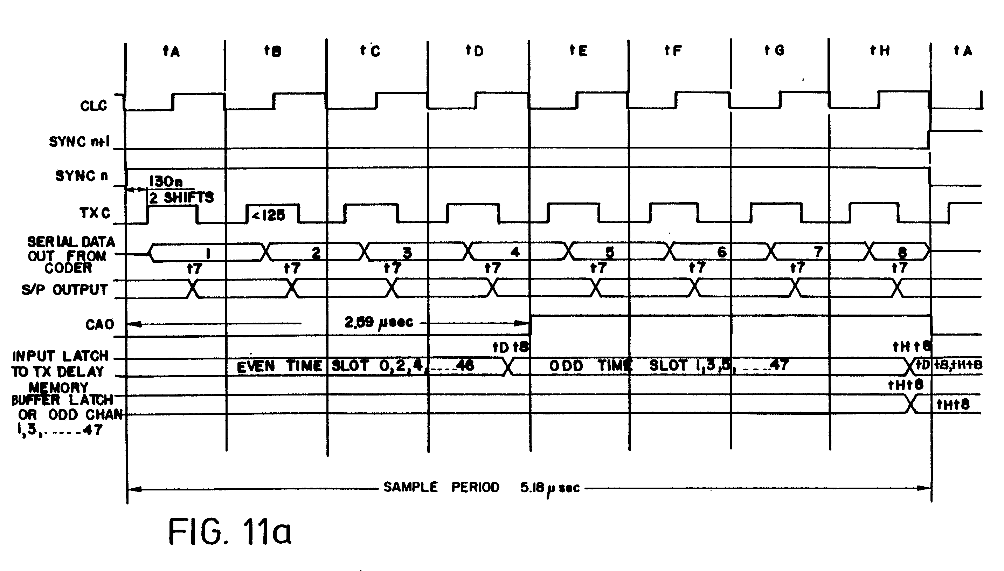

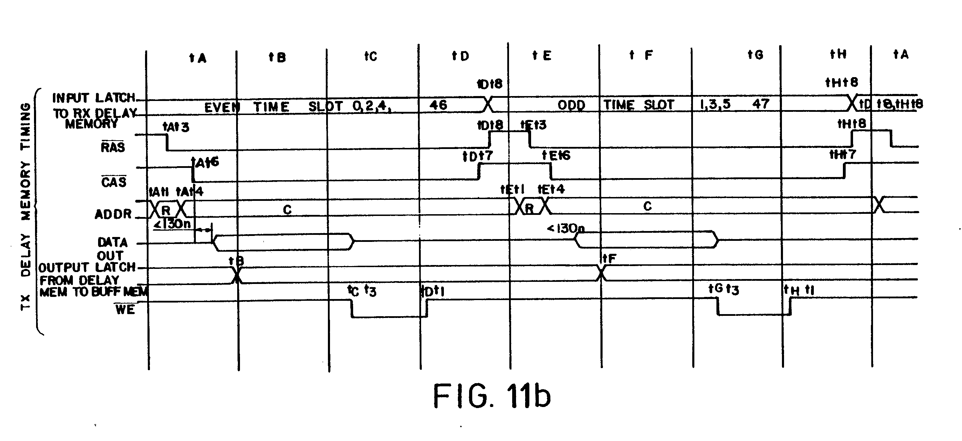

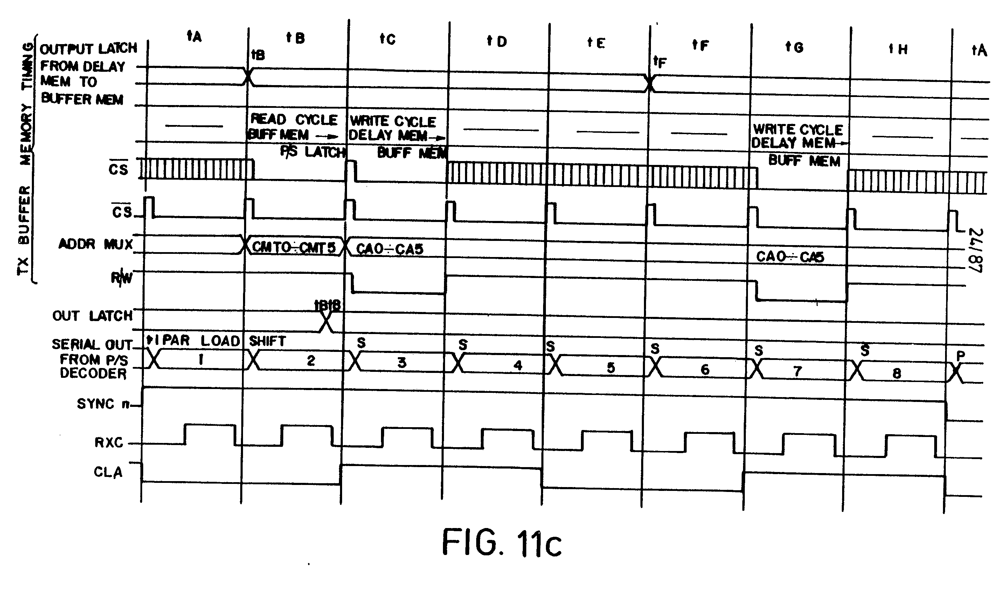

Figure 11 comprises parts 11a—11c

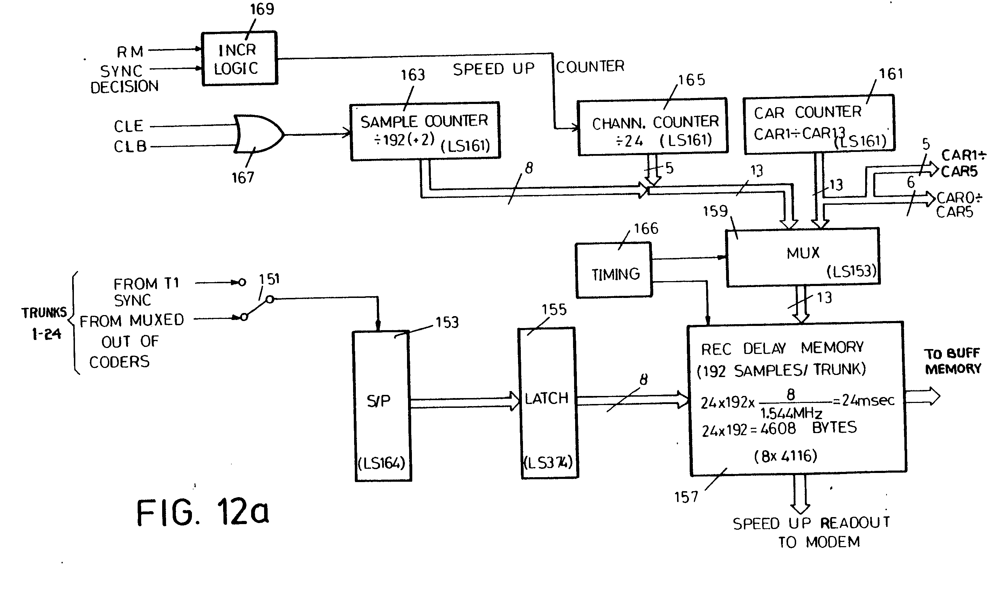

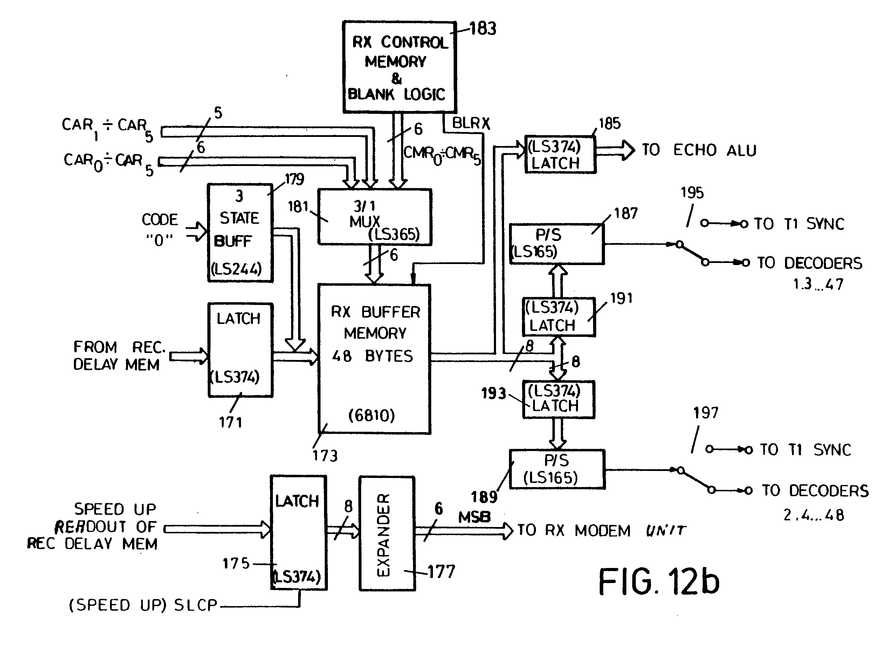

Figure 12 comprises parts 12a, 12b

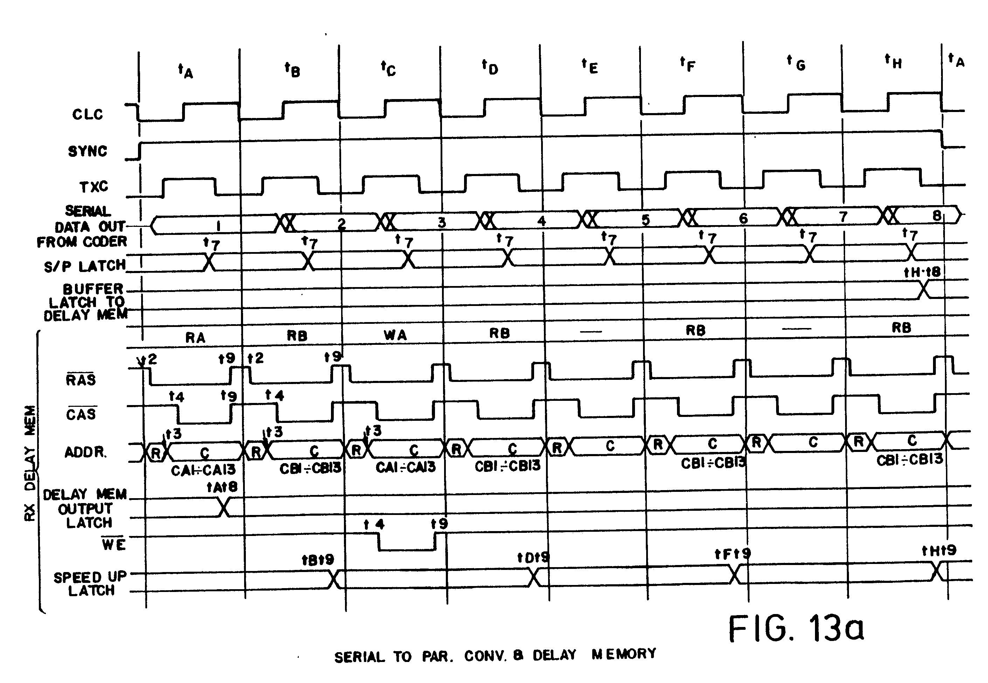

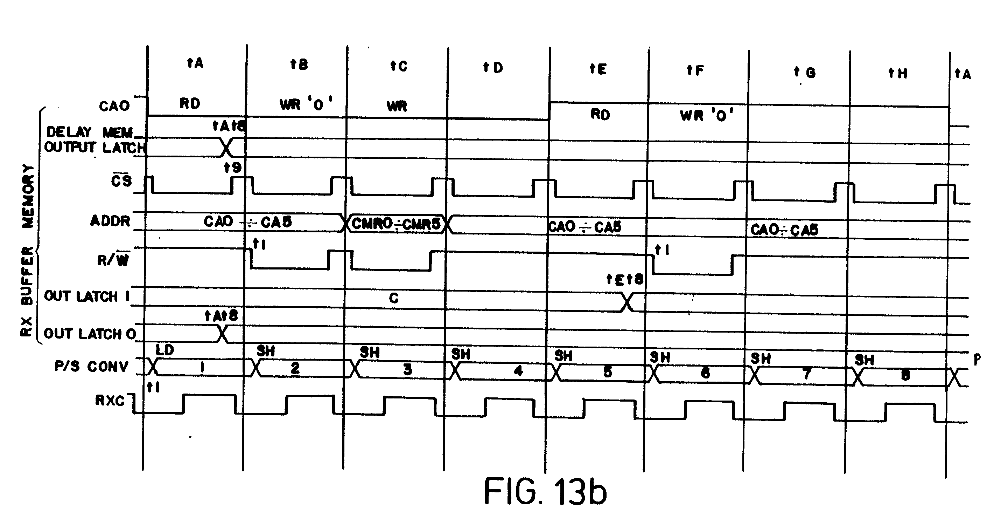

Figure 13 comprises parts 13a, 13b

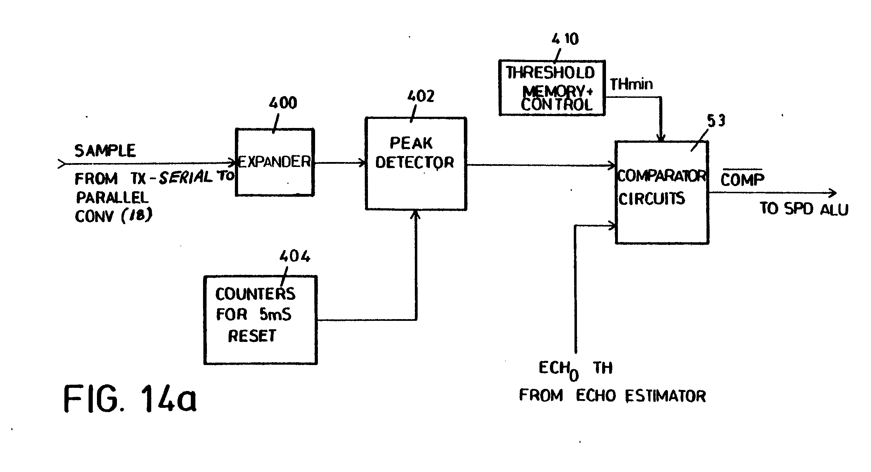

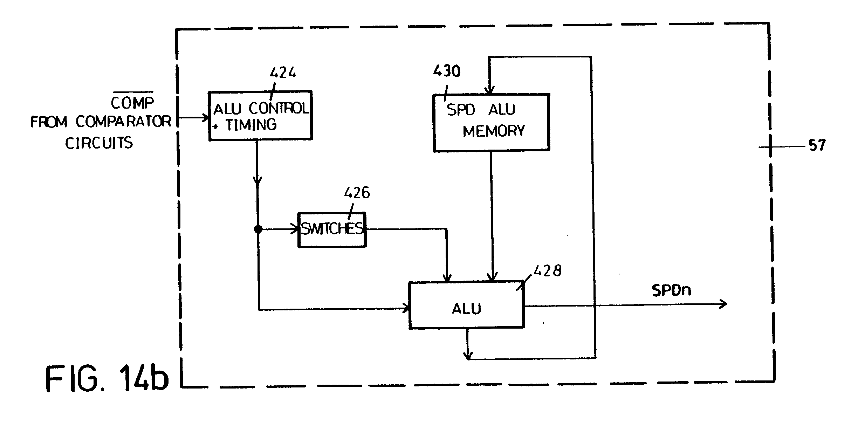

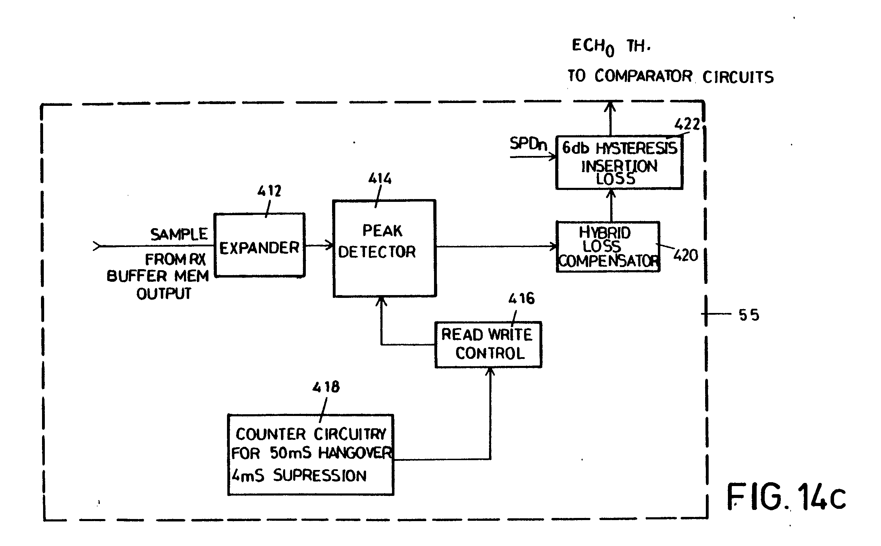

Figure 14 comprises parts 14a—14c

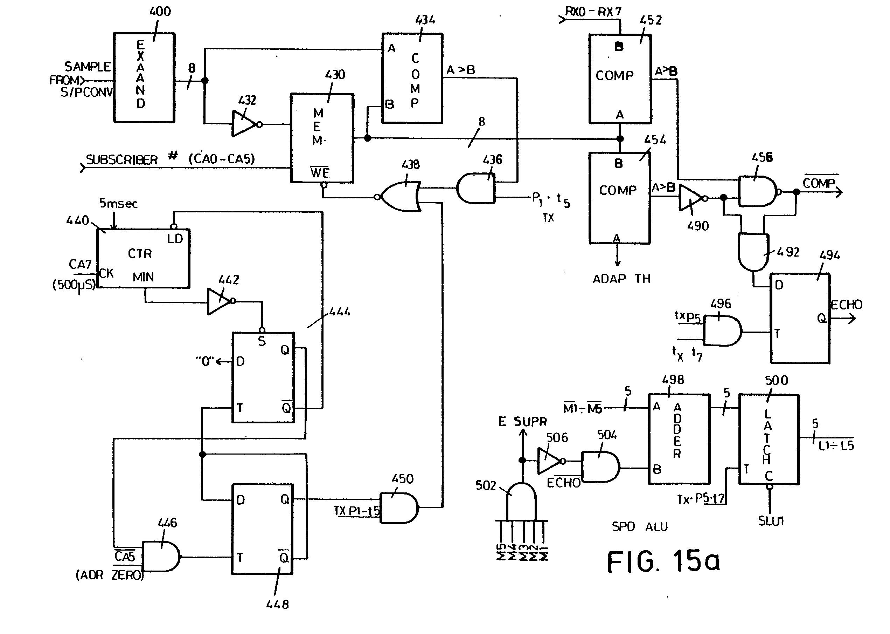

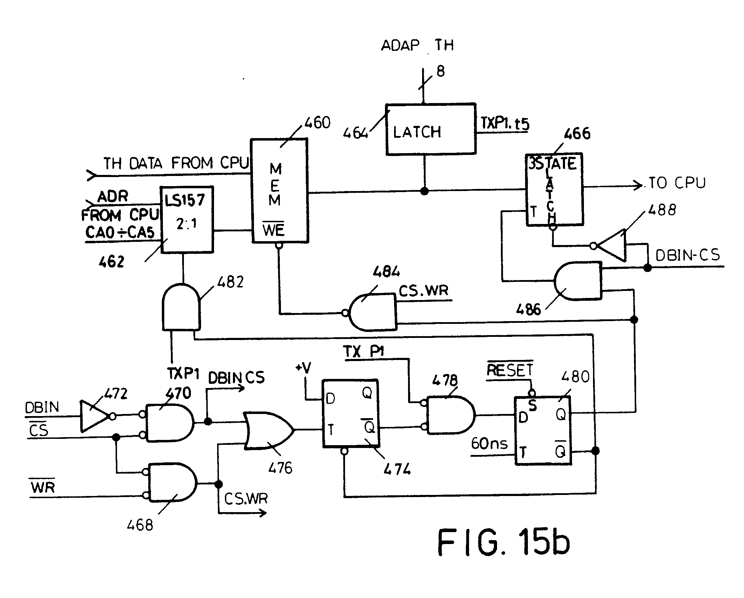

Figure 15 comprises parts 15a, 15b

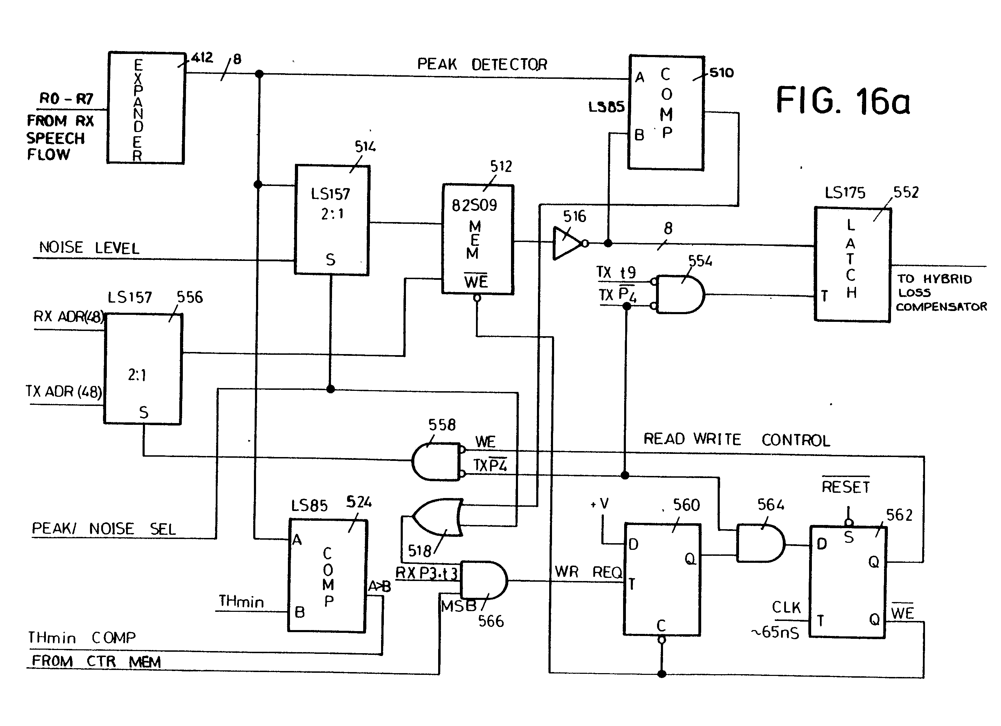

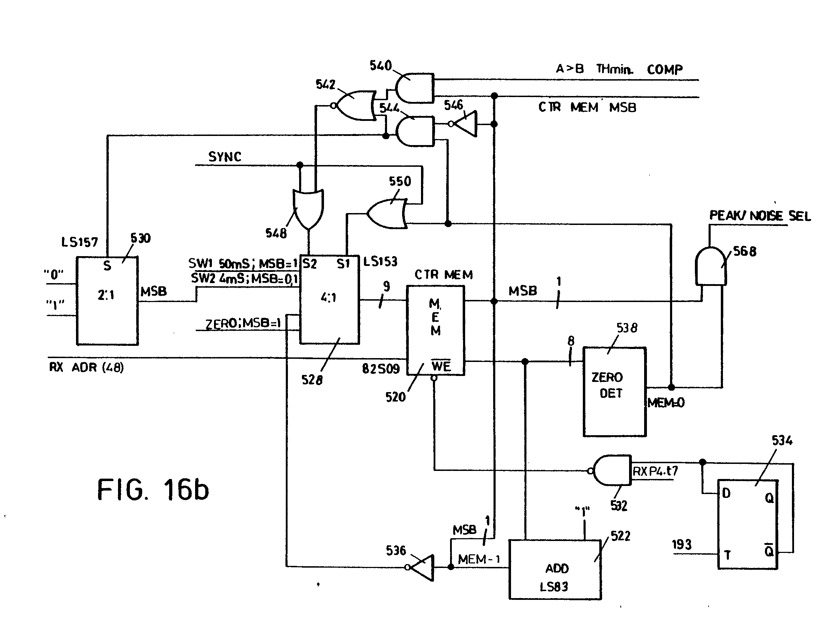

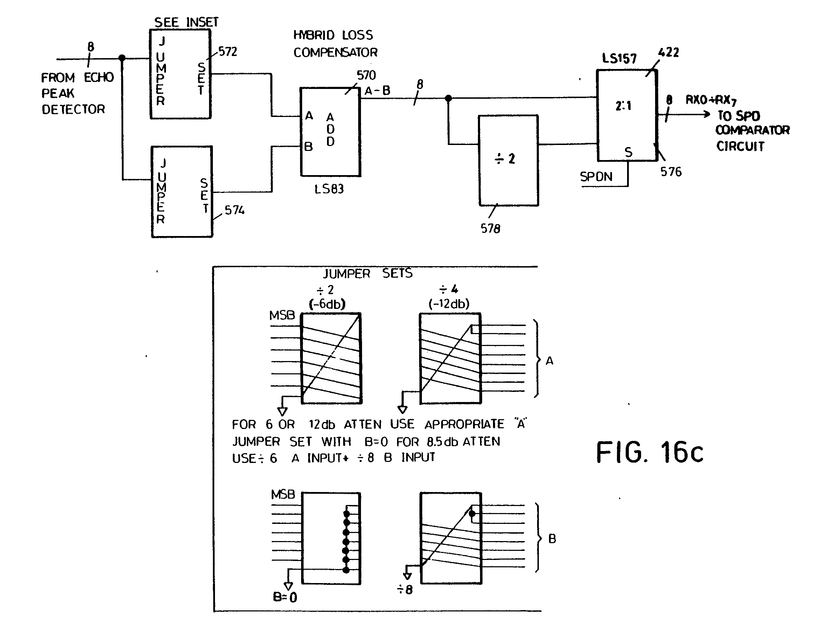

Figure 16 comprises parts 16a—16c

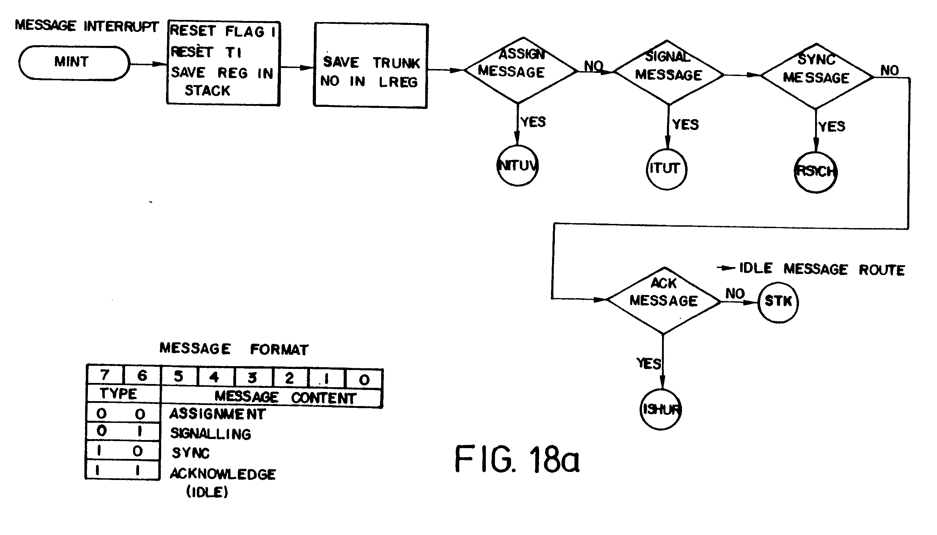

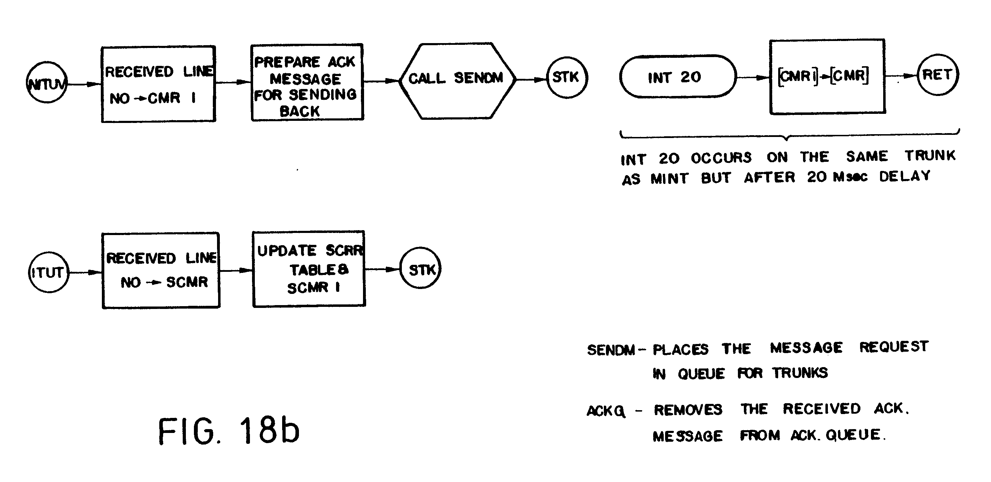

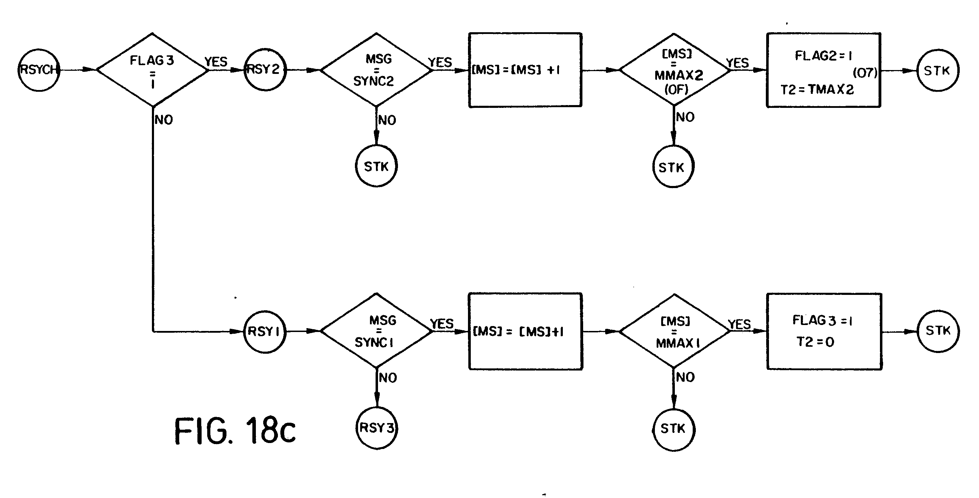

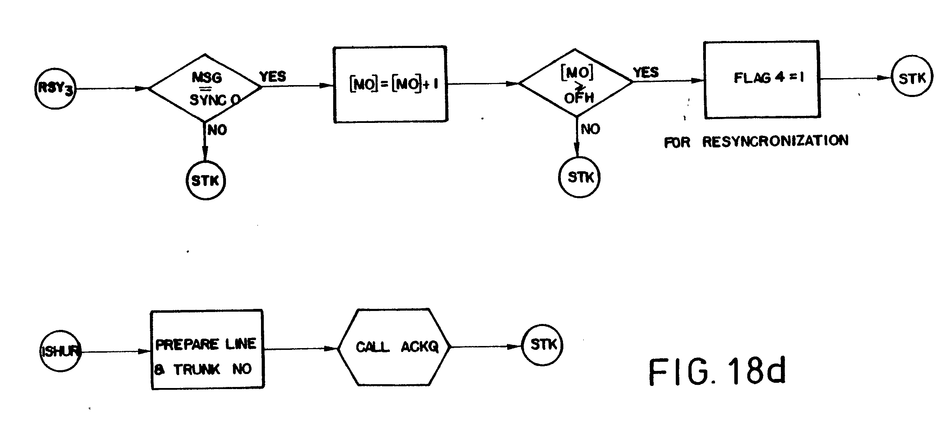

Figure 18 comprises parts 18a—18d

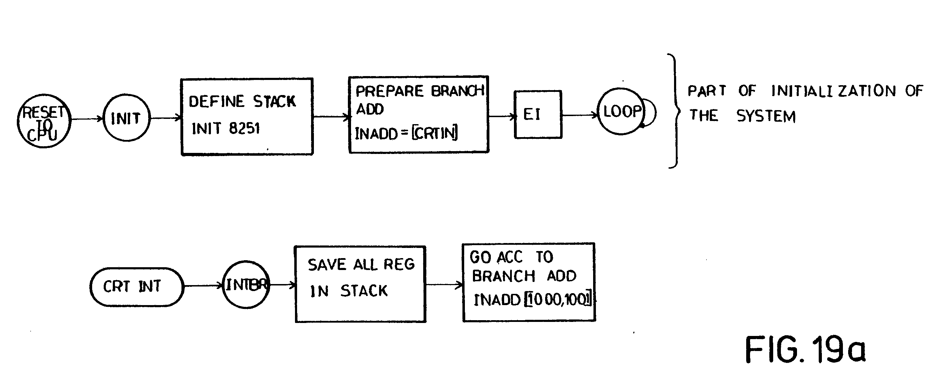

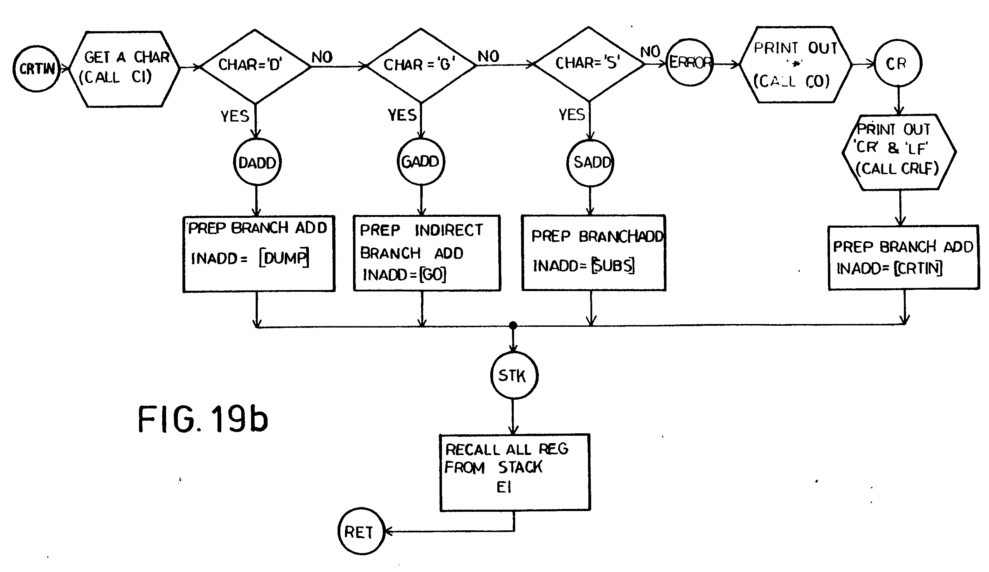

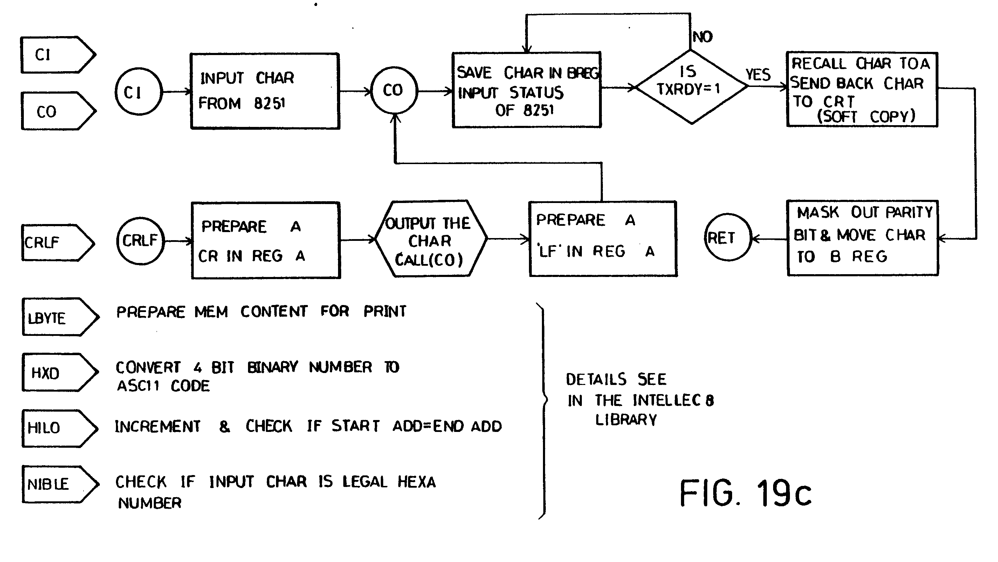

Figure 19 comprises parts 19a—19c

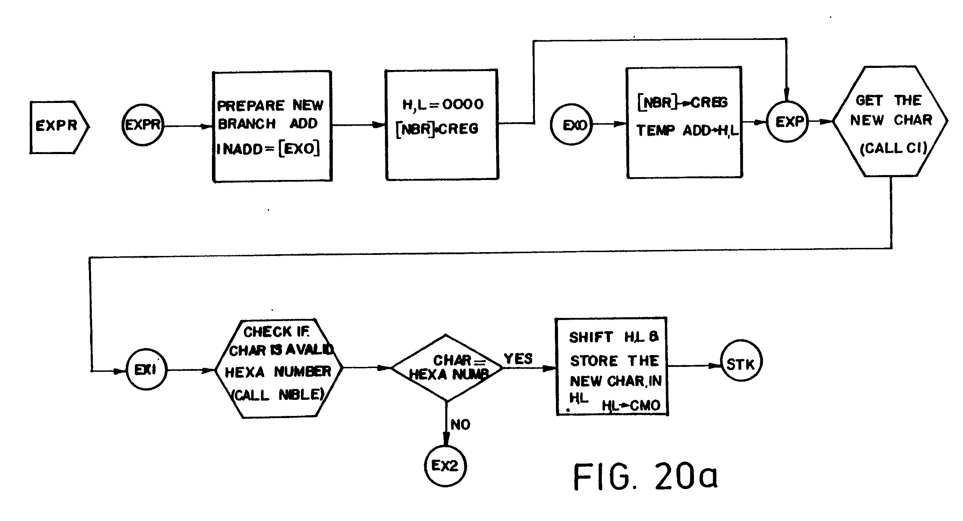

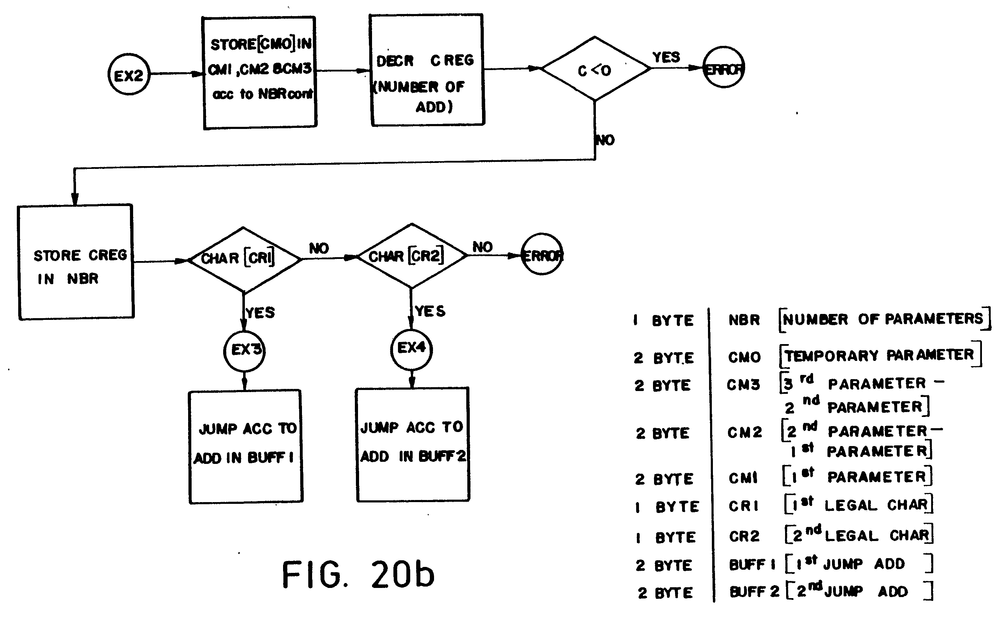

Figure 20 comprises parts 20a, 20b

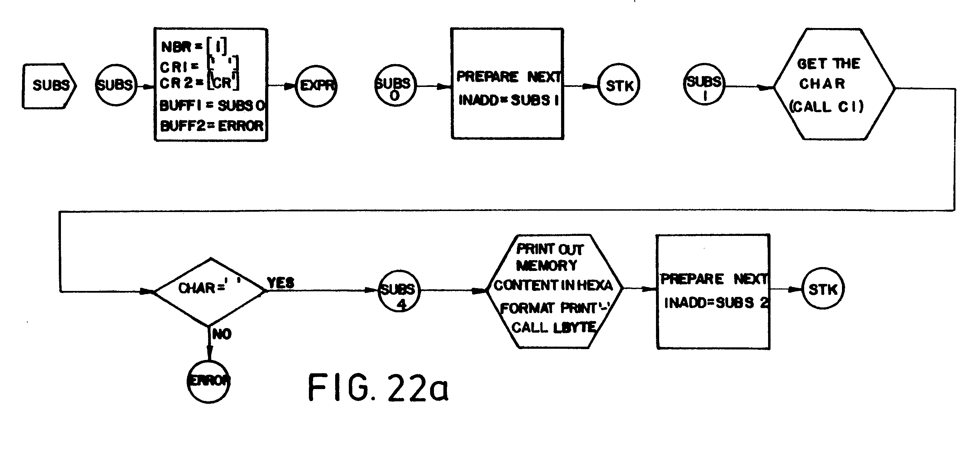

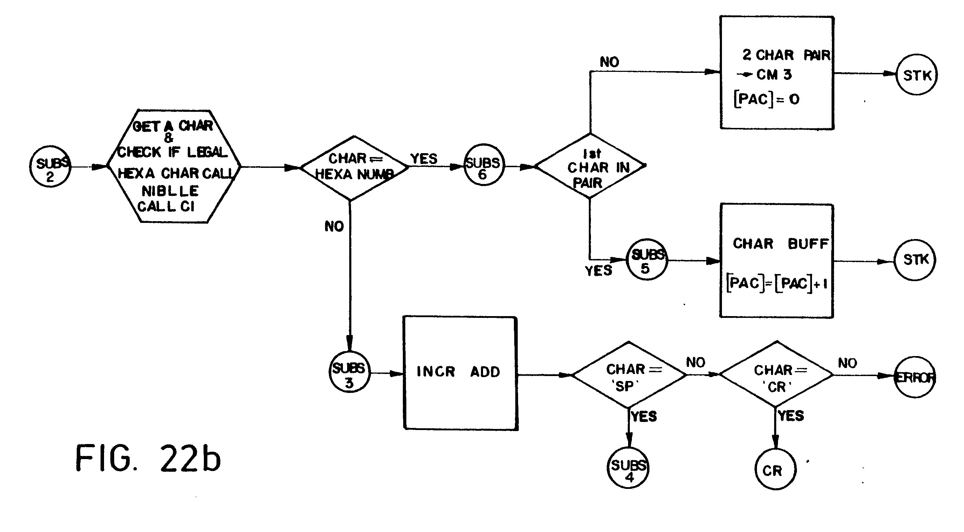

Figure 22 comprises parts 22a, 22b

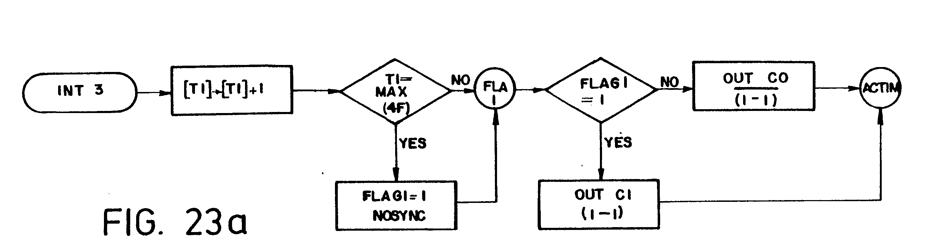

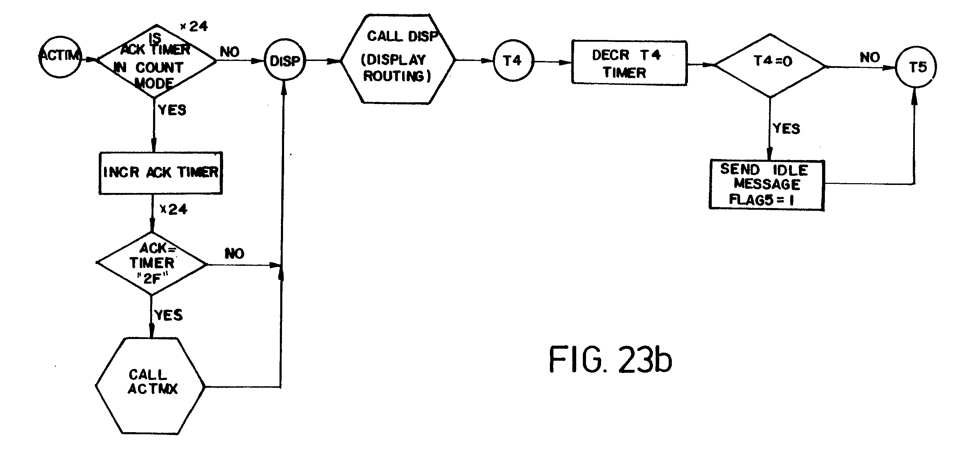

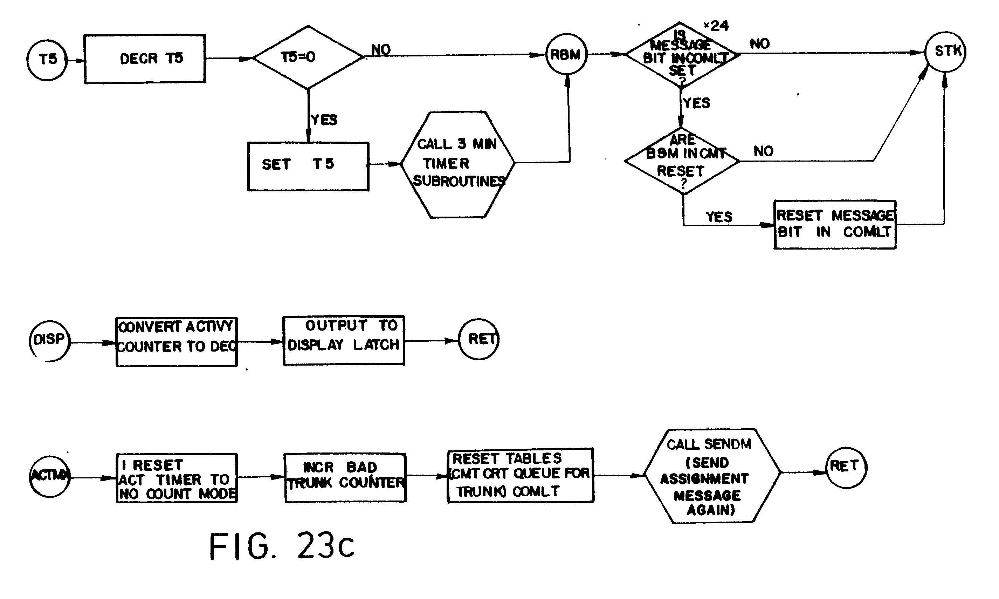

Figure 23 comprises parts 23a—23c

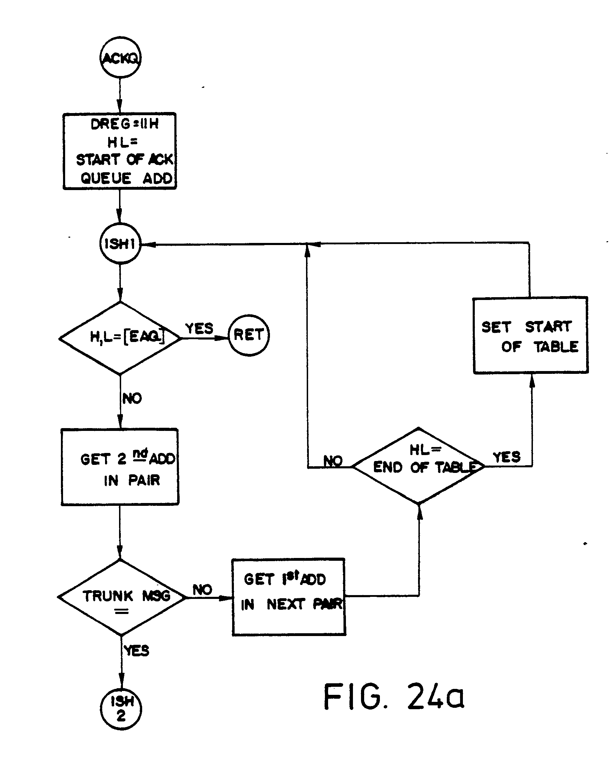

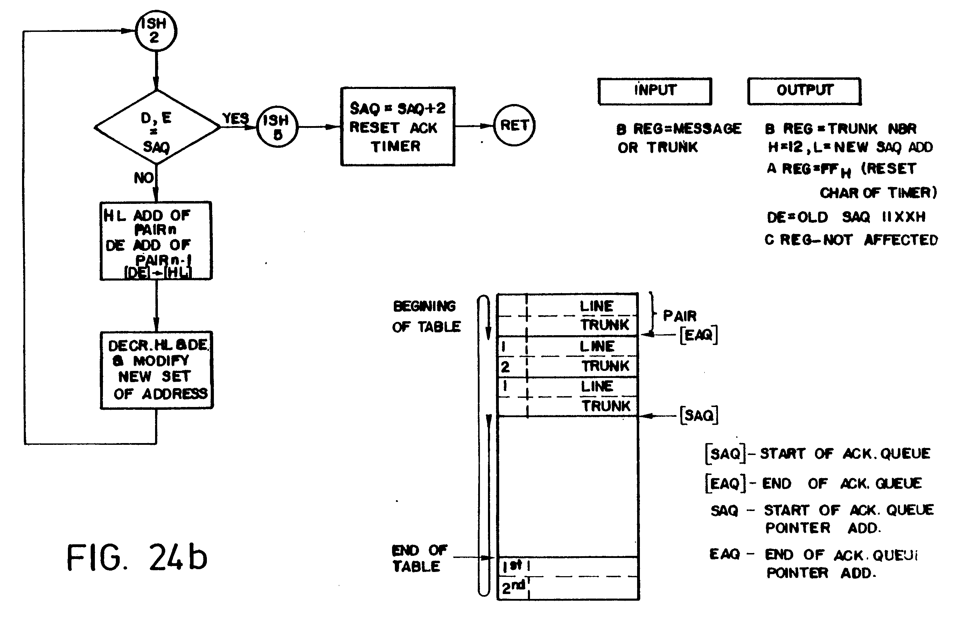

Figure 24 comprises parts 24a, 24b

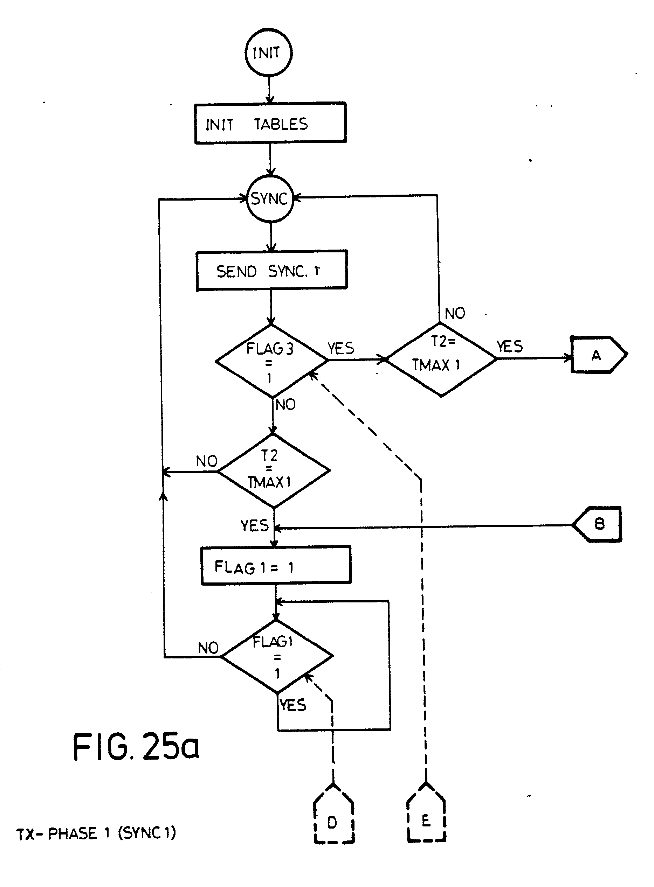

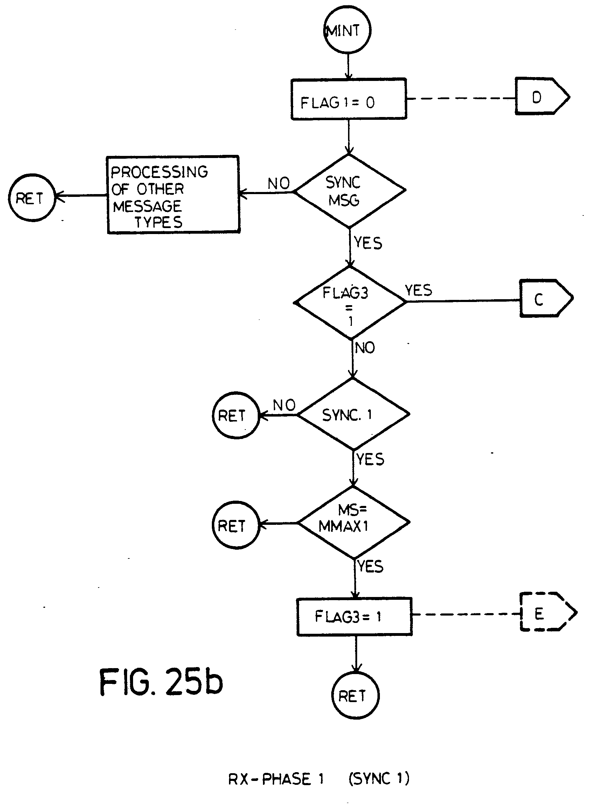

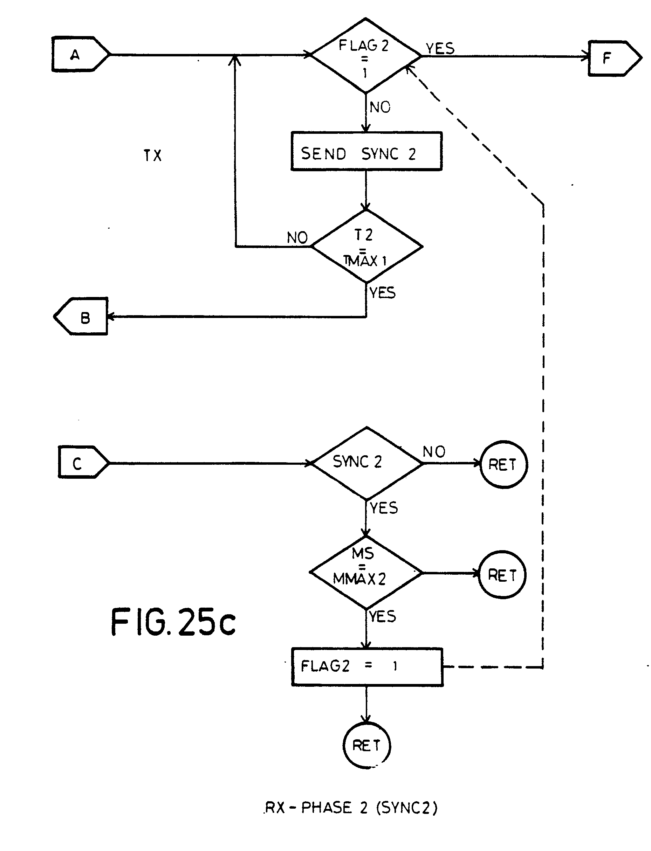

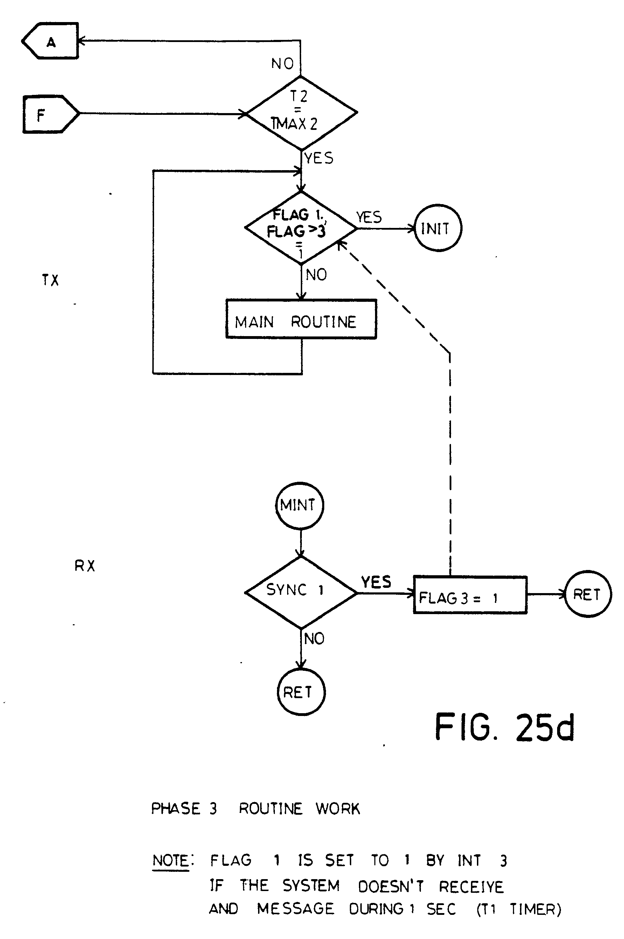

Figure 25 comprises parts 25a—25d

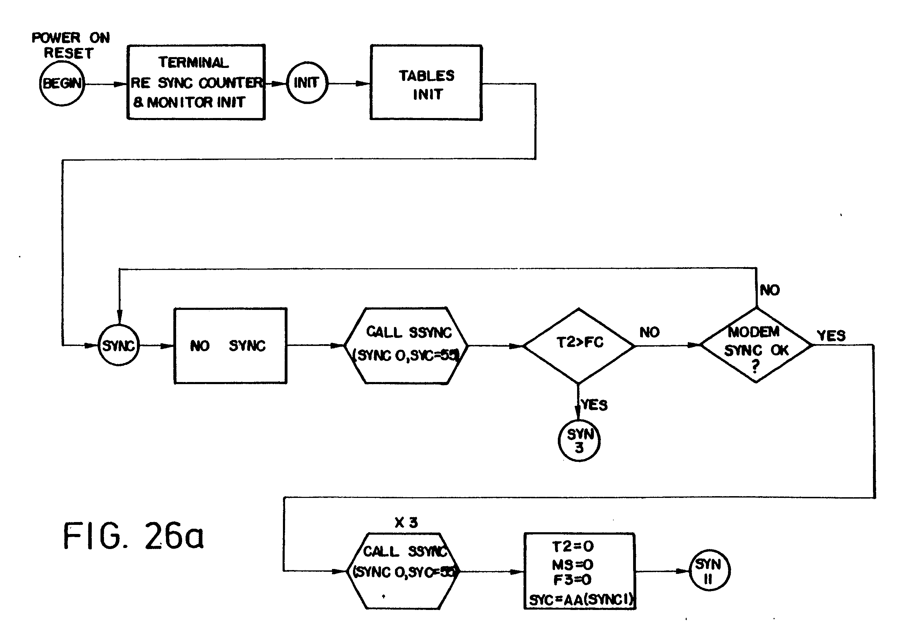

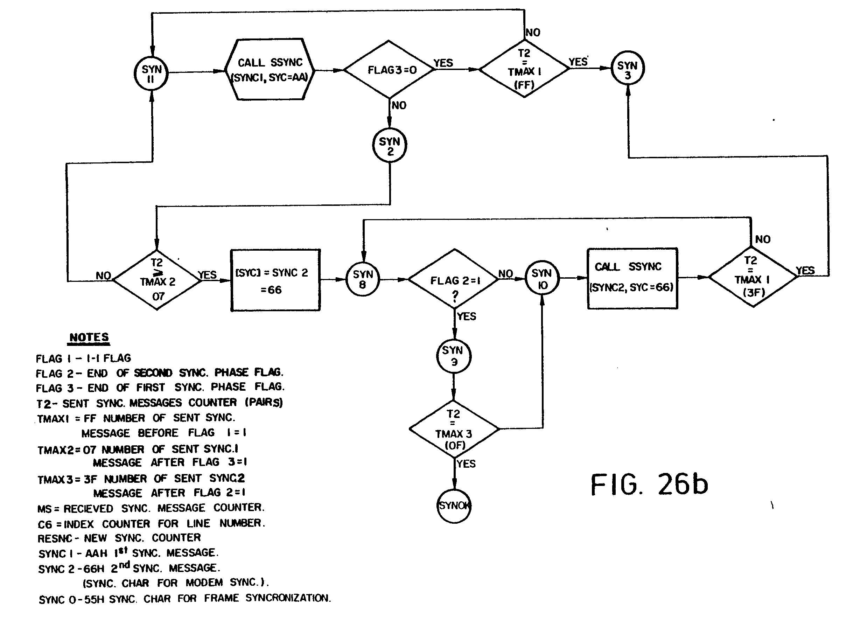

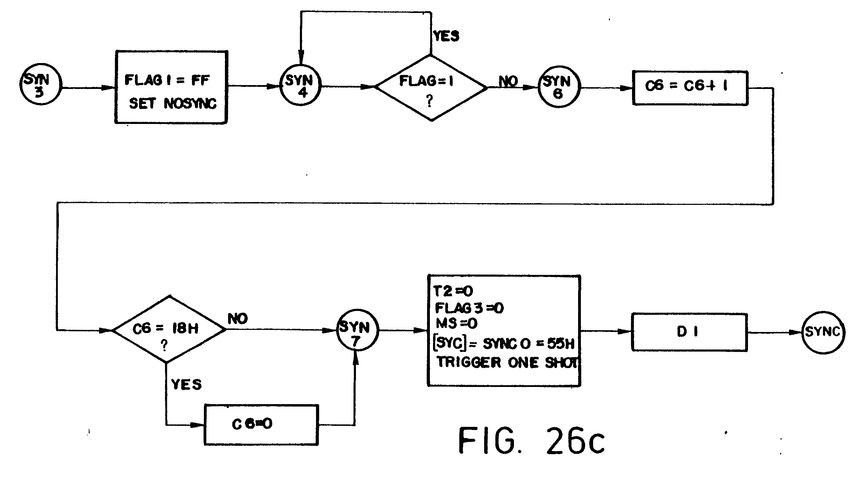

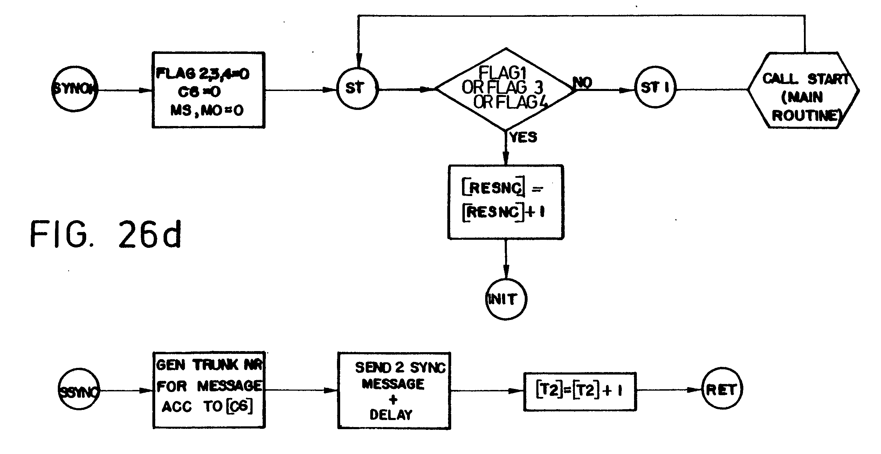

Figure 26 comprises parts 26a—26d

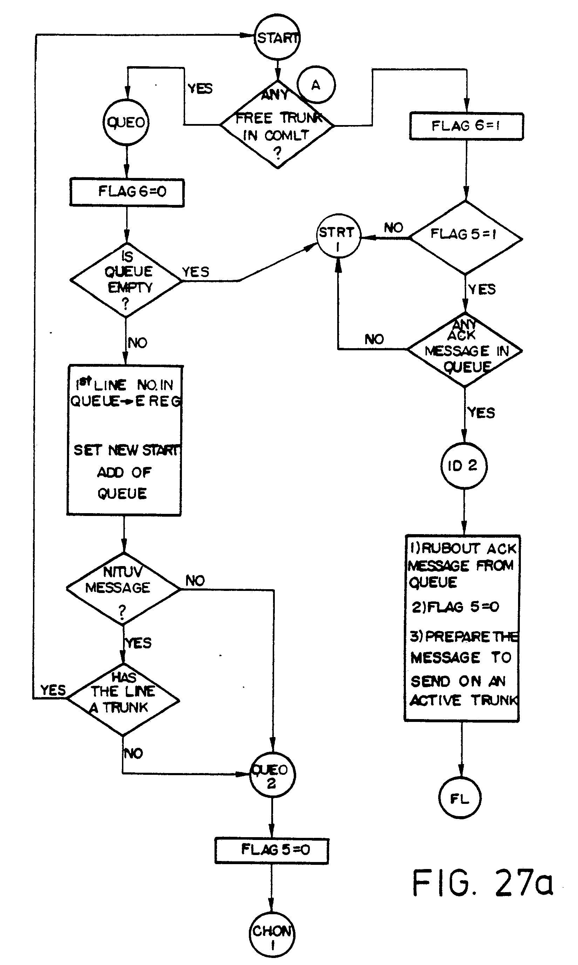

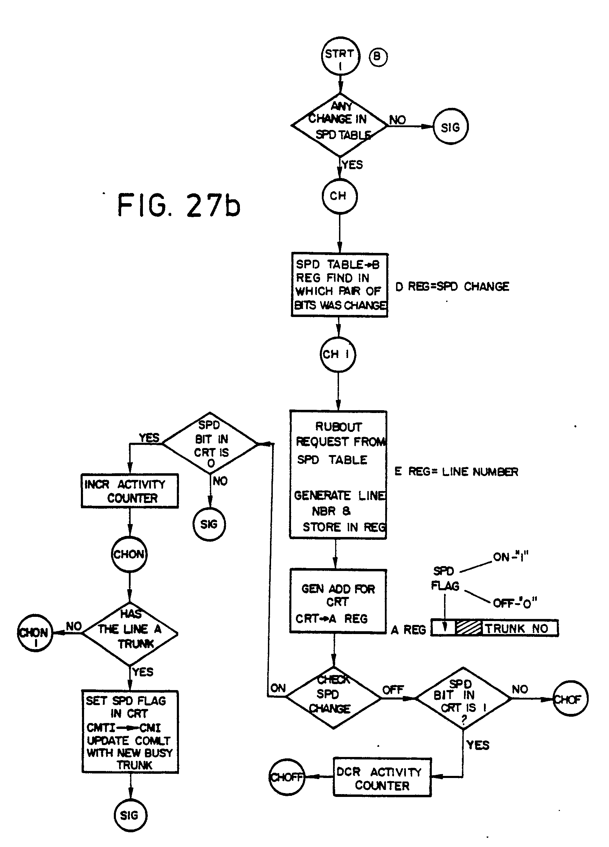

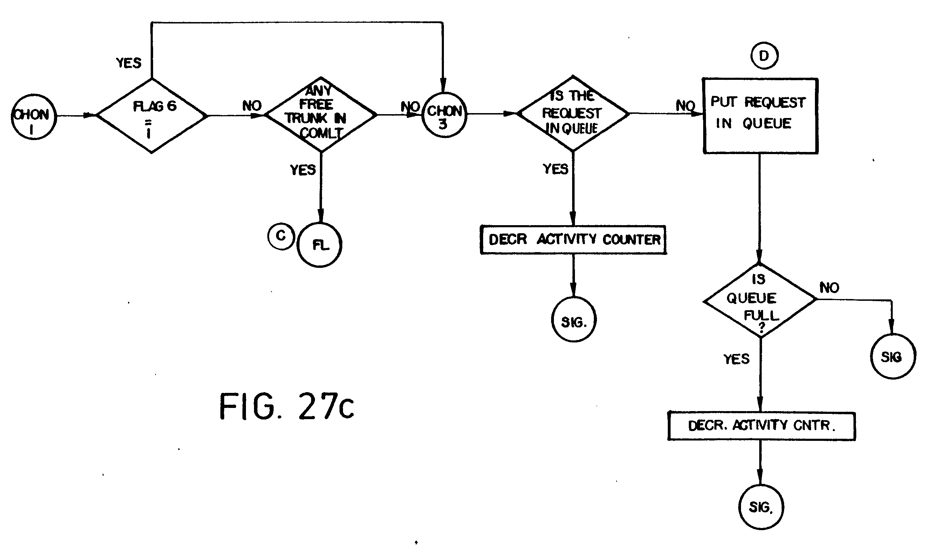

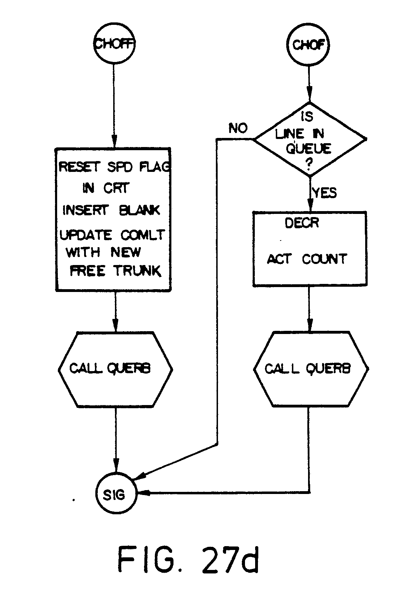

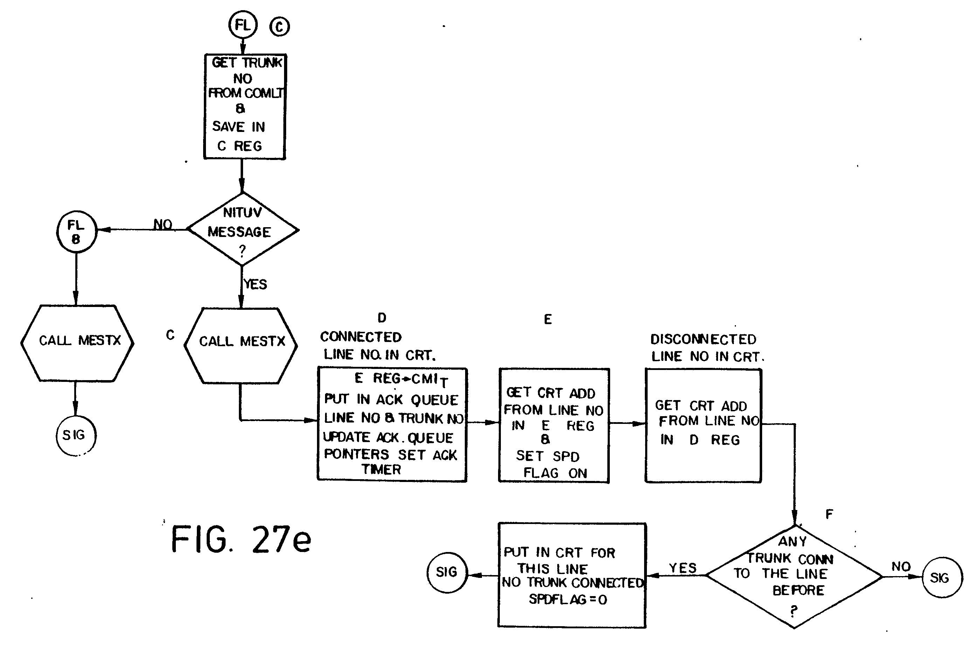

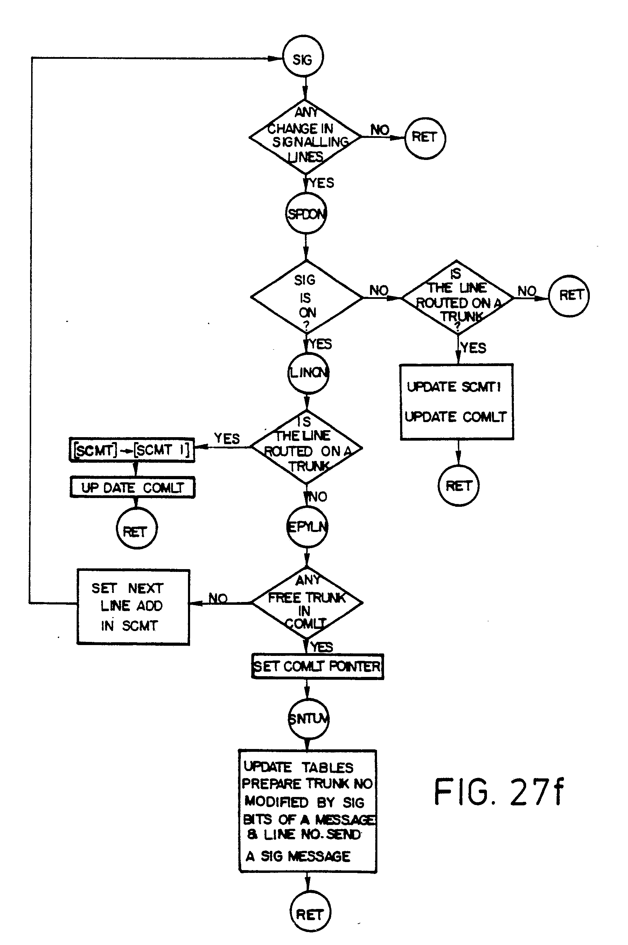

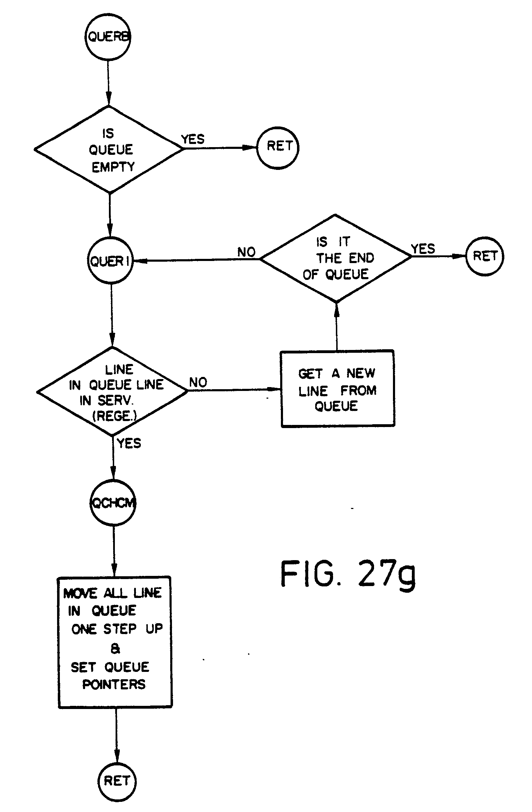

Figure 27 comprises parts 27a—27g

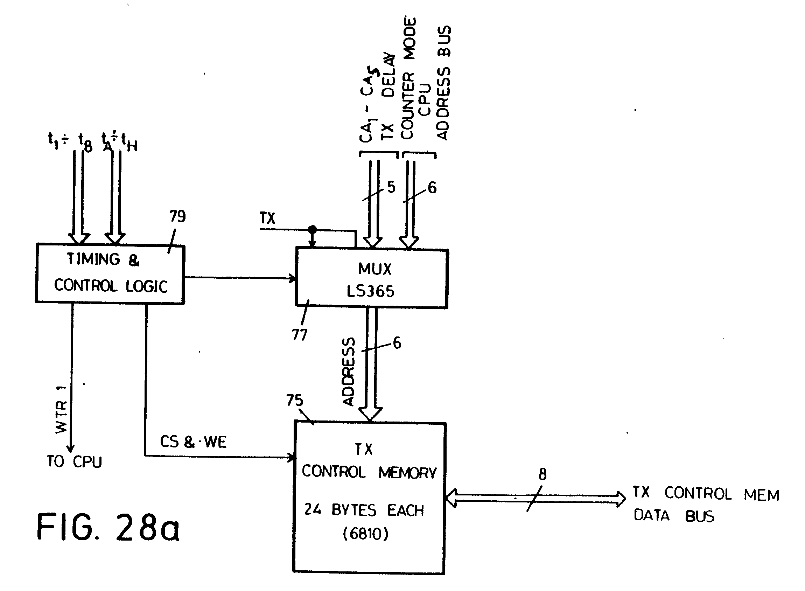

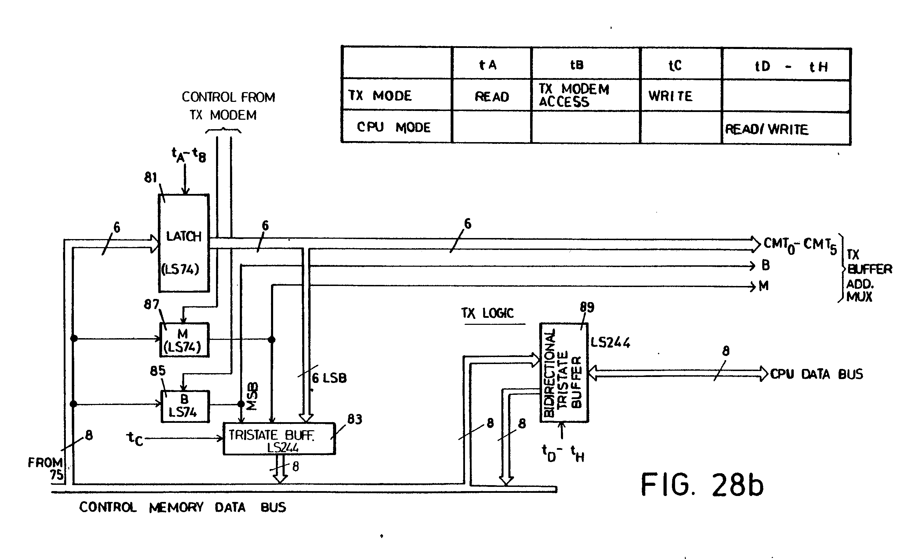

Figure 28 comprises parts 28a, 28b

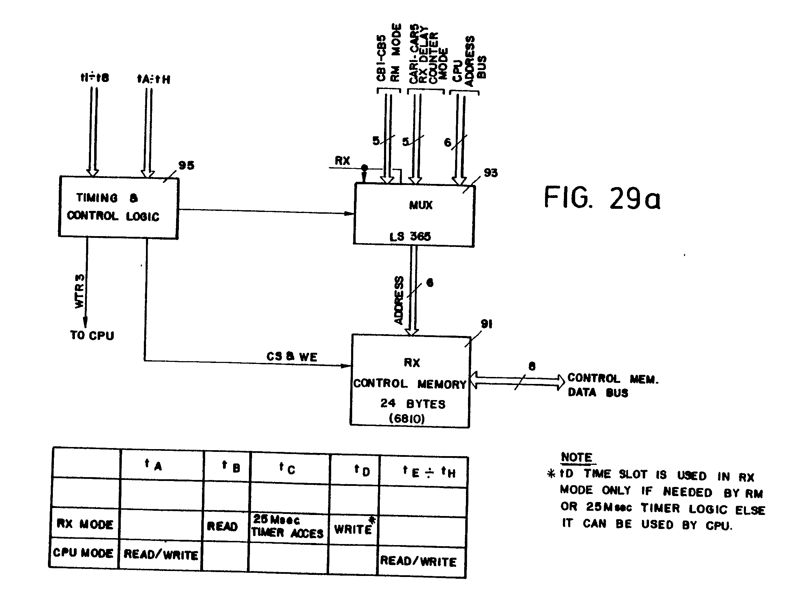

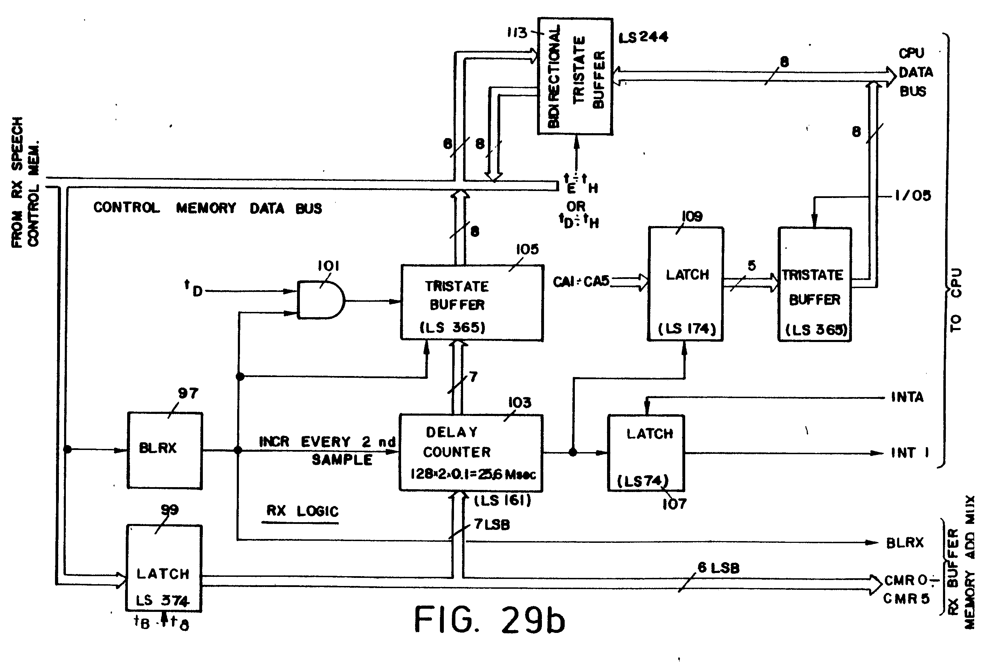

Figure 29 comprises parts 29a, 29b

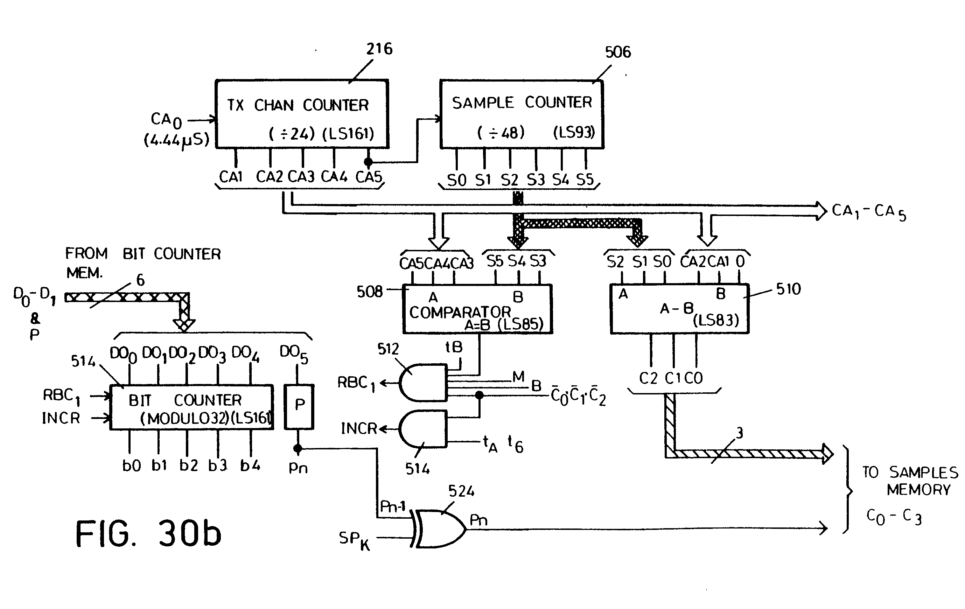

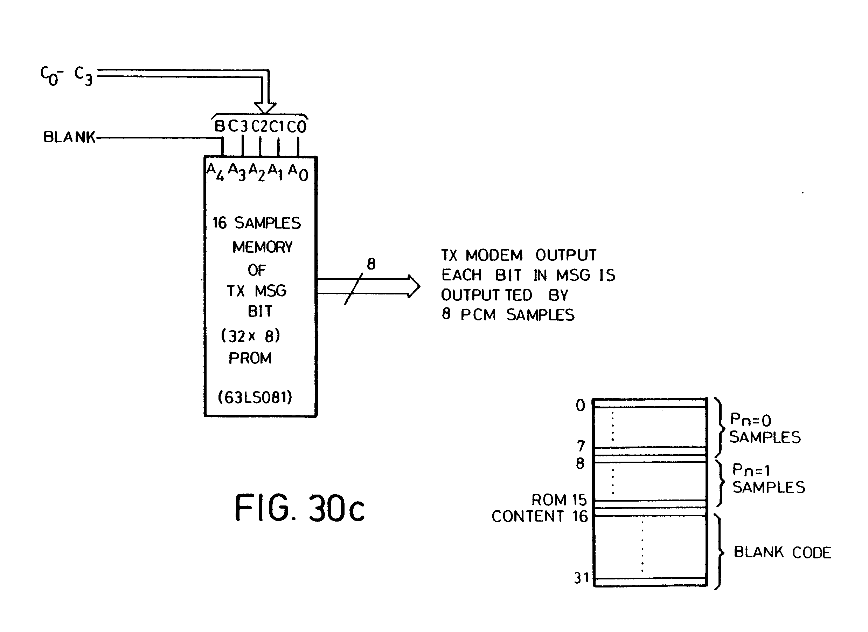

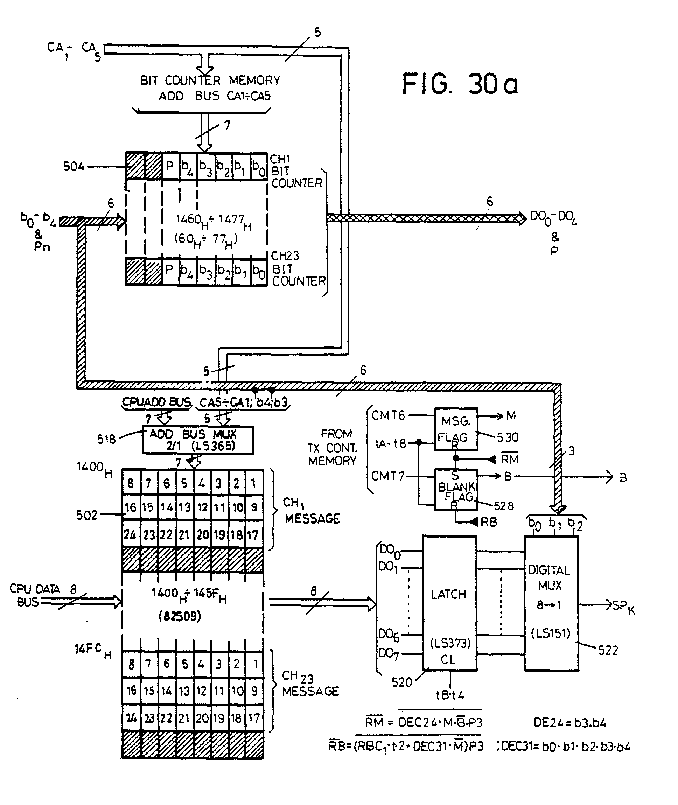

Figure 30 comprises parts 30a—30c

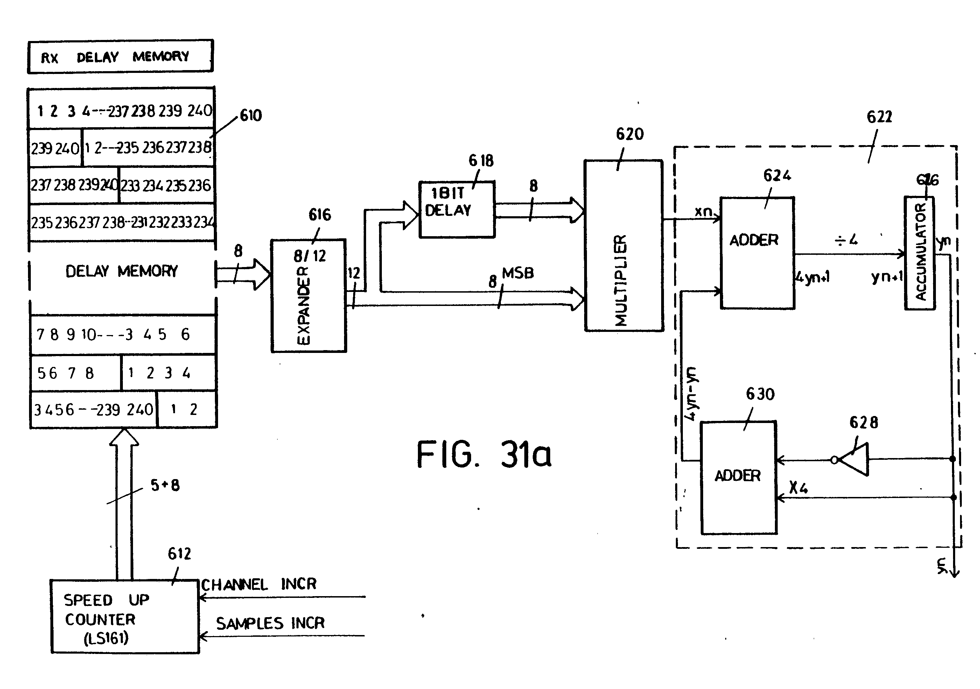

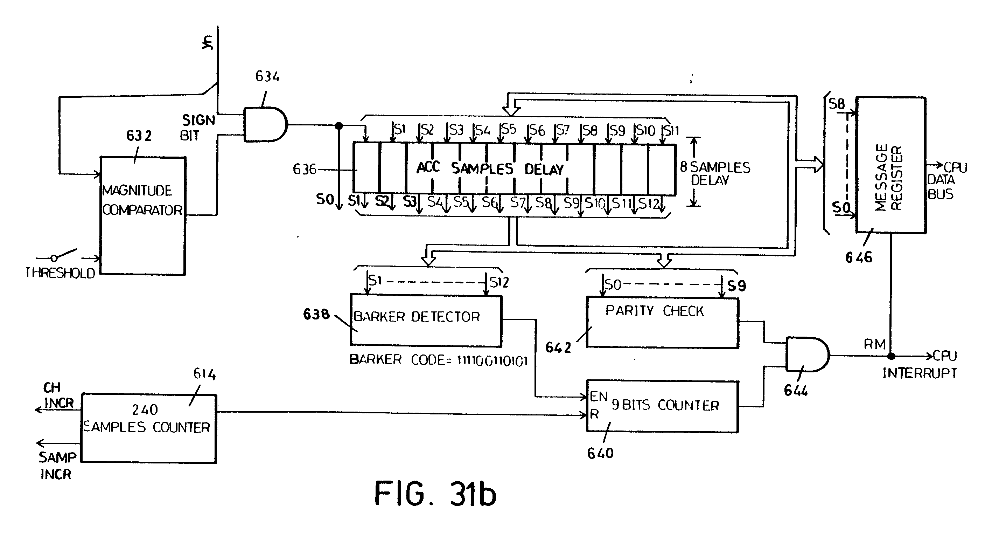

Figure 31 comprises parts 31a, 31b

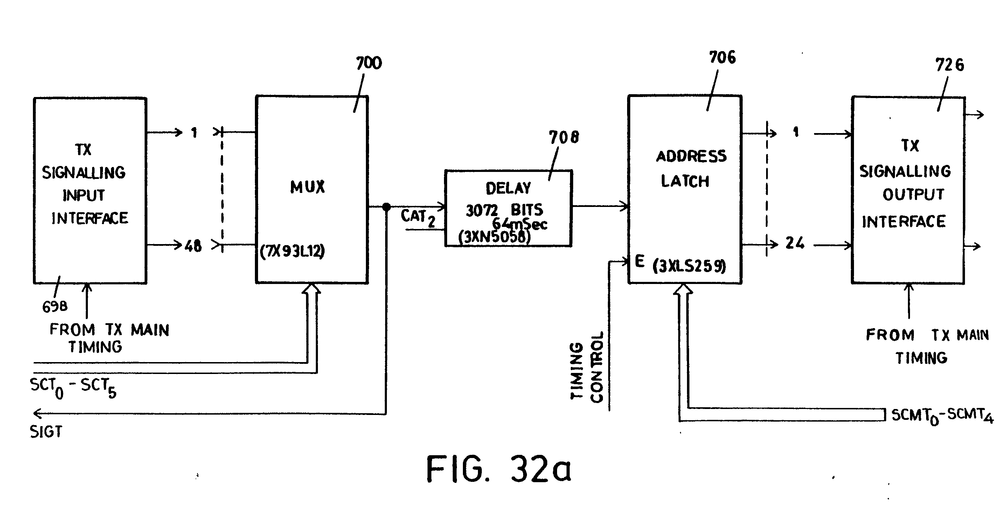

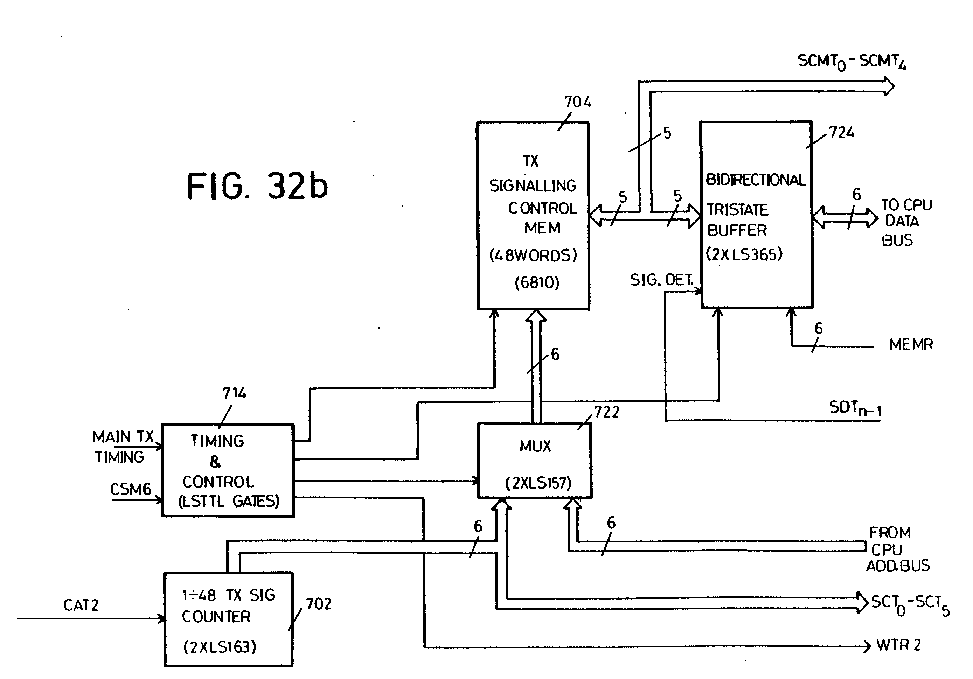

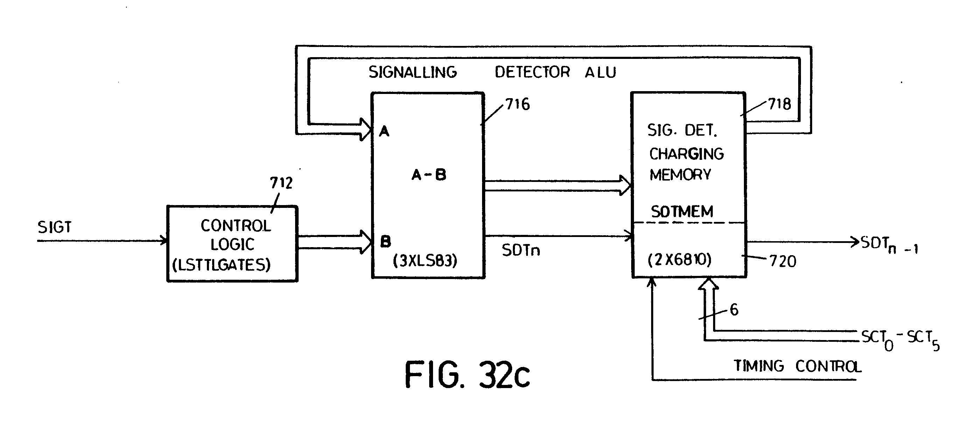

Figure 32 comprises parts 32a—32c, and

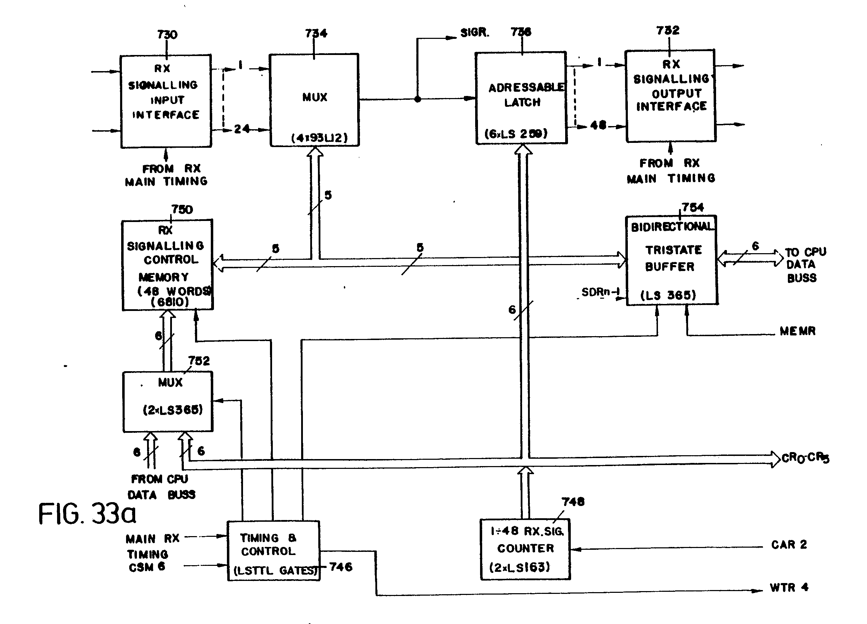

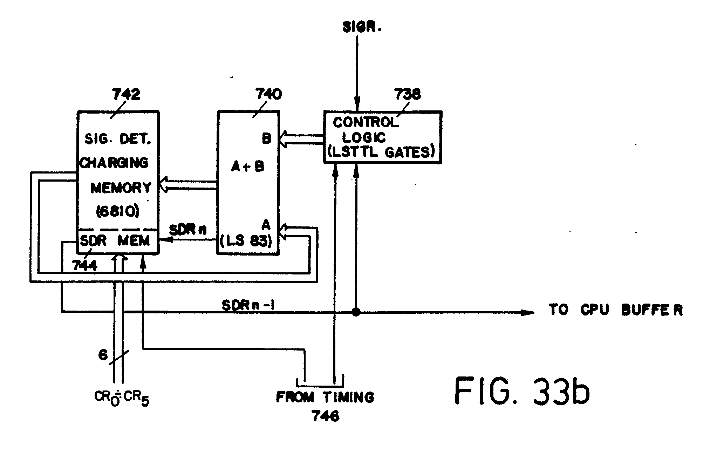

Figure 33 comprises parts 33a, 33b.

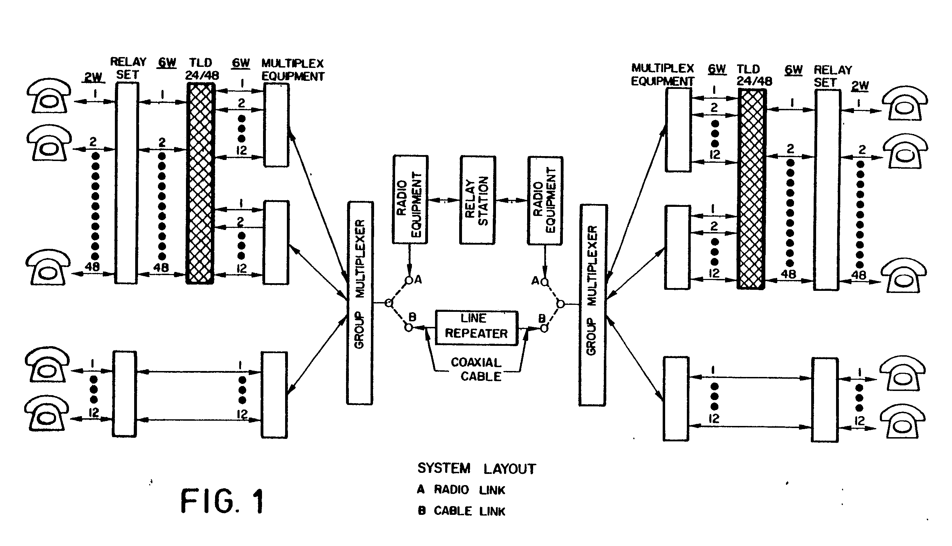

Reference is now made to Fig. 1 which illustrates a communications system including time assignment speech interpolation (TASI) apparatus constructed and operative in accordance with an embodiment of the invention. The communications system comprises a transmission trunk 100 including a microwave radio portion 102 having a pair of transceivers 104 linked by relay apparatus 106. The transmission link may additionally or alternatively comprise a coaxial cable portion 108 which may operate in parallel to the microwave link and which is provided with suitable amplification apparatus 110.

At both ends of the transmission link 100 there are provided Frequency Division Multiplexers 112 and 114 of conventional construction and operation and each of which is connected to a plurality of carrier multiplexers 116 of conventional construction and operation, such as and Z-12 or System 7 of Siemens. The total number of terminals of each of the carrier multiplexers 116 at each end of the transmission link represents the total number of communications channels available over the transmission link.

In the exemplary embodiment illustrated herein, TASI apparatus 120 and 122 is connected to each group of 24 terminals of the carrier multiplexers at respective ends of the link, transmission trunk. Each TASI apparatus of the invention is also connected to a respective relay set 124, 126 which is connected, in turn via suitable exchange equipment (not shown) to 48 active subscriber lines. By "active subscriber line" is meant a line which is currently assigned by exchange equipment to the relay set and which is potentially in use for carrying a conversation. In fact only about 85% of the active subscriber lines are actually carrying conversations at any given time during peak load periods under normal conditions.

It is appreciated that in the illustrated embodiment, TASI apparatus suitable for use with 48 active subscriber lines and 24 communications channels is shown. It is within the scope of the invention to provide larger capacity TASI apparatus or smaller capacity units. It is noted that the unit must have a sufficient number of communications channels available to it to enable it to operate at a 2 to 1 ratio of active subscriber lines to communications channels without an unacceptable incidence of freeze-out, i.e. denying service to a given subscriber line during voice transmission thereby.

Reference is now made to Fig. 2 which is a block diagram illustration of the portion of the TASI apparatus which deals with voice transmissions over communications channels.

For the purposes of background and definition, it is to be understood that a conventional telephone with out of band signalling is coupled to an exchange normally by two wires. Circuitry in the exchange converts the two wire connection to a six wire connection including two wires for passing dialling and billing information, for example, and four wires, two in each direction for carrying voice or other information. It is appreciated that the six wire telephone connection is used only with out of band signalling. In band signalling requires only a four wire connection which carries only audio signals. The apparatus illustrated in Fig. 2 receives only the four voice connections. The signalling channels are dealt with by apparatus illustrated in block diagram form in Figs. 32 and 33.

The term "communication channels" used throughout the specification and claims refers to trunk channels which carry voice communications. Trunk channels which carry only signalling are referred to herein as trunk signalling lines.

It is noted that the TASI apparatus of the present invention need not necessarily be associated with relay sets or with any other particular type of interconnecting or switching circuitry. The term "telephone communication line" will be used hereinafter and in the claims to denote one of the, typically 48, lines which may carry signals, voice, or otherwise, which it is desired to communicate via one of the communication channels. The term "active subscriber line" defined hereinabove refer to a telephone communication line which is associated with the use of a relay set.

Referring now to Fig. 2 there is seen a block diagram illustration of a time assignment speech interpolation communications unit constructed and operative in accordance with an embodiment of the invention. Forty-eight analog input lines are each connected to a relay set (not shown) and are received at respective inputs of 48 audio transformers 10. The outputs of the audio transformers 10 are supplied to AF 133 (National) low pass filters and amplifiers 12, also 48 in number. The outputs of the low pass filters and amplifiers 12 are supplied to 48 MK 5116 coders (Mostek) 14 which convert the audio inputs into 8 bit serial digital signals. The outputs of the 48 coders 14 are supplied, via a switch 16, to a serial to parallel converter 18.

It is a particular feature of the embodiment of the invention illustrated herein that switch 16 is operative to input to the serial to parallel converter either the outputs from coders 14 or digital inputs such as a standard PCM (Pulse Code Modulation) output. Thus the versatility of the time assignment speech interpolation communications unit is greatly increased, enabling it to operate with analog or digital signal transmissions or a combination thereof.

Where digital outputs from standard PCM apparatus such as T1 trunk are received, the received digital signal is supplied to synchronization circuitry 20 and thence to the serial to parallel converter 18. The synchronization circuitry 20 is operative to process the normal 193 bit frame timing such that only the 192 information bits are dealt with by the circuitry that follows the serial to parallel converter, and the additional bit is used to define the signalling bit timing, and is described later in detail.

The circuitry described above, comprising low pass filters and amplifiers 12 and coders 14 will be referred to hereinafter as coder circuitry, it being appreciated that coders 14 and decoders 66 described hereinafter are embodied in a MK5116 CODEC chip.

The output of serial to parallel converter 18 is supplied to a peak detector 22 and to a transmitter delay memory 24, which are illustrated in Fig. 10 which will be described hereinafter. The operation of the transmitter delay memory 24 is entirely digital and provides a delay of 48 ms and supplies an output to a transmitter buffer memory 26, such as a Motorola 6810. The output of transmitter buffer memory 26 is supplied to a parallel to series converter 28, whose output is provided via a switch 30 either to synchronization circuitry 31 or to 24 decoders 32, each embodied in a MK 5116 chip, depending on whether analog or digital signal transmissions are involved.

The output of each decoder is to an AF 134 low pass filter and amplifier 34. The output of each filter and amplifier 34 is supplied via an audio transformer 36 to one of 24 communications channels in the transmission trunk link. The output of synchronization circuitry 31 is supplied as a 193 bit digital output to a digital transmission trunk such as a T1 trunk.

Considering now the received signals from the transmission trunk link received on the 24 communication channels, these are supplied via coder circuitry comprising 24 audio transformers 40. 24 AF 133 lowpass filters and amplifiers 42 and 24 Mk 5116 coders 44, embodied together with decoders 32 in MK 5116 CODEC chips, and via a switch 46 to a serial to parallel converter 48. The output of the serial to parallel converter 48 is supplied to a receiver delay memory 50 (Fig. 12) and thence to a receiver buffer memory 52.

Synchronization circuitry 47 receives a digital input such as standard PCM from the transmission trunk and operates similarly to synchronization circuitry 20. It is noted that switches 30 and 46 may be controlled together with switch 16 such that when digital information is being supplied, the coder and decoder circuitry is bypassed and the signals pass via the synchronization circuitry which deals with the 193'rd bit of the PCM format.

The output of receiver buffer memory 52 is supplied to a parallel to serial converter 56 which also receives an input from blanking logic circuitry 58 which operates in response to an output from a receiver control memory 60. The output of parallel to serial converter 56 is supplied via a switch 62 either to digital outputs such as a standard PCM via synchronization circuitry 64 similar to synchronization circuitry 31, or alternatively to decoder circuitry comprising 48 MK 5116 decoders 66, mentioned above, each followed by an AF 134 low pass filter and amplifier 68 and an audio transformer 70. The outputs of the 48 audio transformers are supplied each to a line of a 48 line analog output which may interface with a relay set.

It is noted that switches 16, 30, 46 and 62 may be independently controlled so as to enable digital transmissions received from a telephone communication line to be transmitted along an analog trunk and vice versa. It is also appreciated that the telephone communication lines and the communication channels may be selectably divided between analog and digital lines, as required by the intended use of the system. The proportion can be changed readily, should use requirements change over time.

The output of peak detector 22 is supplied to one input of a comparator 53 which also receives an input from Expected Echo Arithmetic Logic Unit 55. Unit 55 determines the threshold of comparator 53 in response to the output of the receiver buffer memory 52 which indicates the signal amplitude of the 48 telephone communication lines, and which will be described in detail hereinafter.

The output of comparator 53 is supplied to SPD Arithmetic Logic Unit circuitry 57, which will be described in detail hereinafter. The output of circuitry 57 is supplied to a Central Processing Unit 59, which will be described hereinafter in detail.

The output of the receiver delay memory 50 is supplied to a receiver modem 61, which in turn provides an output to the CPU 59. The receiver modem scans the delay memory 50 to detect received messages in the contents of memory 50 and to transfer the contents thereof to the CPU.

The receiver modem operates in association with a speed up counter 63 which addresses the delay memory 50 during scanning thereof by the receiver modem.

In response to a change in the output of the SPD ALU circuitry 57, the CPU 59 provides control inputs to a transmit control memory 65. Memory 65 contains the data which defines which of the 48 telephone communication lines are coupled to which of the 24 communication channels. This information is defined by the dynamic assignment of communication channels to telephone communication lines and is indicated by an output of the control memory 65 to transmit buffer memory 26, which is selectably read in accordance with the output of the control memory 65.

The CPU also provides control inputs to a transmit modem 67 which indicate the contents of the message to be transmitted as well as the communication channel on which the message is to be transmitted. The message is transmitted by an output of the transmitter modem 67 to parallel-serial converter 28 in accordance with timing signals provided by transmitter timing circuitry 69.

Timing circuitry 69 will be described hereinafter in detail and provides an output to serial to parallel converter 18 and an output to parallel to serial converter 28 in addition to providing timing signals to transmitter modem 67, and providing timing signals to the transmitter delay memory 24 and the transmitter control memory 65 in order to synchronize the operation thereof.

The various elements of the transmitter circuitry described hereinabove will be described hereinafter in greater detail with reference to detailed block diagrams and schematic illustrations.

It is noted that a variety of control functions are assigned to the CPU and appreciated that alternatively these control functions may be carried out by discrete dedicated circuitry. Simplicity of design and economy are achieved by use of the CPU as described herein.

The receiver circuitry will be described hereinafter in greater detail with reference to Fig. 12. Receiver control memory 60 is updated by inputs from the CPU 59 in response to messages received at the modem receiver 61. Receiver timing circuitry 71 provides an address to the receiver control memory 60 for governing the read/write cycle thereof in a sequential manner and also provides outputs to receiver buffer memory 52, receiver delay memory 50, speed up counter 63, parallel to serial converter 56, serial to parallel converter 48 and receiver modem 61, for synchronizing the operation thereof.

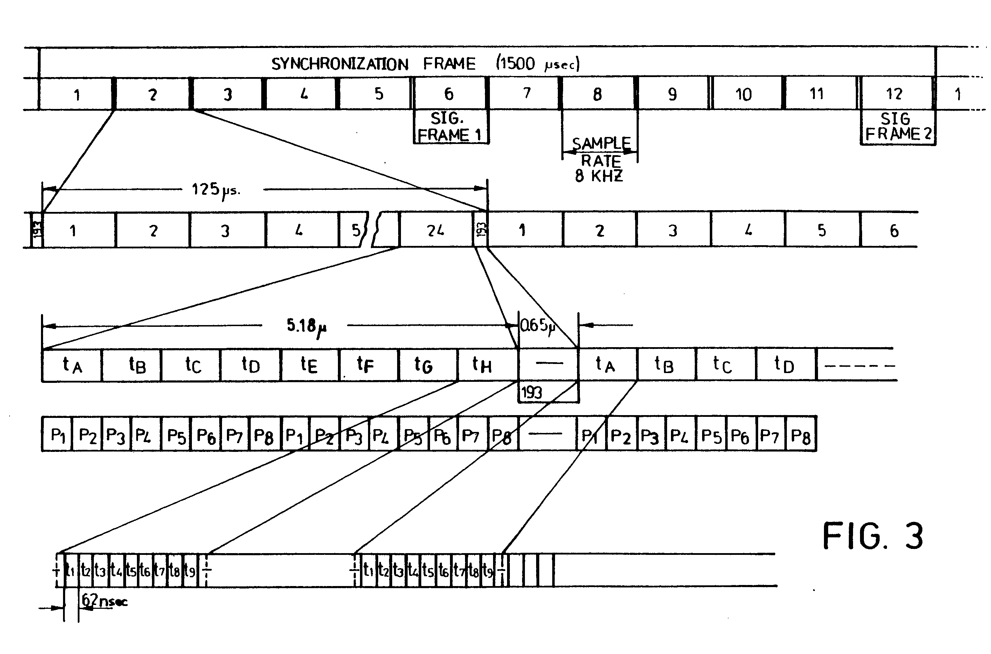

Reference is now made to Fig. 3 which is a diagram illustrating the relationship between the various timing periodicities employed in the embodiment of the invention presently described. Since the apparatus of the invention operates in association with digital or analog transmission trunks, T1 timing, used in digital transmissions is adopted as the timing base of the system, so as to enable straightforward connection to T1 transmission links.

The basic timing frame comprises 193 data bits representing 24 channels , each represented by 8 PCM coded bits and a 193'rd framing bit. As the standard sampling rate is 8 KHz, the duration of each basic timing frame is 125 microseconds. A synchronization frame comprises 12 basic frames and is of duration 1500 microseconds. The 193'rd bits of each basic timing frame indicate the signalling synchronization phase. Signalling information is transmitted during the sixth and 12th basic timing frames of each synchronization frame.

Each data bit is of duration 0.65 microseconds approximately. The duration of each channel data period is 5.18 microseconds, such that the 8 PCM coded bits which it comprises each are of duration 0.65 microseconds. Each channel data period is divided into 8 timing pulses tA—tH each of duration 0.65 microseconds and is also divided into two cycles, each comprising 8 timing pulses each of duration 0.32 microseconds approximately and identified as P1—P8.

Each timing pulse tA—tH incudes 9 timing pulses t1—t9 each of duration 62 nanoseconds.

It will be noted that two independent timing sources are employed in the apparatus of the invention. Both produce pulses of the periodicities described hereinabove. The pulses are distinguished from each other by subscripts T and R which refer to either the transmitter or receiver timing respectively.

Reference is now made to Fig. 4 which is a block diagram of transmitter timing circuitry 69 mentioned in connection with Fig. 2. A phase lock loop 200 receives an oscillator input at 1.544 MHz via a switch 202 from either an oscillator 204 such as a Tadiran OTIS or from an external source such as a T1 digital clock source. The phase lock loop 200 is typically an XR 215 and provides an output to a frequency divided 206, such as an LS 161 whose output is fed back to a second input of the phase lock loop. The phase lock loop thus operates as a frequency synthesizer, producing an output signal of frequency 15.44 MHz which is the basic frequency used in the circuitry.

The output of divider 206 is supplied via an AND gate 208 and an OR gate 210 to a synchronous "192+1 counter" 212, typically comprising a divide by 8 counter 214 and a divide by 24 counter 216 both of which are typically LS 161 chips. The counter 214 provides CLB, CLA and CAO outputs, while counter 216 provides outputs CA1—CA5.

A four input AND gate 218, which receives inputs from Counter 212 provides an output signal every 192nd and 193rd pulse. This output signal is supplied to the SET input of a flip-flop 220, which provides an output to AND gate 208. The output of AND gate 218 is also supplied to a flip-flop 222, whose output is supplied as a reset input to counters 214 and 216.

OR gate 210 also receives an input from an AND gate 224 which receives an input from synchronization circuitry 20 (Fig. 2) when a T1 digital input is received. This connection enables synchronization of the operation of counter 212 with the T1 timing input signals.

The output of the phase-lock loop 200, hereinafter referred to as CL is supplied to a shift register 226 comprising LS 74 and LS 164 chips and which provides t1—t9 timing outputs. The CLC output of AND gate 208 is supplied to a clock generator for codecs 228 which provides TXC and RXC outputs and comprises an LS 164 chip. The CLC, CLB, and CLA outputs are supplied to a decoder 320 such as an LS 138 and which provides timing outputs P1—P8. The CLB, CLA and CAO outputs are supplied to a decoder 232 such as an LS 138 which provides timing outputs tA—tH. The output of flip-flop 222 is supplied as an initiate pulse together with clock pulse CAO to a synchronization pulses generator 234, comprising 3 LS 164 chips and which provides synchronization pulses SYNC 1—SYNC 24. The output of flip-flop 222 will be referred to hereinafter as the "193" pulse.

The synchronization circuitry 20, 47 (input) 31, 64 (output) shown in Fig. 2 will now be described. It is understood that this circuitry is required only when a T1 carrier is connected to the system, and provides the necessary synchronization between the system timing and the external PCM apparatus.

A counter 236 receives the 193 pulse and counts the basic timing frames in cycles of 12. A pair of AND gates 238 and 240 code the 6th and 12th states of the counter to identify signalling frames. A shift register 242 shifts in the 193 bit from each of the 12 basic timing frames and an AND gate 244 decodes the synchronization pattern at the output of shift register 242.

The output of AND gate 244 is coupled to a flip-flop 246 via an AND gate 248 and is also coupled directly to a flip-flop 250. The 193 pulse is supplied as a clock input directly to flip-flop 246 and via an AND gate 252 to flip-flop 250 as a clock input. AND gate 252 multiplies the 193 pulse by the output of AND gate 240.

When the apparatus is in the state of synchronization acquisition, both flip-flops 246 and 250 are reset. When a synchronization pattern appears at the output of shift register 242, flip-flop 246 is set. The synchronization is verified by checking the appearance of the synchronization pattern at the output of shift register 242 at the end of the next cycle of 12 basic timing frames. If during synchronization acquisition, no synchronization pattern appears at the output of shift register 242 during 12 basic timing frames, an additional clock input is provided to AND gate 224 from an AND gate 254 which receives the output of AND gate 240 and the inverted output of flip-flop 246. The additional clock input causes a shift in system timing by one data bit period.

When synchronization is achieved, flip-flop 250 is set and an error counter 256 is preset every basic timing frame via an AND gate 258 which also receives the 193 pulse. When synchronization is lost the preset is terminated and the error counter is incremented by the 193 pulse. When the counter reaches eight error counts it resets flip-flops 246 and 250 and the apparatus returns to a synchronization acquisition state.

The above circuitry is comprised in the synchronization input circuits 20 and 47 of Fig. 2. The synchronization output circuitry additionally comprises a 12/1 multiplexer 260 which has a hard wired input representing a predetermined synchronization pattern, and is addressed by a four bit output from counter 236.

The output of multiplexer 260 is supplied to an input of a 2/1 multiplexer 62 which receives the OUTDATA output from the parallel to serial converter 28 or 56 in Fig. 2). Multiplexer 260 inserts the synchronization pattern bit by bit in the 193rd time slot of the basic timing frame. The output of multiplexer 262 is supplied to an external PCM device.

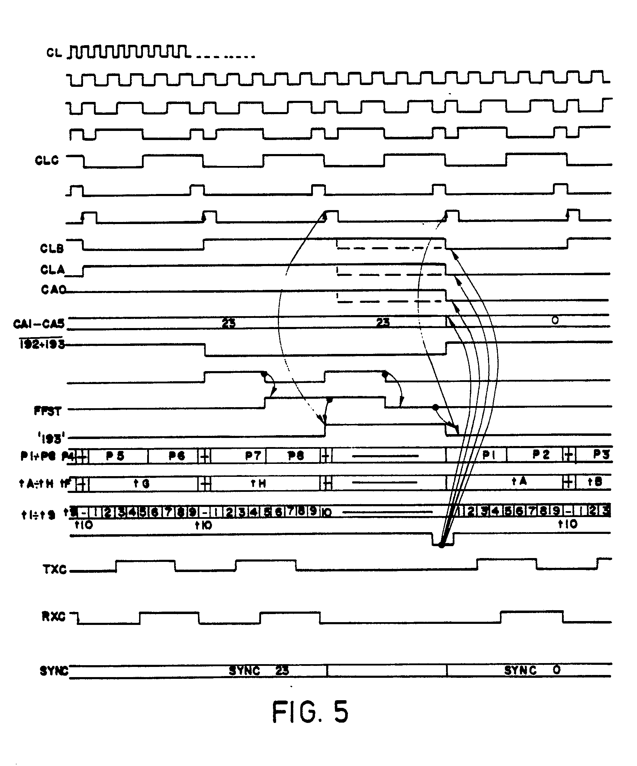

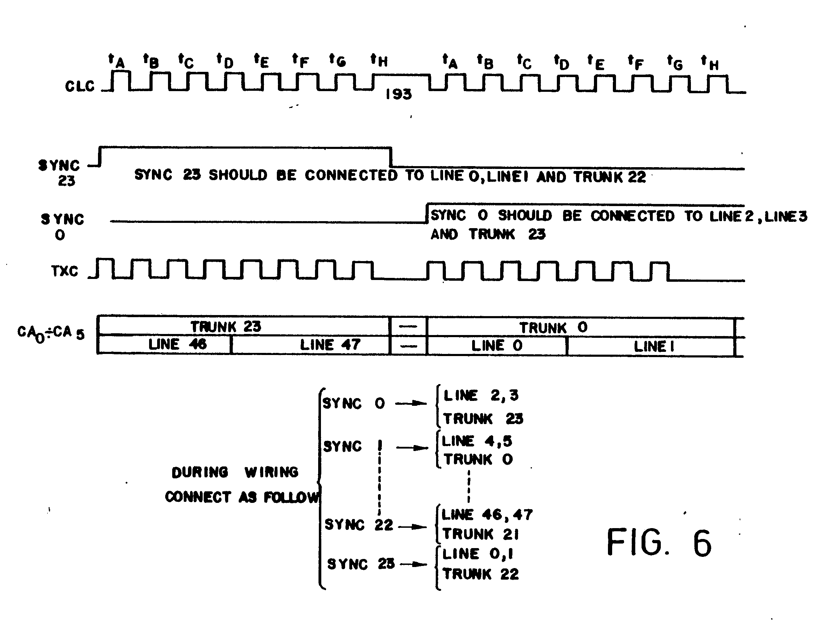

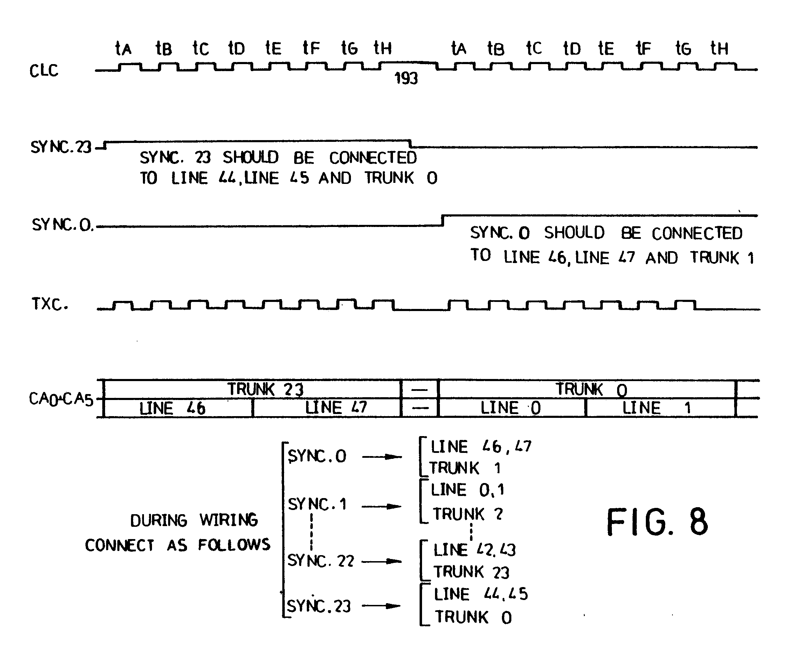

Fig. 5 is a timing diagram of the timing circuitry of Figs. 4 and 8 and will not be described in the text in detail for purposes of conciseness. Fig. 6 is a timing diagram of the interrelationship of the outputs of synchronization pulse generator 234 (Fig. 4). Fig. 7 is a block diagram of receiver timing circuitry which corresponds exactly to the timing circuitry of Fig. 4 and which will not be described here for the sake of conciseness. Fig. 8 is a timing diagram of the interrelationship of the outputs of the synchronization pulse generator shown in Fig. 7.

Reference is now made to Fig. 9 which is a block diagram of the interface circuitry for use with analog transmissions. 48 of these circuits interconnect the apparatus with 48 telephone communication lines and 24 of these circuits interconnect the apparatus with 24 communication channels in the illustrated embodiment.

An audio input from either a telephone communication line or a communication channel is supplied to a protection circuit 75 whose output is supplied to a transformer 77 (10 or 40 in Fig. 2). The center tap of the transformer 77 is connected to the input of a detector 79 which detects a ground potential provided by multiplex equipment external of the apparatus and indicating a busy status. The output of transformer 77 is supplied to an input amplifier 81 for adjusting the signal level at the input to that required by the coder. The output of amplifier 81 is supplied via a low-pass filter 83 to a coder 85 (14 or 44 in Fig. 2), which receives timing and clock inputs from timing circuitry described hereinabove. In response to receipt of a code synchronization signal from the timing circuitry, the coder provides an 8 bit serial channel data output.

Decoder 87 (32 or 66 in Fig. 2) receives 8 bit serial input data from parallel to serial converter 28 or 56 (Fig. 2) and clock and timing inputs from the timing circuitry and provides an analog output to a low pass filter 89. The output of filter 89 is supplied to an output amplifier 91 which receives an input from a noise generator and a 6 dB attenuation command signal from SPD/ALU circuitry 57 (Fig. 2). The output of amplifier 91, being a combination of the input from filter 89 and from the noise generator, is supplied to a transformer 93 (70 or 36 in Fig. 2). The output of transformer 93 is supplied via a protection circuit 95 to the audio output to either a telephone communication line or a communication channel.

A BUSY OUT signal from signalling circuitry is supplied via a buffer 97 to a relay 99. When relay 99 is activated, a BUSY signal is applied to the audio output via the center tap of transformer 93.

Out of band signalling input signals M or E are supplied via an optocoupler 99′ to an input of the signalling circuitry. A buffer 101 receives a signalling output from the signalling circuitry and drives relay 103 which when activated transmits an E or M signal. A regulator 105 supplies reference voltages for the coder and decoder.

Reference is now made to Fig. 10 which illustrates the transmit speech flow apparatus which comprises the serial to parallel converter 18, transmit delay memory 24, transmit buffer memory 26 and parallel to serial converter 28 illustrated in Fig. 2 and described hereinabove.

A pair of serial to parallel converters 111 and 113 each receive via switches 115 and 117 24 digital inputs either from the outputs from coders 14 (Fig. 2) or directly from the T1 output of PCM apparatus, via synchronization circuitry 20. The serial to parallel converters 111 and 113 are each typically embodied in a single LS 164 chip, and are arranged to receive alternatively numbered telephone communication line outputs. Thus, while multiplex information from lines 1, 3, 5 etc. is received at converter 111, multiplex information from lines 2, 4, 6, etc. is received at converter 113.

The two serial to parallel converters 111 and 113 operate on the same time base. The output of converter 111 is supplied directly to a 2/1 multiplexer 119 while the output of converter 113 is supplied to the multiplexer 119 via a latch 121 such as a LS 374 which holds the data for an additional half cycle in order to enable the multiplexer to pass the data alternatively from converter 111 and 113. The output of multiplexer 119 is held temporarily in a latch 123, such as an LS 374. The output of latch 123 is supplied to peak detector 22 (Fig. 2) and to transmit delay memory 125.

The data transfer rate at the outputs of converters 111 and 113 is an 8 bit parallel output every 5.18 microseconds per converter. Thus the rate at which data enters the delay memory is an 8 bit parallel output every 2.59 microseconds.

The transmit delay memory typically comprises 16 Mostek 4116 chips having a capacity of 384 bytes for each of the 48 telephone communication lines and thus providing a delay of $384 \cdot 125$ microseconds delay per byte at 8 KHz sampling rate=48 msec. Counters 127 and 129 provide addressing for the delay memory 125. Counter 127 provides the identification of the telephone communication lines and counter 129 provides sequencing through the bytes of the delay memory.

The basic operation of the delay memory is reading out to latch 131 the oldest sample and inserting the most recently received sample in the memory, from latch 123. Delay memory 24 (Fig. 2) comprises delay memory 125, counters 127 and 129, and latch 131.

The output of latch 131 is supplied to a buffer memory 133, typically a Motorola 6810 and having a 48 byte capacity. The function of the buffer memory is to accommodate the cyclically operative decoders 32 (Fig. 2) provided at the output of the circuitry to interface with analog transmission apparatus. The buffer memory 133 operates cyclically on its WRITE cycle corresponding to receipt of information from 48 telephone communication lines being controlled by the CAT 0—CAT 5 outputs from counter 127. On its READ cycle, the buffer memory is controlled by the CMT 0—CMT 5 control memory outputs which run cyclically along 24 communication channels but randomly with respect to the control memory contents. This operation effects switching of 24 out of the 48 telephone communication lines onto the 24 communication channels.

In the case of equipment malfunction a command for 1—1 operation of the buffer memory is generated in the CPU causing the same 24 telephone communication lines to be continuously connected to the 24 communication channels. Multiplexer 135 controls the address to the buffer memory and thereby determines its mode of operation.

The output of buffer memory 133 is supplied to a 2/1 multiplexer 137 such as an LS 157. Multiplexer 137 is operative in response to control signals from modem transmitter 67 (Fig. 2) to transmit via a latch 139, such as an LS 374, either the output of buffer memory 133 or alternatively message samples from the modem transmitter to parallel to serial converter 141 (28 in Fig. 2). The output of converter 141 is supplied via a switch 143 (13 in Fig. 2) to the 24 communication channels or to T1 digital apparatus.

Fig. 11 is a detailed timing diagram of the circuitry illustrated in Fig. 10.

Reference is now made to Fig. 12 which illustrates the receive speech flow apparatus which comprises serial to parallel converter 48, RX delay memory 50, speed up counter 63, RX buffer memory 52, parallel to serial converter 56 and blanking logic 58. Twenty-four communication channels are connected via a switch 151 to a serial to parallel converter 153, such as an LS 164. If communication channels carry digital data such as the output of PCM apparatus, synchronization circuitry 47 (Fig. 2) is interposed before switch 151. If analog signals are carried by the communication channels, the outputs of coders 44 (Fig. 2) are connected to the terminals of switch 151.

The output of converter 153 is supplied via a latch 155 such as an LS 374 to a receiver delay memory 157 comprising 8 4116 Mostek chips having a 16K byte capacity and providing a 24 millisecond delay for each of 24 communication channels. The operation of memory 157 is controlled by the output of a multiplexer 159 such as an LS 153, having two inputs. One input is the output of a 13 bit CAR counter 161, such as an LS 161 which sequences the delay memory through its cyclic read/write operations, as described hereinabove in connection with the transmit delay memory. The second input is the combined output of a sample counter 163 such as an LS 161 and channel counter 165, such as an LS 161, which together function as speed up counter 63 of Fig. 2.

The function of the speed up counter is to scan rapidly the contents of the receiver delay memory 157 for each channel to detect messages which may be contained therein. Multiplexer 159 is operative to permit addressing by the speed up counter between read and write cycles controlled by the CAR counter 161. The multiplexer 159 and the read/write operation of the delay memory 157 are controlled by signals from timing circuitry 166.

The sample counter 163 is incremented by an OR gate 167 which receives CLB and CLE from the timing circuitry 71 (Fig. 2) and modem receiver 61 (Fig. 2). The CLB input increments the sample counter for scanning within a given channel, while the CLE input increments the sample counter by two at the end of each channel scan. Increment logic 169 provides increment inputs to channel counter 165 and receives the RM output and the SYNC DECISION outputs from modem receiver 61 (Fig. 2). It produces a single increment pulse at the end of each channel scan when no time correction is required, two increment pulses at the end of each channel scan when a forward time correction is required, and no increment pulses at the end of each channel scan when a reverse time correction is required. Thus it may be appreciated that timing corrections are here carried out either by skipping a channel scan or scanning a channel twice.

The output of receiver delay memory 157 is supplied via a latch 171 to a receiver buffer memory 173 and via a latch 175 and an expander 177 to modem receiver 61 (Fig. 2). The expander converts the logarithmically coded signal samples to a linear code.

The input to buffer memory 173 comprises in addition to the output of latch 171, the output of a three state gate 179, which inserts a code "0" for blanking purposes. A multiplexer 181, such as an LS 365, provides addressing to the buffer memory 173. It has three inputs, as follows: a six bit input CAR 0—CAR 5 from the CAR counter 161, for memory readout; CAR 1—CAR 5 from CAR counter 161 for memory write in in the 1:1 operation mode; and CMR 0—CMR 5 from the RX control memory and blank logic 183 (60, 58 respectively) for selective write.

The operational sequence of the buffer memory 173 is as follows: The buffer memory first sequentially reads out in the sequence of the 48 telephone communication lines in response to receipt of the output from counter 161. Since the buffer memory contains information for only 24 of the 48 telephone communication lines, the blank logic, blank logic 183 together with gate 179 writes in a code zero for those subscribers for which buffer memory 173 contains no information, by means of an BLRX output.

At the same time the contents of the receive buffer memory 173 are updated sequentially according to the 24 communication channels and randomly into the buffer memory, in response to addresses received from the CAR counter 161. The output of buffer memory 173 is supplied to latch 185 for transmission to echo ALU circuitry 55 (Fig. 2). The output of buffer memory 173 is supplied to a pair of parallel to serial converters 187 and 189 via respective latches 191 and 193. The timing of parallel to serial converters 187 and 189 is the same but the output to the converters from the buffer memory takes place in an alternating sequence. Thus the latches 191 and 193 synchronize the parallel data outputs.

The serial outputs of converters 187 and 189 are supplied via switches 195 and 197 either to decoders 66 (Fig. 2) for analog telephone communication lines or via synchronization circuitry 64 (Fig. 2) to PCM apparatus.

Fig. 13 is a detailed timing diagram of the circuitry described in Fig. 12.

The signal detection circuitry will now be described with reference to Figs. 14—16. The operation of the signal detection circuitry may be described in summary form as the comparison of signals received from telephone communication lines with a minimum threshold plus an added variable threshold provided for echo suppression. Should the signal received from the telephone communication lines exceed this threshold, it is passed along to integration circuitry which provides a desired amount of hangover and establishes a minimum signal duration for line assignment.

Reference is now made to Fig. 14 which illustrates in block diagram form the signal detection circuitry in an embodiment of the present invention. The output of serial to parallel converter 18 is supplied to an expander 400 which provides an 8-bit linear parallel output to a peak detector 402. The structure of the peak detector will be described hereinafter in detail. Its function is to preserve the highest peak level and it is reset every 5 ms to enable it to drop to the then current signal level. Counters 404 provide inputs to the peak detector 402 for resetting thereof.

The output of peak detector 402 is supplied to comparator circuitry 53. Comparator circuitry 53 also receives an input signal from expected echo suppression circuitry 55 and a minimum threshold control signal THmin from threshold memory and control circuitry 410.

Echo suppression circuitry 55 comprises an expander 412 which receives signal inputs from the output of receiver buffer memory 52 and provides an 8 bit linear parallel output to a peak detector 414. Peak detector 414 is operative to hold a peak level until 50 ms following cessation of the signal and is also operative to ignore the first 4 ms of a received signal, in order to provide protection against noise spikes.

Peak detector 414 receives control inputs from read-write control circuitry 416 which in turn receives control inputs from counter circuitry 418 which provides the timing for the 50 ms hangover and the 4 ms suppression. It is noted that the hangover and suppression times given here are those considered preferred and may be adjusted.

The output of peak detector 414 is supplied to comparator 53 via variable attenuation circuits 420 and 422, typically a hybrid loss compensator and a 6db Hysteresis insertion loss circuit respectively. These circuits will be described in detail as to structure and function hereinafter.

The output of comparator 53 is supplied to SPD Arithmetic Logic Unit circuitry 57. Circuitry 57 comprises ALU control and timing circuitry 424 which receives the comparator output and which supplies output signals to switches 426 and to an adder 428. A SPD-ALU memory 430 is associated with the adder 428. Circuitry 57 is operative in response to each indication of signal presence to add a predetermined amount to a memory until a predetermined threshold is reached and in response to each indication of signal absence to subtract a smaller amount from the memory. It establishes a minimum signal duration for line assignment and provides a variable amount of line assignment hangover during signal absence and displays certain hysteresis characteristics. The structure and function of circuitry 57 will be described in detail hereinafter.

Reference is now made to Fig. 15 which is a simplified schematic illustration of peak detector circuitry 22 and comparator circuitry 53 shown in Fig. 2 and which includes elements 400, 402, 404, 53 and 410 of Fig. 14. Expander 400 receives the output from the serial to parallel converter 18 (Fig. 2) and provides an output to a memory 430 via an inverter 432. Expander 400 comprises 4 LS 151 and 2 LS 153 multiplexers and associated control logic.

Memory 430 comprises an 82SO9 chip of Signetics which receives the output of expander 400 as well as a six-bit address input from timing circuitry (CA 0—CA 5) which indicates which of the 48 telephone communication lines is presently connected to the memory. The output of expander 400 is also supplied to a comparator 434, typically comprising two LS 85 comparator chips. Comparator 434 also receives the output of memory 430 and thus compares the signal level currently received with the peak signal level received since the last 5 ms reset. If the current signal level is higher than that in the memory, comparator 434 provides an output signal to an AND gate 436 which provides a WRITE signal via a NOR gate 438 to the $\overline{WE}$ input of memory 430 at a time determined by a timing signal P1 · T5 supplied by the timing circuitry to AND gate 436. In response to this WRITE signal the current sample level is intered into the memory, and becomes the new peak level. If the current signal level does not exceed that in the memory, no WRITE signal is generated.

Reset counters 404 comprise a LS 191 up-down counter 440 and a CA 7 timing signal from the timing circuitry having a 500 microsecond periodicity. Counter 440 is controlled by toggle switches (not shown) to provide an output every 5 msecs. The MIN output of counter 440 is connected via an inverter 442 to the preset input of a Flip-Flop 444, typically an LS 74 chip. The $\overline{Q}$ output of Flip-Flop 444 is coupled to the LD input of counter 440 and the Q output of Flip-Flop 444 is supplied to an input of an AND gate 446 which also receives a $\overline{CA\,5}$ timing signal from the timing circuitry. AND gate 446 supplies an output to the clock input of a Flip-Flop 448. The $\overline{Q}$ output of Flip-Flop 448 is supplied to its own D input and to the Clock input of Flip-Flop 444. The Q output of Flip-Flop 448 is supplied to an AND gate 450 which also receives a timing signal P1 · T5 timing signal. The output of AND gate 450 is supplied via NOR gate 438 to the $\overline{WE}$ input of memory 430.

It may be understood that output of Flip Flop 448 is provided for one sampling cycle following each 5 ms reset to AND gate 450. The P1 · T5 timing signal sequences through the 48 telephone communications lines, such that the write signal is provided for each of the 48 telephone communications lines one time immediately following the 5 ms reset, independent of the operation of comparator 434.

The output of memory 430 is supplied in parallel to two comparator circuits, 452 and 454, each comprising two LS 85 comparators. Comparator 452 compares the output of memory 430 with the output of echo circuitry 55 (RX 0—RX 7) and provides an output to a NAND gate 456 if the output of memory 430 exceeds the output of circuitry 55.

Comparator 454 compares the output of memory 430 with the output of threshold memory and control circuitry 410. Threshold memory and control circuitry 410 comprises an 82SO9 memory 460 which stores minimum threshold values for each of the 48 telephone communication lines in response to inputs from the CPU. The address input to memory 460 receives an input from a 2:1 multiplexer 462. This input is either the address of the telephone communication line currently being received by the peak detector 402 indicated by timing signals CA 0—CA 5 or another telephone communication line address specified by the CPU, depending on the select signal provided at the select input to the multiplexer.

The output of memory 460 is supplied to a latch 464 leading to comparator 454. The latch 464 is clocked by timing signals P1 · T5. The memory output is also supplied to a tristate latch 466 which interfaces with the CPU data bus, for readout from memory 460 to the CPU. It is to be understood here that memory 460 is under the control of the detector circuitry and is also under control of the CPU. Circuitry to be described immediately hereinafter is provided for governing the priority between the sequenced activities of the detector circuitry and the random activities of the CPU, so as not to interfere with the activities of the detector circuitry. The detector circuitry may instruct the memory to read out via latch 464 and the CPU may instruct the memory to write or to read out via latch 466.

A write command from the CPU is supplied to an input of a NOR gate 468. A chip select input $\overline{CS}$ is supplied from the CPU to NOR gate 468 and a NOR gate 470. A DBIN input from the CPU, representing a read request is supplied via an inverter 472 to a second input of NOR gate 470. The outputs of NOR gates 468 and 470 are routed to the clock input of a Flip-Flop 474 via an OR gate 476. The $\overline{Q}$ output of Flip-Flop 474 is supplied to an input of a NOR gate 478 which receives a P1 timing signal at its second input. The output of NOR gate 478 to the data input of a Flip-Flop 480 which receives a 60 ns clock input. The $\overline{Q}$ output of Flip-Flop 480 is supplied to an input of an AND gate 482 which also receives a P1 timing input from the transmitter timing circuitry. The output of AND gate 482 provides the select signal to multiplexer 462 insuring that the multiplexer will pass the CPU-determined address to the memory 460 at all times except for a period of time preceding and including receipt of the detector circuitry READ command P1 · T5.

The $\overline{Q}$ output of Flip-Flop 480 is also supplied to the CLEAR input of Flip-Flop 474. The Q output of Flip-Flop 480 is supplied to a first input of a NAND gate 484 which also receives the output of NOR gate 468. The output of NAND gate 484 supplies a WRITE signal to memory 460 at its $\overline{WE}$ input. The Q output of Flip-Flop 480 is also supplied to an input of an AND gate 486 which also receives the output of NOR gate 470. The output of NOR gate 470 is also supplied via an inverter 488 to the output control of tristate latch 466. The clock input to latch 466 is supplied by the output of AND gate 486.

Comparator 454 provides an output to an inverter 490. The output of inverter 490 provides a signal when the signal in memory 430 is greater than or equal to the minimum threshold level indicated by the output of latch 464. The output of inverter 490 is supplied to a NAND gate 456. The output of NAND gate 456 is a $\overline{COMP}$ signal which is supplied to the ALU control and timing circuitry 424. This signal is low only when the contents of the memory 430 are equal to or greater than the minimum threshold established at comparator 454 and greater than the expected echo threshold established at comparator 452.

The output of NAND gate 456 is supplied to an AND gate 492 which also receives the output of inverter 490. AND gate 492 provides an output when the contents of memory 430 are greater than the minimum threshold but do not exceed the expected echo threshold. A flip-flop 494 stores the output of AND gate 492 and is clocked by the output of an AND gate 496 which receives timing inputs t7 and P5. The Q output of the flip-flop 494 is supplied to the ALU control and timing circuitry 424 for indicating whether echo suppression is taking place.

Circuitry for determining whether the failure to detect a signal results from echo suppression of extended duration is provided by an adder 498 which adds either one or zero to a memory output (not shown) in response to the presence of an echo signal at each sample. The output of the adder is supplied to a latch 500 which in turn supplies the new total to the memory. When the memory reaches a predetermined threshold an AND gate 502 which receives the memory outputs (M1—M5) provides an output signal which terminates further adding and also provides an output indication to the CPU indicating extended duration echo suppression. The latch and thereby the memory is reset to zero in response to signal detection. The input to the adder for addition is connected via an AND gate 504 which receives the ECHO signal and also receives, via an inverter 506 the output from AND gate 502.

Reference is now made to Fig. 16 which is a detailed block diagram-simplified schematic illustration of the expected echo suppression circuitry 55. An 8-bit parallel signal (R0—R7) from the buffer memory 52 is supplied to expander 412 which is identical to expander 400 and represents the level of the received signal. The output of expander 412 is supplied to the A input of a comparator 510 comprises of a pair of LS 85 chips, and to a memory 512 such as a 82SO9 chip via a 2:1 multiplexer 514, such as a pair of LS 157 chips. Alternatively supplied to memory 512 via multiplexer 514 is a signal representing an average noise level less than the minimum threshold level for signal detection, which signal may be zero, and which signal is applied to the memory by the multiplexer during the reset of the peak detector.

The output of memory 512 is supplied via an inverter 516 to the B input of comparator 510. Comparator 510 provides an output when the received signal level at its A input exceeds the level stored in memory 512 which represents the peak value of the currently received signal sensed so far.

The output of comparator 510 is supplied to an input of an OR gate 518 and is one of the factors determining whether a WRITE signal will be generated at memory 512, for introducing a new peak value into the memory.

A memory 520, such as a 82SO9 chip serves as 48 individual individual counters, one for each of the 48 telephone communication channels, and in association with an adder 522 used in a subtracting mode, counts both the 4 ms suppression period at the onset of signal detection and the 50 ms hangover time following the termination of signal detection. A comparator 524 receives at its A input the output from expander 412 and receives at its B input a TH min signal which determines the minimum signal threshold for detection.

Comparator 524 provides an output whenever the signal level exceeds the minimum threshold. The comparator output is supplied to a control logic network 526 which is associated with the select input to a 4:1 multiplexer 528 which selects one of four data inputs to memory 520. Prior to receipt of a signal exceeding TH min the multiplexer 528 provides zeros on the eight least significant data inputs to memory 520, which comprise the counter portion of the memory. The most significant bit (MSB) which serves as a status bit is set to one.

The first time that the output of comparator 524 indicates receipt of a signal greater than TH min, following reset of memory 512, the multiplexer 528 supplies to the eight least significant data bits, hereinafter termed memory counter bits, a data input specified as by toggle switches, (not shown), which will result in a memory countdown of 4 ms. The state of the MSB is determined by a 2:1 multiplexer 530 whose output is routed via a multiplexer 528. During the 4 ms memory countdown the MSB is zero.

The $\overline{WE}$ write input to memory 520 receives signals via a NAND gate 532 from the output of a flip-flop 534. NAND gate 532 also receives a timing signal which sequences at the sample rate for the telepone communication lines, this signal being provided by the receiver timing circuitry. Flip-flop 534 changes state at the end of each complete cycle of sampling 48 communication lines and as a result a write cycle is produced for each telephone communication line, every second sampling cycle.

As soon as the 4 ms data input is entered into the memory by the WRITE signals to the $\overline{WE}$ input, the memory 520 and associated circuitry begins operation in a countdown mode. Hereinafter and until the memory reaches zero, the multiplexer 528 supplies memory counter bits which represent the current contents of the memory minus one. The multiplexer 528 receives inputs from adder 522, operating in a subtraction mode via an inverter 536. The adder 522 receives as its inputs the eight least significant output bits from memory 520. The MSB remains zero. During the entire 4 ms period operation of the peak detector memory 512 is disabled.

When the output of memory 520 reaches zero, as detected by a conventional zero detector 538, typically comprising four logic gates, multiplexer 528 again passes on to the memory counter bits the values for a 4 ms countdown. In this case, however, the MSB is set to one rather than to zero, as specified by multiplexer 530. Hereinafter, every time that the output of comparator 524 indicates a received signal greater than TH min, multiplexer 528 supplies memory counter bits corresponding to a 50 ms countdown, as set by toggle switches, (not shown) for example. The MSB remains at one. Alternatively, each time that the comparator 524 indicates receipt of a signal not exceeding the minimum threshold, multiplexer 528 supplies to the memory counter bits the output of adder 522, thereby causing the memory 520 to count down by one.

It is appreciated that in the manner described hereinabove, the absence of a signal exceeding TH min during a period of 50 consecutive milliseconds causes the counter memory to count down to zero. At this point, the peak detector memory 512 is set to the noise level, the MSB is set to one and the memory has returned to its initial state and is ready to receive a new signal and to begin the 4 ms suppression. Until memory 520 reaches zero, WRITE signals to memory 512 are enabled and the peak detector is operational. The 50 ms countdown provides the desired hangover for peak detector operation.

It is to be noted that in the event that no signal exceeding TH min is received following the 4 ms suppression then the hangover time will be 4 ms instead of 50 ms.

Control logic network 526 comprises an AND gate 540 which receives the output of comparator 524 and the MSB of the counter memory 520 output and which provides an output to a NOR gate 542. NOR gate 542 also receives an input from a second AND gate 544. AND gate 544 receives an input from the output of zero detector 538 and also receives the MSB from memory 520 via an inverter 546. The output of NOR gate 542 is supplied to the SELECT 2 input of multiplexer 528 via an OR gate 548. The SELECT 1 input of multiplexer 528 is provided by the output of an OR gate 550 which receives an input from the output of zero detector 538. Both OR gates 458 and 550 receive a system SYNC signal, to initialize memory 512 to the noise level.

The output of peak detector memory 512 is also supplied via inverter 516 to the inputs of a latch 552, typically an LS 175 chip. Latch 552 receives a clock input from the output of a NOR gate 554. The clock of the latch 552 is controlled by the transmitter timing circuitry which determines the inputs to NOR gate 554. This is required because the outputs of latch 552 are utilized by the SPD circuitry which operates on transmitter timing, in contrast to the echo circuitry which operates predominantly on receiver timing. For the same reason, when information is entered into latch 552 the address determined by the transmitter timing circuitry must be presented to the address lines of memory 512. At all other times the address determined by the receiver timing is presented to the address lines of memory 512. A 2:1 multiplexer 556 comprising a pair of LS 157 chips selects between the two addresses in response to a select signal provided by the output of a NOR gate 558.

In order to give priority to the transmitter timing over the receiver timing in addressing and also to delay the provision of a WRITE signal to memory 512 in the event of simultaneous requests for WRITE and READ thereto, a circuit is provided comprising a pair of flip flips 560 and 562 and an AND gate 564. The clock input to flip-flop 560 representing a write request is supplied from the output of an AND gate 566 which receives as its inputs the output of OR gate 518, the MSB of memory 520 and a receiver timing signal which occurs once per telephone communication line sample. The Q output of flip-flop 560 is supplied to an input of AND gate 564, which also receives an input from $\overline{P4}$, a transmitter timing signal. The output of AND gate 564 is supplied to the D input of flip-flop 562 which receives a clock input of 65 ns periodicity. The $\overline{Q}$ output of flip-flop 562 provides a WRITE signal to the $\overline{WE}$ input of memory 512. The $\overline{Q}$ output is also supplied to the CLEAR input of flip-flop 560.

The Q output of flip-flop 562 is supplied to one input of NOR gate 558 which also receives the $\overline{P4}$ transmitter timing signal. An AND gate 568 receives as its inputs the MSB of memory 520 and the output of zero detector 538. The output of AND gate 568 controls the SELECT input of multiplexer 514, and also provides the second input to OR gate 518.

The outputs of latch 552 are provided to a hybrid loss compensator 420 comprising an adder 570 formed of 2 LS 83 chips. The inputs to adder 570 are received via a pair of selectable plug in jumper sets 572 and 574 which provide desired amounts of attenuation. This selectable attenuation factor is provided to compensate for inconsistencies in loss characteristics found in the hybrid circuits found in telephone interface circuitry.

The outputs of adder 570 are supplied to hysteresis insertion loss circuitry 422 comprising a 2:1 multiplexer 576, comprising a pair of LS 157 chips, both directly and via a divide by two connection 578. The outputs of multiplexer 576 are supplied to B inputs of comparator 452 located in the SPD circuitry.

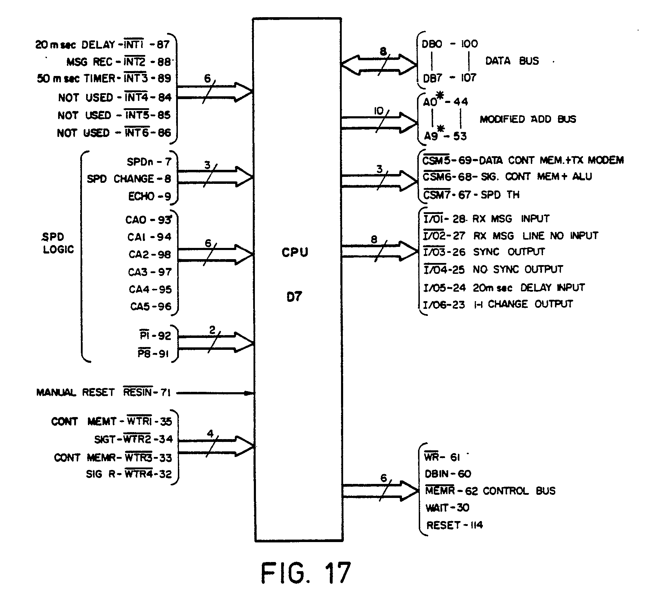

Reference is now made to Fig. 17 which is a function diagram of the CPU 59. The heart of the CPU is a conventional Intel 8080 microprocessor associated with 3K bytes of program, and 1K of RAM workspace. It is appreciated that the CPU is embodied in the preferred embodiment of the invention for purposes of design simplicity and economy and may be replaced in an alternative embodiment of the invention by conventional logic circuitry.

The CPU receives interrupt inputs INT 1—INT 3 from blank logic 58, receive modem 61 and timing circuit 69 respectively. There is also supplied to the CPU SPD data inputs CA 0—CA 5 which indicate the number of the telephone communication line being received, $SPD_n$ status bit; SPD change bit; and ECHO bit. Timing signals P1 and P8 control the entry of the SPD data into the CPU.

The CPU also receives a manual reset signal RESIN from the front panel and 4 wait signals WTR 1—WTR 4 from the following sources respectively: control memory 65, signalling transmitter control circuitry 714, control memory receive 60 and signalling receiver control circuitry 746.

The CPU provides the following outputs: DB 0—DB 7 bidirectional data bus, A0—A9 address bus, CSM 5—CSM 7 memory signals to the following elements:

CSM 5 to control memory 65, control memory 60 and modem transmitter 67;

CSM 6 to signalling control circuitry 714 and 746.

CSM 7 to SPD threshold memory 410.

The CPU also provides input output commands I/O 1—I/O 6 to the following elements:

I/O 1 to the modem receiver 61;

I/O 4

I/O 5 to blank logic 58;

I/O 6 to control memories 60 and 65 (1:1 command).

In addition the CPU provides a control bus comprising the following control signals:

WR—write

DBIN Data Bus Input Pulse

MEMR Memory Read Command

WAIT wait acknowledge

RESET reset pulse for initialization.

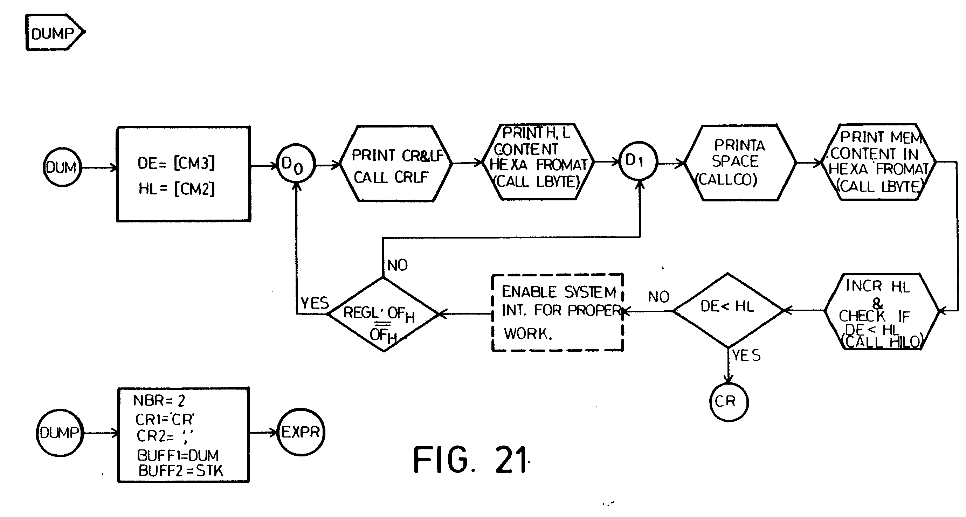

Fig. 18 is a flowchart illustrating the message interrupt function of the CPU. Figs. 19—22 are flowcharts illustrating the monitor function of the CPU. Fig. 23 is a flow-chart illustrating the 50 millisecond interrupt cycle. Fig. 24 is a flow chart of the acknowledge subroutine. Fig. 25 is an illustration in flow chart form of the system synchronization procedure. Fig. 26 is a flowchart illustrating the synchronization routine.

Fg. 27 is flow chart of the main routine, summarizing operation of the TASI apparatus constructed and operative in accordance with a preferred embodiment of the present invention. At A, the system inquires whether there is a free communication channel, if the answer is YES, the system inquires whether there are any active subscriber lines waiting for an available communication channel. If there are no waiting active subscriber lines, the system waits until there is an active subscriber line which requires assignment to a communication channel, i.e. an active subscriber line on which voice is detected. To do this, the system at B inquires whether there is any change in the SPD of the various active subscriber lines. If the SPD change is termination of speech, the system then checks if the communications channel is required by another active subscriber line. If it is not, the active subscriber line which had been connected to the communications channel remains connected thereto for the time being. If voice is again detected on that active subscriber line while it is still connected, no further assignment is required.

If however the active subscriber line has in the mean time been disconnected from the communications channel, and if a communications channel is available, the assignment takes place beginning at C.

If, on the other hand, no communication channel is available when voice is detected on an active subscriber line, the line is put in a queue indicated at D. This queue normally represents the lines that are frozen out.

It is an additional feature of the circuitry described herein that in the event that due to long term conversations messages are not sent for a relatively long period of time, a message whose purpose is to maintain synchronization between the TASI installations on the opposite ends of the communication channels is transmitted.

Reference is now made to Fig. 28 which is a detailed block diagram of the transmit control memory 65 illustrated in Fig. 2.

Transmit control memory 65 receives from the CPU assignment information indicating which of the 48 telephone communication lines is to be matched with each of the 24 communication channels. This information is randomly updated by the CPU along the CPU bus. The readout of this information is done cyclically and sequentially according to the order of the 24 communication channels in real time as the assignment is taking place.

The heart of the control memory is a 6810 chip 75 which contains 24 bytes, each of which contains information referring to one of the 48 telephone communication lines. Control memory chip 75 is addressed via an LS 365 multiplexer 77, which receives two alternative address inputs, CAT 1—CAT 5 from timing circuitry 69 which sequences the control memory serially through the 24 bytes, and address inputs from the CPU address bus, which indicate CPU interaction with the control memory.

Since the CPU operates asynchronously, timing and control logic circuitry 79 is provided for providing a WTR 1 signal to the CPU instructing it to wait until the CAT 1—CAT 5 addressing is completed. In practice, eight time slots tAT—tHT are provided and during the first three of these, the control memory is engaged in its "routine operations" in response to CAT 1—CAT 5 addressing. During the next five time slots of each sample, the control memory is free for interaction with the CPU.

In response to each address indicated by CAT 1—CAT 5, the control memory provides an 8 bit output, six bits of which are supplied to an LS 174 latch 81, which supplies them as signals CMT 0—CMT 5 in response to timing signals indicating time tAT—t8T. These signals are supplied to the buffer memory 26 (Fig. 2) and to a tristate buffer 83 such as an 81 LS 244. The most significant bit is supplied to an LS 74 latch 85 and is supplied to the buffer memory and the tristate buffer 81 as a B signal and the next most significant bit is supplied to an LS 74 latch 87 and is supplied to the buffer memory and the tristate buffer 81 as an M signal. The B and M signals are used and updated in response to signals supplied to respective latches 85 and 87 by the TX Modem 67 during the tBT time slot.

During time slot tCT immediately following time slot tBT the entire 8 bits, as updated by the TX modem are fed back to the control memory via tristate buffer 83 in response to timing signal tcT received at buffer 83.

Interface with the CPU is via a bidirectional tristate buffer 89, such as LS 244 chips which operate during the tDT—tHT time slots.

Reference is now made to Fig. 29 which illustrates the receiver control memory 60 and blank logic 58 of Fig. 2. The principal function of the receiver (RX) control memory is to cyclically read out its contents to the receiver buffer memory. It has an additional function, that of blanking the output to the buffer memory upon detection of a message in the received signal, so as to prevent the message beeps being heard by the subscriber.

The contents of the receive control memory is updated by the CPU asynchronously in response to received assignment messages.

Similarly to the transmitter control memory described above, the heart of the receiver control memory is a 6810 memory chip 91 which receives a six bit address via a LS 365 multiplexer 93 which receives three alternative address inputs: CAR 1—CAR 5 for sequencing through the addresses cyclically during normal operation; CB 1—CB 5 for presetting blanking counter during message recept and the CPU address bus. Timing and control logic circuitry 95 coordinates the operation of multiplexer 93 and memory 91 and provides a WTR 3 wait signal to the CPU when the control memory is engaged in routine sequencing operations.

The most significant bit of the output of control memory 91 is supplied to a BLRX latch 97, while the six least significant bits are supplied to a latch 99 which outputs its contents to the RX buffer memory address bus in response to a timing signal indicating tB · t8, i.e. the last eight of the tBR time slot.

The output of the BLRX latch 97, hereinafter referred to as the BLRX signal is operative to blank the output of RX buffer memory 52 in order to prevent the message being passed on to the audio output to the telephone communication line. Upon receipt of a message by the RX Modem 61 (Fig. 2) multiplexer 93 of the control memory provides the address of the communication channel which received the message and the control memory content at that address is changed to all ones. Thus the most significant bit of the content of control memory 91, which is the input to BLRX latch 97 is 1, and BLRX becomes 1 for 25 milliseconds which is the length of the message, thereby preventing the received message from reaching the audio output.

While BLRX is high, the contents of the memory for that channel represent the remaining blanking time, akd are supplied via latch 99 to delay counter 103. Delay counter 103 is incremented during time slot tC for every second sample to achieve the required delay. The output of delay counter 103 is supplied via a tristate buffer 105, back to control memory 91 for updating thereof. Tristate buffer 105 is enabled by an AND gate 101 which is controlled by time signal tDR and BLRX.

When counter 103 reaches the end of its count, it provides an output signal to a latch 107 and to a latch 109. Latch 107 provides the address of the channel whose delay count has been completed to the CPU via a tristate buffer 111. The CPU inserts in the control memory 91 the identification of the telephone communication line which is assigned to that channel, via a bidirectional tristate buffer 113.

It is appreciated that control messages including assignment information are transmitted over the communication channels serially using DPSK modulation, generated by a modem transmitter and received by a modem receiver. The modem transmitter provides digital samples of an analog waveform. Thus the message transmission may employ either analog or digital transmission facilities. Each message comprises 24 data bits, each of which comprises eight digital samples. The modem transmitter operates cyclically in a time sharing mode for the 24 communication channels.

For each time slot corresponding to a communication channel, The modem transmitter checks the message status of the channel, computes the digital value of the message sample to be transmitted and outputs it to the transmit speech flow unit. Message transmission is synchronous and each communication channel has a predetermined time slot for commencement of message transmission.

Message transmission is initiated by setting B (blank) and M (message) bits in the transmit control memory. A blank code is outputted from the modem transmitter until the designated time slot occurs. The 24 date bits of the message are then transmitted serially followed by a blanking period.

Modem transmitter 67 of Fig. 2 is illustrated in block diagram form in Fig. 30. The heart of the modem transmitter is a message memory 502 such as two 82SO9. Message memory 502 receives inputs from CPU data bus and contains the message to be transmitted along each of the 24 communication channels following a blank bit: 13 bits of Barker code, 8 bits of message data, one bit of parity and one reference bit required for DPSK transmissions for a total of 24 bits per channel arranged in three eight bit memory locations.

A second memory 504, such as an 82SO9 serves to monitor all of the 24 communication channels to indicate the bit number for each channel to be transmitted and the state of transmission of the message at each channel. For each channel there is a location having 5 bits indicating which of the 24 communication channels is being transmitted and a phase bit used in DPSK coding.

The output of counter 216 (Fig. 2) is supplied to a divide by 48 sample counter 506 which provides a 6 bit output, the 3 most significant bits thereof indicating which communication channel is to be transmitted. By comparing the outputs of counters 216 and 506 the required matching between each channel and its predetermined time slot is achieved for enabling transmission.

The three most significant bits of the outputs of counters 216 and 506, which identify the channel are supplied to a comparator 508 which provides an output signal in response to sensed equality. The three least significant bits of the output of counter 506 are supplied to a subtractor 510. These bits represent the 8 DPSK samples of each data bit. The second input to the subtractor 510 comprises the two least significant bits of the output of counter 216 and a zero bit. It may thus be appreciated that the output of the subtractor is zero only at the beginning of the 8 sample sequence of a message bit for each channel.

A transmit enable signal RBC 1 is provided by an AND gate which receives the output from comparator 508, a zero output from subtractor 510, a tB timing signal indicating that blanking was just completed and M and B signals from transmit control memory 65 (Fig. 2).

The RBC 1 signal is supplied as reset to a bit counter 514 such as an LS 161 which also receives an increment signal from an AND gate 516 which receives the zero result signal from subtractor 510 as well as the combined timing signal tA · t6.

Bit counter 514 receives a 5 bit output from memory 504 which sequences through the memory contents channel by channel. The appearance of an RBC 1 signal at the counter during a given channel indicates the occurrence of a timeslot for commencement of message transmission.

The updated output of a bit counter 514 is supplied back to memory 504.

Message memory 502 is addressed via a 2/1 multiplexer 518 such as an LS 365 which receives inputs from the CPU address bus and also the CA 1—CA 5 outputs from counter 216. During the write cycle it receives the CPU address bus input and during the read cycle, the CA 1—CA 5 outputs which indicate the channel number. In a second operation cycle, message data is read out from message memory 502. In this cycle the memory 502 is addressed by the CA 1—CA 5 signals together with the two most significant bits of the output of the bit counter which indicate which of the three lines of data corresponding to each channel is to be read out to a latch 520 such as an LS 373.

The output of latch 520 is connected to a digital multiplexer 522 such as an LS 151 which is controlled by the three least significant bits of the output of bit counter 514, thereby to select one of the 8 data bits for transmission.

An exclusive OR gate 524 receives the output of digital multiplexer 522 and also receives the output of the memory 504 which indicates the phase of the previous bit.

The output of exclusive OR gate is supplied to the A3 input of a programmable read only memory (PROM) 526 which stores sixteen samples, being the eight samples which comprise each of the two DPSK phases. Memory 526 also receives the B blanking output from a flip-flop 528. A flip-flop 530 provides the M message signal which is supplied to AND gate 512 together with the B signal. The reset input of flip-flop 530 and the set input of flip-flop 528 receive the $\overline{RM}$ input indicating completion of the 24th message bit transmission. A signal $\overline{RB}$ is generated seven message bit durations afterwards to terminate the blanking.

Reference is now made to Fig. 31 which illustrates in block diagram form message receiver circuitry comprising a delay memory 610 (50 in Fig. 2) which contains 240 samples for each of 24 communication channels.

It is appreciated that control messages including assignment information are transmitted in TASI apparatus such as that described herein over the communication channels serially using DPSK modulation, generated by a modem transmitter and received by a modem receiver. The modem transmitter provides digital samples of an analog waveform. Thus the message transmission may employ either analog or digital transmission facilities. Each message comprises 24 data bits, each of which comprises eight digital samples. The modem transmitter operates cyclically in a time sharing mode for the 24 communication channels.

For each time slot corresponding to a communication channel, the modem transmitter checks the message status of the channel, computes the digital value of the message sample to be transmitted and outputs it to the transmit speech flow unit.

Message transmission is initiated by setting B (blank) and M (message) bits in the transmit control memory. A blank code is outputted from the modem transmitter until the designated time slot occurs. The 24 data bits of the message are then transmitted serially followed by a blanking period.

In accordance with a preferred embodiment of the invention, the message format comprises:
1. one bit period—internal blank
2. one bit period—DPSK reference
3. 12 bit period—Barker code
4. one bit period—parity
5. nine bit period—message data
subdivided as follows:
3. bits—message type
6. bits—line number

Returning now to the description of the receive delay memory 610, it is noted that the contents of the memory represent the last 240 samples for each communication channel. A speed up counter 612 causes the contents of delay memory to be scanned rapidly, such that each channel is scanned during 250 microseconds, i.e. 2 real time sampling intervals. Thus all 24 communication channels are scanned during a total of 48 real time sampling intervals.

Since the message length of 192 samples plus the total 24 channel scanning period of 48 samples exactly equals the 240 sample capacity of the memory for each channel, scanning of the delay memory 610 by the speed up counter 612 enables detection of the entire message irrespective of the timing relationship between the receiver timing and the incoming messages.

A samples counter 614 counts 240 samples for each channel. The samples counter includes a channel number section output which is incremented by one, to the next channel, each 240 samples, and also includes a sample counter section which is incremented by two, since each channel scan period is the length of two real time sampling intervals.

It is a particular feature of the modem receiver circuitry described in Fig. 31 that it enables the receiver circuitry to operate with communication channels having different propagation times.

Receive delay memory 610 stores the samples in logarithmic form in accordance with the companding $\mu$ law. The samples are converted to a linear code by an expander 616 and the eight most significant bits of the linear output of the expander 616 are supplied to a 1 message bit delay circuit 618, typically comprising a memory which delays the eight DPSK samples forming each message bit by one message bit. The output of delay circuit 618 is supplied to a multiplier 620 which multiplies the value of each sample by the value of each delay sample. The output $x_n$ of multiplier 620 is supplied to a digital low pass filter 622.

Digital low pass filter 622 comprises an adder 624, which outputs to an accumulator 626, whose output is supplied directly and also via an inverter 628 to a second adder 630. The output of adder 630 is supplied as a second input to adder 624. Filter 622 is of first order with a 3dB frequency of 2 KHz. It executes the following function:

$$y_{n+1}=y_n+1/4(x_n-y_n)$$

where $y_n$ is the output of filter 22 for the n'th sample.

The $y_n$ output of filter 622 at the output of accumulator 626 is supplied to a magnitude comparator 632 which compares it with a predetermined threshold. The output of the magnitude comparator 632 is supplied via an AND gate 634 which receives the sign bit of $y_n$.

If the magnitude of $y_n$ is less than the predetermined threshold, then the output of AND gate 634, hereinafter termed $S_0$, is zero. The $S_0$ output is supplied to a memory 636. Memory 636 stores the last 96 samples of $S_0$ and provides outputs $S_1$—$S_{12}$. The time relationship between outputs $S_0$—$S_{12}$ is such that there is an interval of 8 sampling intervals between adjacent outputs $S_n$ and $S_{n-1}$. Since each message bit comprises 8 samples, the outputs $S_1$—$S_{12}$ are each samples of a corresponding message bit.

The outputs $S_1$—$S_{12}$ are supplied to a 12-bit Barker code detector 638. In the preferred embodiment the Barker code is selected to be 111100110101. When the Barker code is detected for three consecutive sampling intervals, a nine-bit counter 640 is enabled. Counter 640 counts 9 bit periods, which are equivalent to 72 samples.

When counter 640 completes its count, outputs $S_0$—$S_9$ comprise nine message bits and a parity bit. A parity check circuit 642 receives outputs $S_0$—$S_9$ from the memory 636 and determines if parity is present. If parity is present, circuitry 642 provides an output to an AND gate 644 which also receives the output from counter 640.

The output of AND gate 644, referred to hereinafter as RM is supplied as a CPU interrupt signal to indicate receipt of a message and is also supplied to a message register 646, causing register 646 to store outputs $S_0$—$S_8$ of the output of memory 636. Message register 646 also interfaces with the CPU data bus of TASI type apparatus as described hereinabove.

Reference is now made to Fig. 32 which illustrates in block diagram form apparatus for treatment of out of band signalling. The apparatus shown here and in Fig. 33 is combined with the apparatus of Fig. 2 when out of band signalling is involved. Where in band signalling is used, the apparatus described here may be omitted.

A transmission signalling input interface 698, which may be the same for example as the interface circuitry described above in connection with Fig. 12 provides 48 parallel signalling inputs, each corresponding to a telephone communication line to a 48 to 1 multiplexer 700 which may comprise 7 93L12 chips. The multiplexer is controlled by a 48 counter 702, which may comprise 2 LS-163 chips and which also controls a signalling control memory 704 such as a 6810 which governs the operation of an addressable latch 706, which may comprise 3 LS259 chips, operating as a 1 to 24 demultiplexer.

Thus during a given time slot, one of 48, multiplexer 700 couples a predetermined one of the 48 telephone communication line signalling wire to the signalling wire of a communication channel determined by the control memory 704.

A delay memory 708, typically 3 N-5058 static shift registers, is interposed between the output of multiplexer 700 and the input of addressable latch 706 in order to provide a delay (typically 64 milliseconds) which is sufficient to enable signalling detection circuitry 710 to determine whether signalling information is present and if so to effect assignment of a signalling wire corresponding to a communication channel to be assigned to the signalling wire carrying signalling information.

The output of multiplexer 700 is supplied to signalling detection circuitry 710, also referred to as signalling detector ALU circuitry, at the input of control logic circuitry 712, comprising TTL gates. The control logic receives timing signals from timing and control circuitry 714 and also receives an STD n−1 input which indicates the previous status of the given telephone communication line switching wire. The output of control logic circuitry 712 is supplied to the negative input of a subtractor 716, typically 3 LS 83 chips and which provides an output to a signal detection charging memory 718 which together with a S.D.T.

memory 720 comprises 2 6810 chips. The output of memory 718 is supplied to the positive input of subtractor 716. The S.D.T. memory receives an input from logic circuitry 712 which indicates whether the current sample contains signalling information, based on the criteria established by the control logic circuitry.

It may be appreciated that the signalling detection circuitry 710 provides integration of the input samples so as to establish a minimum threshold for duration and also to provide hangover time after termination in order to prevent loss of signalling information.

The control memory 704 operates in two modes in response to timing signals from circuitry 714. As described above, it outputs to addressable latch 706 in response to inputs from counter 702 supplied via a multiplexer 722, which is also controlled by circuitry 714. When it is not outputing to addressable latch 706, the control memory 704 is available for being updated by the CPU via a CPU data bus and a bidirectional tristate buffer 724, which receives the SDT n−1 signal from memory 720 and control signals from circuitry 714 and from the CPU.

When the control memory 704 is being updated by the CPU, multiplexer 722 passes addresses from the CPU address bus to the control memory.

The output of addressable latch 706 is supplied along 24 parallel signalling wires corresponding to 24 communication channels via a transmit signalling output interface 726, which may be similar to that illustrated in Fig. 9 hereinabove or any other suitable interface circuitry.

It is noted that the control memory operates cyclically in outputing to the addressable latch and is approached by the CPU in an asynchronous manner. When the CPU addresses the control memory when it is engaged in outputing to the addressable latch, timing circuitry 714 provides a WTR 2 wait signal to the CPU until the cyclic operation is completed.

When there is a change in assignment of signalling the CPU searches for a communication channel having both signal and data portions free. Upon finding an available communication channel, the CPU transmits over the data carrying channel, as opposed to the signalling wire, assignment information regarding the new assignment.

Reference is now made to Fig. 33 which illustrates in block diagram form apparatus for treatment of out of band signalling at the receive end, as opposed to the transmit end described hereinabove. The circuitry shown here is similar in many respects to that of the transmit end described above but differs therefrom in that it does not contain a delay memory which is not required since the receive signalling circuitry merely monitors proper operation of the signalling wires and does not provide new assignments.

An RX signalling input interface 730 and an RX signalling output interface 732 each receive timing signals from timing circuitry 71 (Fig. 2) and may be similar in construction to the interface circuitry illustrated in Fig. 9 hereinabove. Interface 730 interconnects signalling wires corresponding to 24 communication channels to a multiplexer 734, typically 4 93L12 chips. The output of multiplexer 734 is supplied directly to an addressable latch 736, such as 6 LS 259 chips, which outputs along 48 parallel lines via interface 732 to signalling wires corresponding to the 48 telephone communication lines.

The output of multiplexer 734 is also supplied to control logic circuitry comprising TTL gates 738 which together with an adder 740, a signal detector charging memory 742 and an SDR memory 744 comprises signalling detection circuitry. Adder 740 receives an input from control logic circuitry 738 and provides an output to memory 742 and an SDR n signal to memory 744. Memory 742 provides an output to a second input of adder 740 and SDR memory 744 provides an SDR n−1 signal to circuitry 738. Circuitry 738 and SDR memory 744 both receive signals from timing and control circuitry 746 which receives timing signals from circuitry 71 (Fig. 2).

A counter 748 provides a six bit output to latch 736, memories 742 and 744 and to a signalling control memory 750, the latter via a multiplexer 752. Control memory 750 in turn provides a five bit output which operates multiplexer 734 for matching the received signalling information to the signalling wire indicated by the control memory 750. Both control memory 750 and multiplexer 752 receive timing inputs from circuitry 746 and operate in two modes, one in which the cyclic addressing of counter 748 provides cyclic, synchronized operation of latch 736 and multiplexer 734 and the second, which occurs when the cyclic operation is not taking place, in which the CPU interacts with the control memory 750 via the CPU data bus and a bidirectional tristate buffer 754 for updating thereof in an asynchronous manner.

Bidirectional tristate buffer 754 receives a five bit output from control memory 750 and the SDR n−1 output from memory 744, as well as control signals from the CPU and circuitry 746 and provides a six bit output to the CPU, which instructs the CPU to send an acknowledge signal in response to the received signalling information. This acknowledge signal is sent over a data channel. When the CPU attempts to interact with the control memory 750 during cyclic operation thereof, control circuitry 746 provides a WTR 4 wait signal to the CPU.

In summary it may be understood that the receive signalling circuitry described hereinabove provides the necessary matching between incoming signalling information and the appropriate signalling wires and also senses the presence of signalling information in order to provide an acknowledge signal indicating receipt thereof.

A concentrator may thus be provided which conveniently interfaces between the 2-wire subscriber connection and the 6-wire multiplex link and which, by use of Time Assignment Speech Interpolation techniques, enables twice the number of subscribers to be connected over a given number of multiplex link channels as would other be possible using conventional concentrators inserted on the 2-wire connections.

The concentrator benefits from significant economies in that it employs common control circuitry and power supplies for operating the concentrator matrix as well as the TASI circuitry.

The concentrator provides a particular advantage in rural applications where the alternatives thereto are installation of additional multiplex links or even additional central offices.

The concentrator comprises a first switching matrix coupled to a central office, 2-wire—4-wire interface circuitry, coupled to the first matrix, time assignment speed interpolation apparatus having subscriber terminals coupled to the interface circuitry and communication channel terminals couplable to a multiplex telephone link, and control circuitry governing the operation of the first switching matrix and of the time assignment speech interpolation apparatus.

Normally, on the subscriber end of the multiplex link a similar concentrator unit to the above is employed, the only difference being that the switching matrix is coupled to the individual subscriber lines rather than to the central office.

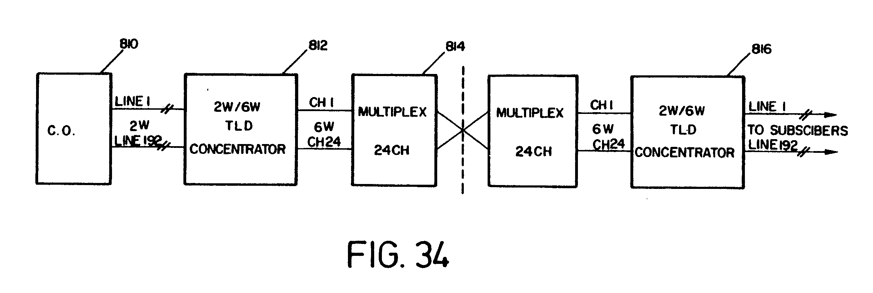

Reference is now made to Fig. 34 whch is a block diagram illustration of a remote switching link comprising a concentrator. A central office 810, such as for example an Albis model A-50, provides a desired number of 2-wire subscriber lines. For the purposes of illustration 192 lines are illustrated herein, it being understood that any suitable number of lines may be provided, depending on subscriber demand. The 192 lines from the central office 810 are connected to 192 corresponding 2-wire CO terminals of a concentrator 812. Concentrator 812 is provided with 24 communication channel terminals which are coupled to a standard conventional multiplex transmission link 814 which extends from the central office to a remote location.

At the remote location the multiplex transmission link (24 channels) is coupled to communication channel terminals of a concentrator 816 which is paired with concentrator 812 and identical thereto except for interfaces. Concentrator 816 is provided with 192 subscriber line terminals of which are coupled to 192 2-wire subscriber lines.

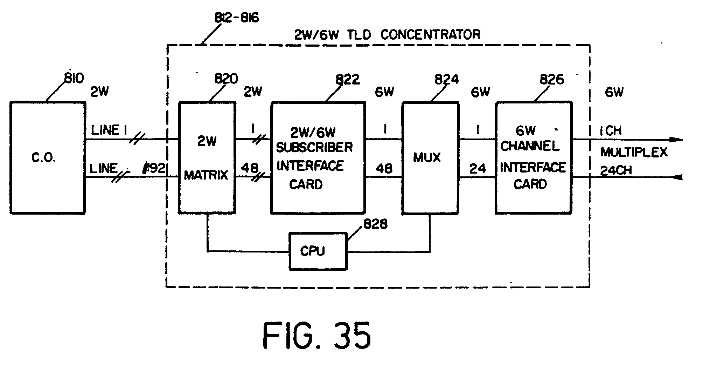

The concentrator units 812 and 816 are described in greater detail with reference to Fig. 35, which is common to units 812 and 816. The 192 lines from a C.O. or from subscribers, depending on whether the unit described is unit 812 or unit 816 respectively are coupled to a 2-wire switching matrix 820, using for example Clare relays 851A-48-B2A or alternatively any other suitable relays, or crossbar or any other type of electromechanical switching. As a further alternative, purely electronic switching may be employed.

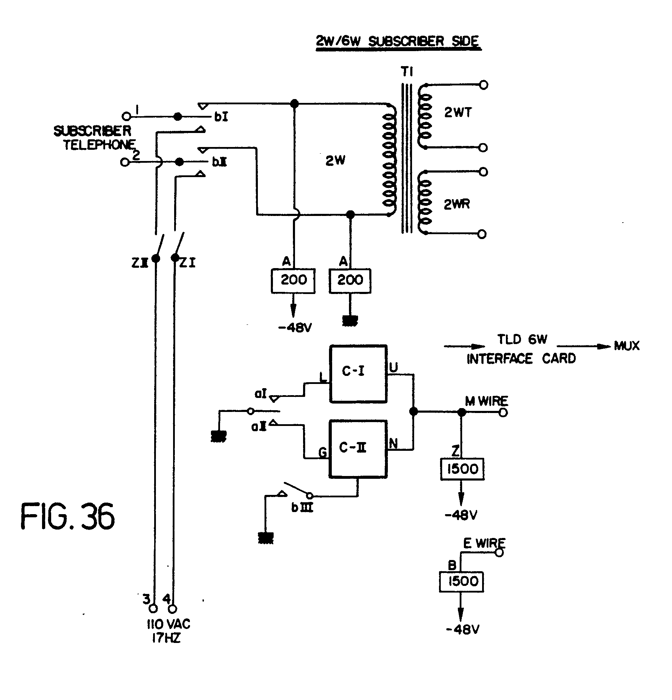

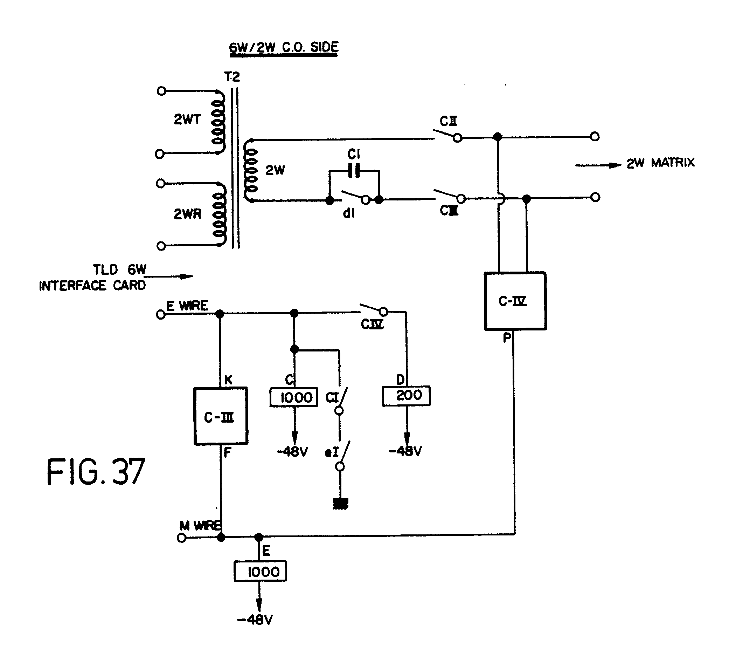

Switching matrix 820 is provided with 48 2-wire line terminals which are connected to corresponding terminals of a 2-wire/6-wire interface card 822. Interface card 822 differs for units 812 and 816 and will be described hereinafter in detail with reference to Figs. 36 and 37.

The 48 6-wire terminals of interface card 822 are connected to the subscriber inputs of a TASI unit multiplexer 824 having 24 communication channel terminals which are connected via a 6-wire channel interface card 826 to multiplex 814 (Fig. 34). TASI multiplexer 824 and matrix 820 are controlled by control circuitry 828. TASI multiplexer 824, interface card 822 and control circuitry 828 are preferably embodied in TASI apparatus described hereinabove.

It is appreciated that the ratio of subscriber lines to communication channels in the apparatus described hereinabove is based on a concentration ratio of 4:1. That is to say that matrix 820 is operative to connect a number of subscriber lines to one-fourth that number of communications channels based on the statistical fact that the subscribers served use their telephones less than one fourth of the time. The ratio of subscriber lines to communication channels—i.e. the concentration ratio may vary depending on the type of subscribers in the general range of 4:1 up to 10:1.

Reference is now made to Fig. 36 which illustrates in block diagram form interface circuitry coupling a 2-wire line to a 6-wire channel, such as at the subscriber terminal of TASI multiplex apparatus. Legs 1 and 2 of a 2-wire subscriber line are coupled either to a 110 VAC 17 HZ source, ready to receive a ringing impulse, when the telephone is not in use, or when the telephone is in use, they are coupled across the primary of a hybrid transformer T1. A relay B having contacts b1 and bII governs the connection status of the 2-wire subscriber line. A relay A is connected across the primary of transformer T1 and converts dialing pulses generated by the telephone over the 2-wire subscriber line to on-off pulses for transmission. The secondary windings of transformer T1 are coupled to respective transmit and receive wire pairs which may be connected to a multiplex or to subscriber terminals of TASI apparatus as aforesaid.

The remainder of the circuitry of Fig. 36 will be described hereinafter in connection with a functional description thereof.

Referring now to Fig. 37 there is seen in block diagram form interface circuitry which couples a 6-wire channel such as at the output of TASI apparatus as aforesaid with a 2-wire line as at a C.O. terminal. Transmit and receiver wire pairs from a 6-wire channel are coupled across secondary coils of a transformer T2, whose primary is coupled via a relay C to the two wire line. A relay D and a capacitor C1 coupled in parallel thereto are inserted along one leg of the 2-wire line connected to the primary. The remainder of the circuitry will now be described in the overall functional description which follows:

When a subscriber wishes to receive a line

When a subscriber wishes to receive a line he lifts the receiver causing activation of relay A. Relay contact a1 energises a circuit C-I at input L. Circuit C-I provides a pulse at output U of 100 msec. This pulse is transmitted along the M wire via TASI apparatus or any other transmission linke to the E wire on the C.O. side (Fig. 37). The appearance of the 100 msec pulse on the E wire causes energization of relay C which, by virtue of the action of contact c1 remains closed notwithstanding disappearance of the pulse on the E wire.

Contacts cII and cIII on the 2-wire line are thus closed, connecting the primary loop of transformer T2 to the C.O. and causing the C.O. to provide a dial tone.

The dial tone provided by the C.O. is transmitted via transformers T2 and T1 to the subscriber as an audio signal.

Dialing

Dialing by the subscriber causes a relay A to respond to the pulses generated by the telephone. The dialing pulses pass via circuit C-I but do not pass via circuit C-II, since that circuit only passes pulses of duration at least 150 msec. Thus the dialing pulses are supplied to the M wire from terminal U of circuit C-1. These pulses are received on the E wire at the C.O. side (Fig. 37) at a time when relay C is already closed. As a result these pulses cause energization of relay D. Contact d1, by opening and closing in accordance with the dialing pulses received on the E wire, such that the C.O. alternatively senses the loop resistance of the primary of transformer T2 with and without the capacitor C1 in series. This causes the selectors in the C.O. to make connection in accordance with the received dialing pulses, establishing audio contact between the dialing and the dialed subscribers.

Termination of the conversation

When the subscriber hangs up, relay A (Fig. 36) is deenergized, causing contact a2 to couple circuit C-II to ground at terminal G. Once 150 msecs. have passed circuit C-II couples terminal N to ground, so long as contact b3 is open. Thus the M wire is coupled to ground, resulting in energization of the Z relay. As a result contacts z1 and z2 disconnect the ringing current from the subscriber line.

Grounding of the M wire causes grounding of the E wire on the C.O. side. A circuit C-III is responsive to ground of the E wire for at least 150 msec to ground its terminal F. This results in energization of an E relay, causing contact e1 to de-energize relay C. As a result contacts cII and cIII are opened disconnecting the C.O. from transformer T2. The grounding of the M wire at the CO side, as a result of the grounding of terminal F causes grounding of the E wire at the subscriber side (Fig. 36). This results in energization of the B relay, causing contact bIII to close, thereby terminating the grounding of terminal N of circuit C-II. This terminates the grounding of the M wire at the subscriber side. The removal of this grounding is communicated to the C.O. side to the E wire on the C.O. side removing the grounding thereof and as a result circuit C-III terminates the grounding at terminal F causing E relay to be de-energized. The M wire at the C.O. side is no longer coupled to the ground, causing the E wire on the subscriber side to be decoupled from ground. The energization of the B relay causes de-energization of the Z relay. The decoupling of the E wire on the subscriber side from ground causes de-energization of the B relay. At this point the relays and other circuitry are prepared for commencement of a new conversation by the action of a subscriber in lifting the receiver.

When a subscriber receives ringing from the central office

At the central office (C.O.) side there appears on the 2-wire line a ringing current. This current is received by a circuit C-IV which converts the ringing current to ground pulses.

The ground pulses appear at a terminal P and are supplied to the M wire at the C.O. side and thus appear on the E wire at the subscriber side. The appearance of these pulses on the E wire causes energization of the B relay in accordance with the ringing pulses. Contacts b1 and bII are thus operative to periodically connect the 2-wire subscriber line to the ringing current to produce ringing. Once the subscriber lifts the receiver, the sequence described hereinabove for initiation of a conversation takes place.

It will be appreciated that the circuitry of Figs. 36 and 37 is not necessarily limited in its application to use with TASI apparatus but may be employed for 2-wire/6-wire or 2-wire/4-wire conversion in any telephone system. It is noted that the circuitry provided is designed for a 6-wire conversion. A 4-wire conversion, for in-band signalling can also be achieved using similar, simpler circuitry.

It will be appreciated that there may be applications where a separate switching matrix is not required, because of the relatively low number of subscriber lines required. In such a case, the TASI apparatus is provided with interface cards equal to the number of subscriber lines and the switching is done internally on the same principles by circuitry on the interface cards controlled by the CPU of the TASI apparatus.

The invention is not limited to what has been particularly shown and described hereinabove and in the drawings. Rather the scope of the invention is defined only by the claims which follow:

**Claims**

1. A time assignment speech interpolation communication system comprising:

a transmission trunk link (100) having a plurality of analog communication channels with a defined signal transmission frequency band;

a plurality of first telephone communication lines selectively connectable to the channels at one end of the link (100);

a plurality of second telephone communication lines selectively connectable to the channels at the other end of the link,

the number of first and second telephone communication lines being equal to one another and each exceeding the number of said channels;

transmission apparatus (10—36, 65, 69) at said one end of the transmission trunk link (100) including means (22, 53, 57) for detecting signals on said plurality of first telephone communication lines and means (26, 65) for assigning each first telephone communication line on which signals are present to an available one of the said communication channels;

receiving apparatus (48—52, 56—60, 71) at the said other end of the transmission trunk link (100) including means (52, 60) for assigning each of the communication channels carrying signals to a corresponding one of said second telephone communication lines in accordance with assignment information received from said transmission apparatus (10—36, 65, 69); and

apparatus (61, 63, 67) for communicating messages including assignment information between said transmission apparatus (10—36, 65, 69) and said receiving apparatus (48—52, 56—60, 71) along said assigned analog communication channels, along which also appear analog waveforms of speech and of other signals;

characterised in that said messages are transmitted in serial data form as a sequence of time segments of analog waveforms wherein each of said segments includes at least one bit of said communication messages and being distinguished from said speech and other signals by means of an analog waveform comprising segments each of which represents at least one bit of an identification code forming part of each of said messages and inserted by said transmission apparatus (10—36, 65, 69) and decoded by said receiving apparatus (48—52, 52—60, 71).

2. A system according to Claim 1, characterised in that each of said messages also includes a message integrity code.

3. A system according to Claim 1 or Claim 2, characterised in that each of said messages also comprises a multi-bit serial data portion.

4. A system according to any one of the preceding Claims, characterised in that said apparatus for communicating messages (61, 63, 67) is operative to transmit at least two types of messages, one of said types of messages including assignment information, and another or the other of said types of messages including only non-assignment information.

**Patentansprüche**

1. Ein Kommunikationssystem mit Zeitzuweisung - Sprachinterpolierung bestehend aus:

einer Fernleitungsstrecke (100) mit mehreren Analog-Kommunikationskänalen, mit einem definierten Signalübertragung - Frequenzband;

mehreren ersten Telefon-Kommunikationsleitungen, welche wahlweise an die Kanäle an einem Ende der Strecke (100) anschließbar sind; anschließbar sind;

mehreren zweiten Telefon-Kommunikationsleitungen, welche wahlweise an die Kanäle am anderen Ende des Strecke anschließbar sind, wobei die Anzahl der ersten und der zweiten-Telefon-Kommunikationsleitungen einander gleicht und die Anzahl der besagten Kanäle übersteigt;

Obertragungsapparate (10—36, 65, 69) am besagten einen Ende der Übertragungs-Fernleitungsstrecke (100) mit Einrichtungen (22, 53, 57) zum Erfassen von Signalen auf den besagten mehreren ersten Telefon - Kommunikationsleitungen und Einrichtungen (26, 65) zum Zuweisen jeder ersten, Signale führenden Telefon - Kommunikationsleitung zu einem verfügbaren der besagten Kommunikationskanäle;

Empfangsapparate (48—52, 56—60, 71) am besagten anderen Ende der Übertragungs - Fernleitungsstrecke (100), mit Einrichtungen zum Zuweisen jedes der Signale führenden Kommunikationskanäle zu einer entsprechenden der besagten zweiten Telefon - Kommunikationsleitungen entsprechend der von den besagten Übertragungsapparaten (10—36, 65, 69) empfangenen Zuweisungsinformation; und

Apparate (61, 63, 67) zum Übertragen von Meldungen, einschließlich Zuweisungsinformation, zwischen besagten Übertragungsapparaten (10—36, 65, 69) und den besagten Empfangsapparaten (48—52, 56—60, 71) entlang besagten zugewiesenen analogen Kommunikationskanälen, auf welchen auch analoge Wellenformen von Sprach- und anderen Signalen erscheinen;

dadurch gekennzeichnet, daß die besagten Meldungen in serieller Datenform als eine Folge von Zeitsegmenten analoger Wellenform übertragen werden, wobei jedes der besagten Segmente mindestens ein Bit der besagten Kommunikationsmeldungen enthält und von besagten Sprach- und anderen Signalen durch eine analoge Wellenform unterschieden ist, die aus Elementen besteht, von denen jedes mindestens ein Bit eines Kennzeichnungskodes darstellt, welcher Teil jeder der besagten Meldungen bildet und durch besagte Sendeapparate (10—36, 65, 69) eingefügt und durch besagte Empfangsapparate (48—52, 56—60, 71) dekodiert wird.

2. Ein System nach Anspruch 1, dadurch gekennzeichnet, daß jede der besagten Meldungen auch einen Meldungssicherheitskode enthält.

3. Ein System nach Anspruch 1 oder Anspruch 2, dadurch gekennzeichnet, daß jede der besagten Meldungen auch aus einem seriellen Multibit-Teil besteht.

4. Ein System nach einem der vorhergehenden Ansprüche, dadurch gekennzeichnet, daß der besagte Apparat (61, 63, 67) zum Übertragen von Meldungen betrieblich ist, um mindestens zwei Meldungstypen zu übertragen, wobei eine der besagten Meldungstypen Zuweisungsinformation mitenhält und die andere der besagten Meldungstypen nur Nicht-Zuweisungsinformation enthält.

**Revendications**

1. Système de transmission à interpolation de parole suivant une attribution de temps, comprenant:

une liaison interurbaine de transmission (100) possédant une multiplicité de canaux de télécommunication avec une bande de fréquences de transmission de signaux définie;

une multiplicité de premières lignes de liaison téléphonique pouvant être connectées sélectivement aux canaux à une extrémité de la liaison (100);

une multiplicité de secondes lignes de transmission téléphonique pouvant être connectées sélectivement aux canaux à l'autre extrémité de la liaison,

le nombre de premières et secondes lignes de transmission téléphonique étant égal l'un à l'autre et chacun dépassant le nombre desdits canaux;

un appareil de transmission (10—36, 65, 69) à ladite première extrémité de la liaison interurbaine de transmission (100) comprenant des moyens (22, 53, 57) pour détecter des signaux sur ladite multiplicité de premières lignes de transmission téléphonique et des moyens (26, 65) pour ˙attribuer chaque première ligne de transmission téléphonique sur laquelle des signaux sont présents à un canal disponible parmi lesdits canaux de télécommunication;

un appareil récepteur (48—52, 56—60, 71) à ladite autre extrémité de la liaison interurbaine de transmission (100) comprenant des moyens (52, 60) pour attribuer chacun des canaux de télécommunication portant des signaux à une ligne correspondante parmi lesdites secondes lignes de transmission téléphonique en fonction d'une information d'attribution ·reçue à partir dudit appareil de transmission (10—36, 65, 69); et

un appareil (61, 63, 67) pour transmettre des messages comprenant une information d'attribution entre ledit appareil de transmission (10—36, 65, 69) et ledit appareil récepteur (48—52, 56—60, 71) sur lesdits canaux de télécommunication analogiques attribués, sur lesquels apparaissent aussi des formes d'onde analogiques de parole et d'autres signaux;

caractérisé en ce que lesdits messages sont transmis sous forme de données série en tant que séquence de segments de temps de formes d'onde analogiques dans laquelle chacun desdits segments comprend au moins un bit desdits messages de transmission et étant distingué desdits signaux de parole et autres au moyen d'une forme d'onde analogique comprenant des segments dont chacun représente au moins un bit d'un code d'identification faisant partie de chacun desits messages et introduit par ledit appareil de transmission (10—36, 65, 69) et décodé par ledit appareil récepteur (48—52, 56—60, 71).

2. Système suivant la revendication 1, caractérisé en ce que chacun desdits messages comprend aussi un code d'intégrité de message.

3. Système suivant la revendication 1 ou la revendication 2, caractérisé en ce que chacun desdits messages comprend aussi une partie de données série de plusieurs bits.

4. Système suivant l'une quelconque des revendications précédentes, caractérisé en ce que ledit appareil pour transmettre des messages (61, 63, 67) est efficace pour transmettre au moins deux types de messages, l'un desdits types de messages comprenant une information d'attribution, et un autre ou l'autre desdits types de messages comprenant uniquement une information de non attribution.

FIG. 1

SYSTEM LAYOUT

A RADIO LINK

B CABLE LINK

FIG. 2a

0 025 465

FIG. 2b

**FIG. 2c**

FIG. 2d

0 025 465

FIG. 2e

0 025 465

FIG. 2f

8

**SYNCHRONIZATION FRAME** (1500 μsec)

| 1 | 2 | 3 | 4 | 5 | 6 | 7 | 8 | 9 | 10 | 11 | 12 | 1 |

SIG. FRAME 1

SAMPLE RATE 8 KHZ

SIG FRAME 2

125 μs.

| 191 | 1 | 2 | 3 | 4 | 5 | 24 | 193 | 1 | 2 | 3 | 4 | 5 | 6 |

5.18 μ

0.65 μ

| $t_A$ | $t_B$ | $t_C$ | $t_D$ | $t_E$ | $t_F$ | $t_G$ | $t_H$ | — | $t_A$ | $t_B$ | $t_C$ | $t_D$ | - - - - - |

193

| $P_1$ | $P_2$ | $P_3$ | $P_4$ | $P_5$ | $P_6$ | $P_7$ | $P_8$ | $P_1$ | $P_2$ | $P_3$ | $P_4$ | $P_5$ | $P_6$ | $P_7$ | $P_8$ | — | $P_1$ | $P_2$ | $P_3$ | $P_4$ | $P_5$ | $P_6$ | $P_7$ | $P_8$ |

| $t_1$ | $t_2$ | $t_3$ | $t_4$ | $t_5$ | $t_6$ | $t_7$ | $t_8$ | $t_9$ | | | $t_1$ | $t_2$ | $t_3$ | $t_4$ | $t_5$ | $t_6$ | $t_7$ | $t_8$ | $t_9$ | | | | |

62 nsec

**FIG. 3**

FIG. 4a

NOTE: ALL TIMING PULSES WITH SUFFIX "T"

NOTE: ALL TIMING PULSES WITH SUFFIX "T"

FIG. 4b

FIG. 4c

FIG. 5

FIG. 6

FIG. 7a

NOTE: ALL TIMING PULSES WITH
SUFFIX 'R'

0 025 465

FIG. 7b

NOTE ALL TIMING PULSES WITH
SUFFIX 'R'

FIG. 7c

NOTE: ALL TIMING PULSES WITH SUFFIX "R"

CLC   tA  tB  tC  tD  tE  tF  tG  tH      tA  tB  tC  tD  tE  tF  tG  tH

193

SYNC.23

SYNC. 23 SHOULD BE CONNECTED
TO LINE 44,LINE 45 AND TRUNK 0

SYNC.0.

SYNC. 0 SHOULD BE CONNECTED
TO LINE 46, LINE 47 AND TRUNK 1

TXC.

CA0÷CA5

| TRUNK 23 | | — | TRUNK 0 | | |
|---|---|---|---|---|---|
| LINE 46 | LINE 47 | — | LINE 0 | LINE 1 | |

DURING WIRING
CONNECT AS FOLLOWS

SYNC.0  ⟶  LINE 46,47
           TRUNK 1

SYNC.1  ⟶  LINE 0,1
           TRUNK 2

SYNC.22 ⟶  LINE 42,43
           TRUNK 23

SYNC.23 ⟶  LINE 44,45
           TRUNK 0

FIG. 8

0 025 465

FIG. 9a

FIG. 9b

FIG. 10a

TX BUFFER MEMORY ACCESS
CAT0÷CAT5 ADD ON WRITE CYCLE
CMT0÷CMT5 ADD ON READ CYCLE
CAT1—CAT5 ADD ON READ CYCLE DURING 1-1

FIG. 10b

FIG. 11a

FIG. 11b

FIG. 11c

FIG. 12a

FIG. 12b

FIG. 13a

SERIAL TO PAR. CONV. & DELAY MEMORY

0 025 465

FIG. 13b

FIG. 14a

SAMPLE
FROM TX-SERIAL TO
PARALLEL
CONV (18)

400 — EXPANDER

402 — PEAK DETECTOR

404 — COUNTERS FOR 5mS RESET

410 — THRESHOLD MEMORY + CONTROL — THmin

53 — COMPARATOR CIRCUITS — COMP̄ — TO SPD ALU

ECH₀ TH FROM ECHO ESTIMATOR

0 025 465

FIG. 14b

FIG. 14c

ECH$_0$ TH.

TO COMPARATOR CIRCUITS

SAMPLE FROM RX BUFFER MEM OUTPUT → EXPANDER (412) → PEAK DETECTOR (414) → HYBRID LOSS COMPENSATOR (420) → 6db HYSTERESIS INSERTION LOSS (422)

SPDn → 6db HYSTERESIS INSERTION LOSS (422)

READ WRITE CONTROL (416)

COUNTER CIRCUITRY FOR 50mS HANGOVER 4mS SUPRESSION (418)

55

0 025 465

FIG. 15a

# FIG. 15b

FIG. 16a

FIG. 16b

FIG. 16c

FIG. 17

37

MESSAGE INTERRUPT

MINT

RESET FLAG I
RESET TI
SAVE REG IN
STACK

SAVE TRUNK
NO IN LREG

ASSIGN MESSAGE — NO → SIGNAL MESSAGE — NO → SYNC MESSAGE — NO

YES → NTUV

YES → ITUT

YES → RSYCH

→ IDLE MESSAGE ROUTE

ACK MESSAGE — NO → STK

YES → ISHUR

MESSAGE FORMAT

| 7 | 6 | 5 | 4 | 3 | 2 | I | 0 |
|---|---|---|---|---|---|---|---|
| TYPE | | MESSAGE CONTENT | | | | | |
| 0 | 0 | ASSIGNMENT | | | | | |
| 0 | I | SIGNALLING | | | | | |
| I | 0 | SYNC | | | | | |
| I | I | ACKNOWLEDGE (IDLE) | | | | | |

FIG. 18a

INTUV → RECEIVED LINE NO →CMR I → PREPARE ACK MESSAGE FOR SENDING BACK → CALL SENDM → STK

INT 20 → [CMRI]→[CMR] → RET

INT 20 OCCURS ON THE SAME TRUNK AS MINT BUT AFTER 20 Msec DELAY

ITUT → RECEIVED LINE NO → SCMR → UPDATE SCRR TABLE 8 SCMR I → STK

# FIG. 18b

SENDM— PLACES THE MESSAGE REQUEST IN QUEUE FOR TRUNKS

ACKQ — REMOVES THE RECEIVED ACK. MESSAGE FROM ACK.QUEUE.

0 025 465

FIG. 18c

RSY₃ → MSG = SYNC O —YES→ [MO]=[MO]+1 → [MO] ≥ OFH —YES→ FLAG 4 = 1 → STK

MSG = SYNC O —NO→ STK

[MO] ≥ OFH —NO→ STK

FOR RESYNCRONIZATION

ISHUR → PREPARE LINE & TRUNK NO → CALL ACKQ → STK

FIG. 18d

0 025 465

RESET TO CPU → INIT → DEFINE STACK INIT 8251 → PREPARE BRANCH ADD INADD = [CRTIN] → EI → LOOP } PART OF INITIALIZATION OF THE SYSTEM

CRT INT → INTER → SAVE ALL REG IN STACK → GO ACC TO BRANCH ADD INADD [1000,100]

**FIG. 19a**

FIG. 19b

FIG. 19c

CI

CO

CRLF

LBYTE — PREPARE MEM CONTENT FOR PRINT

HXD — CONVERT 4 BIT BINARY NUMBER TO ASC11 CODE

HILO — INCREMENT & CHECK IF START ADD=END ADD

NIBLE — CHECK IF INPUT CHAR IS LEGAL HEXA NUMBER

CI → INPUT CHAR FROM 8251 → CO → SAVE CHAR IN BREG INPUT STATUS OF 8251 → IS TXRDY=1 → YES → RECALL CHAR TO A SEND BACK CHAR TO CRT (SOFT COPY)

NO

CRLF → PREPARE A CR IN REG A → OUTPUT THE CHAR CALL(CO) → PREPARE A 'LF' IN REG A → RET ← MASK OUT PARITY BIT & MOVE CHAR TO B REG

DETAILS SEE IN THE INTELLEC 8 LIBRARY

0 025 465

FIG. 20a

# FIG. 20b

The flowchart shows: EX2 → STORE[CMO]IN CMI,CM2 &CM3 acc to NBR cont → DECR C REG (NUMBER OF ADD) → C < O — YES → ERROR; NO → STORE CREG IN NBR → CHAR [CRI] — NO → CHAR [CR2] — NO → ERROR; CHAR [CRI] YES → EX3 → JUMP ACC TO ADD IN BUFF1; CHAR [CR2] YES → EX4 → JUMP ACC TO ADD IN BUFF2

| | | |
|---|---|---|
| I BYTE | NBR | [NUMBER OF PARAMETERS] |
| 2 BYTE | CMO | [TEMPORARY PARAMETER] |
| 2 BYTE | CM3 | [$3^{rd}$ PARAMETER — $2^{nd}$ PARAMETER] |
| 2 BYTE | CM2 | [$2^{nd}$ PARAMETER — $1^{st}$ PARAMETER] |
| 2 BYTE | CMI | [$1^{st}$ PARAMETER] |
| I BYTE | CRI | [$1^{st}$ LEGAL CHAR] |
| I BYTE | CR2 | [$2^{nd}$ LEGAL CHAR] |
| 2 BYTE | BUFF I | [$1^{st}$ JUMP ADD] |
| 2 BYTE | BUFF 2 | [$2^{nd}$ JUMP ADD] |

FIG. 21

SUBS

SUBS

NBR = [1]
CRI = [' ']
CR 2 = [CR]
BUFFI = SUBS 0
BUFF2 = ERROR

EXPR

SUBS 0

PREPARE NEXT
INADD = SUBS 1

STK

SUBS 1

GET THE CHAR
(CALL CI)

CHAR = ' '  — YES → SUBS 4 → PRINT OUT MEMORY CONTENT IN HEXA FORMAT PRINT '-' CALL LBYTE → PREPARE NEXT INADD=SUBS 2 → STK

NO

ERROR

FIG. 22a

0 025 465

48

FIG. 22b

FIG. 23a

INT 3 → [TI]→[TI]+1 → TI= MAX (4F) → NO → FLA I → FLAGI = I → NO → OUT CO (I-I) → ACTIM

TI=MAX (4F): YES → FLAGI=I NOSYNC

FLAGI = I: YES → OUT CI (I-I)

50

0 025 465

FIG. 23b

FIG. 23c

0 025 465

FIG. 24a

FIG. 24b

## INPUT

B REG=MESSAGE OR TRUNK

## OUTPUT

B REG = TRUNK NBR
H=I2, L= NEW SAQ ADD
A REG=FF$_H$ (RESET CHAR OF TIMER)
DE=OLD SAQ IIXXH
C REG—NOT AFFECTED

[SAQ] – START OF ACK. QUEUE

[EAQ] – END OF ACK. QUEUE

SAQ – START OF ACK. QUEUE POINTER ADD.

EAQ – END OF ACK. QUEUE POINTER ADD.

FIG. 25a

TX- PHASE 1 (SYNC 1)

FIG. 25b

RX-PHASE 1    (SYNC 1)

FIG. 25c

RX – PHASE 2 (SYNC2)

FIG. 25d

PHASE 3   ROUTINE WORK

<u>NOTE</u>:   FLAG   1   IS SET   TO   1   BY   INT   3
            IF   THE   SYSTEM   DOESN'T   RECEIVE
            AND   MESSAGE   DURING 1 SEC   (T1   TIMER)

FIG. 26a

FIG. 26b

**NOTES**

FLAG 1 - 1-1 FLAG
FLAG 2- END OF SECOND SYNC. PHASE FLAG.
FLAG 3- END OF FIRST SYNC. PHASE FLAG.
T2- SENT SYNC. MESSAGES COUNTER (PAIRS)
TMAX1 = FF NUMBER OF SENT SYNC.
     MESSAGE BEFORE FLAG 1 = 1
TMAX2= 07 NUMBER OF SENT SYNC.1
     MESSAGE AFTER FLAG 3=1
TMAX3= 3F NUMBER OF SENT SYNC.2
     MESSAGE AFTER FLAG 2=1
MS = RECIEVED SYNC. MESSAGE COUNTER.
C6 = INDEX COUNTER FOR LINE NUMBER.
RESNC- NEW SYNC. COUNTER
SYNC 1- AAH 1st SYNC. MESSAGE.
SYNC 2- 66H 2nd SYNC. MESSAGE.
     (SYNC. CHAR FOR MODEM SYNC.).
SYNC 0-55H SYNC. CHAR FOR FRAME SYNCRONIZATION.

FIG. 26c

FIG. 26d

0 025 465

SYNO → FLAG 2,3,4=0 C6=0 MS,MO=0 → ST → FLAG1 OR FLAG 3 OR FLAG 4

ST → NO → ST1 → CALL START (MAIN ROUTINE)

YES → [RESNC] = [RESNC]+1 → INIT

SSYNC → GEN TRUNK NR FOR MESSAGE ACC TO [C6] → SEND 2 SYNC MESSAGE + DELAY → [T2]=[T2]+1 → RET

FIG. 27a

# 0 025 465

# FIG. 27b

64

FIG. 27c

```
        ( CHOFF )                    ( CHOF )
            │                            │
            ▼                            ▼
  ┌──────────────────┐              ╱ IS  ╲
  │ RESET SPD FLAG   │      NO    ╱ LINE IN ╲
  │     IN CRT       │◄──────────◄   QUEUE   ►
  │  INSERT BLANK    │            ╲    ?    ╱
  │                  │              ╲     ╱
  │  UPDATE COMLT    │                │ YES
  │   WITH NEW       │                ▼
  │  FREE TRUNK      │          ┌───────────┐
  └──────────────────┘          │   DECR    │
            │                   │           │
            ▼                   │ ACT COUNT │
     ╱──────────╲               └───────────┘
    ╱            ╲                    │
   ( CALL QUERB  )                    ▼
    ╲            ╱              ╱──────────╲
     ╲──────────╱             ╱            ╲
            │                ( CALL QUERB  )
            │                 ╲            ╱
            ▼                  ╲──────────╱
          ( SIG )                   │
```

FIG. 27d

FIG. 27e

FIG. 27f

FIG. 27g

$t_1 \div t_8$  $t_A \div t_H$

TIMING & CONTROL LOGIC  79

WTR 1

TO CPU

CS & ·WE

$CA_1 - CA_5$
TX DELAY
COUNTER MODE
CPU
ADDRESS BUS

TX

5  6

MUX
LS365

77

ADDRESS  6

75

TX CONTROL MEMORY

24 BYTES EACH
(6810)

8

TX CONTROL MEM
DATA BUS

FIG. 28a

|  | t A | t B | tC | tD – tH |
|---|---|---|---|---|
| TX MODE | READ | TX MODEM ACCESS | WRITE |  |
| CPU MODE |  |  |  | READ/WRITE |

CONTROL FROM
TX MODEM

$t_A - t_B$

81

LATCH
(LS74)

6

6

6

CMT₀– CMT₅ ⎱ TX
B ⎰ BUFFER
M ⎱ ADD.
MUX

87

M
(LS74)

85

B
LS74

MSB

6 LSB

$t_C$

TRISTATE BUFF.
LS244

83

8

FROM
75

8

CONTROL MEMORY DATA BUS

TX LOGIC

89

BIDIRECTIONAL
TRISTATE
BUFFER

LS244

8

CPU DATA BUS

8   8

$t_D - t_H$

FIG. 28b

FIG. 29a

t1÷t8    tA÷tH

CB1-CB5 RM MODE
CAR1-CAR5 RX DELAY COUNTER MODE
CPU ADDRESS BUS

95

RX

5  5  6

TIMING &
CONTROL LOGIC

MUX

LS 365

93

WTR 3

TO CPU

ADDRESS  6

CS & WE

91

RX
CONTROL MEMORY
24 BYTES
(6810)

8

CONTROL MEM.
DATA BUS

NOTE
* tD TIME SLOT IS USED IN RX
MODE ONLY IF NEEDED BY RM
OR 25Msec TIMER LOGIC ELSE
IT CAN BE USED BY CPU.

|  | tA | tB | tC | tD | tE ÷ tH |
|---|---|---|---|---|---|
|  |  |  |  |  |  |
| RX MODE |  | READ | 25Msec TIMER ACCES | WRITE* |  |
| CPU MODE | READ/WRITE |  |  |  | READ/WRITE |

0 025 465

FIG. 29b

FIG. 30b

$C_0 - C_3$

$\overline{B}\ C3\ C2\ C1\ C0$

BLANK

$A_4\ A_3\ A_2\ A_1\ A_0$

16 SAMPLES
MEMORY
OF
TX MSG
BIT
(32 x 8)
PROM

(63LS081)

8

TX MODEM OUTPUT
EACH BIT IN MSG IS
OUTPUTTED BY
8 PCM SAMPLES

FIG. 30c

0

$P_n = 0$ SAMPLES

7
8

$P_n = 1$ SAMPLES

ROM 15
CONTENT 16

BLANK CODE

31

# FIG. 30a

$$\overline{RM} = \overline{DEC24 \cdot M \cdot \overline{B} \cdot P3}$$

$$\overline{RB} = \overline{(RBC_1 \cdot t2 + DEC31 \cdot \overline{M})P3}$$

$$DE24 = b3.b4$$

$$DEC31 = b0 \cdot b1 \cdot b2 \cdot b3 \cdot b4$$

RX DELAY MEMORY

| 1 2 3 4 --- 237 238 239 240 | 610 |
| 239 240 1 2 --- 235 236 237 238 |
| 237 238 239 240 233 234 235 236 |
| 235 236 237 238 --- 231 232 233 234 |

DELAY MEMORY

| 7 8 9 10 --- 3 4 5 6 |
| 5 6 7 8 | 1 2 3 4 |
| 3 4 5 6 --- 239 240 | 1 2 |

5 + 8

612

SPEED UP COUNTER (LS161)

CHANNEL INCR

SAMPLES INCR

8

616

EXPANDER 8/12

12

618

1 BIT DELAY

8

8 MSB

620

MULTIPLIER

xn

622

624

ADDER

4yn+1

÷4

yn+1

626

ACCUMULATOR

yn

4yn-yn

630

ADDER

X4

628

FIG. 31a

0 025 465

77

FIG. 31b

FIG. 32a

- 698 — TX SIGNALLING INPUT INTERFACE — 1, 48
- FROM TX MAIN TIMING
- SCT₀ - SCT₅
- SIGT
- 700 — MUX (7X93L12)
- CAT₂
- 708 — DELAY 3072 BITS 64mSec (3XN5050)
- 706 — ADDRESS LATCH E (3XLS259) — 1, 24
- TIMING CONTROL
- SCMT₀-SCMT₄
- 726 — TX SIGNALLING OUTPUT INTERFACE
- FROM TX MAIN TIMING

0 025 465

FIG. 32b

**704** TX SIGNALLING CONTROL MEM (48 WORDS) (6810)

**724** BIDIRECTIONAL TRISTATE BUFFER (2 X LS365)

SCMT$_0$ - SCMT$_4$

TO CPU DATA BUS

SIG. DET.

MEMR

**714** TIMING & CONTROL (LSTTL GATES)

MAIN TX TIMING

CSM6

**722** MUX (2 X LS157)

SDT$_{n-1}$

FROM CPU ADD.BUS

**702** 1÷48 TX SIG COUNTER (2 X LS163)

CAT2

SCT$_0$ - SCT$_5$

WTR 2

0 025 465

FIG. 32c

FIG. 33a

FIG. 33b

FIG. 34

FIG. 35

2W/6W SUBSCRIBER SIDE

FIG.36

FIG.37